(19) Europäisches Patentamt
European Patent Office
Office européen des brevets

(11) EP 4 328 636 A1

(12) # EUROPEAN PATENT APPLICATION
published in accordance with Art. 153(4) EPC

(43) Date of publication:
**28.02.2024 Bulletin 2024/09**

(21) Application number: **22791546.9**

(22) Date of filing: **30.03.2022**

(51) International Patent Classification (IPC):
***G02B 5/23*** (2006.01) ***C09K 9/02*** (2006.01)
***G02B 5/22*** (2006.01) ***G02B 5/30*** (2006.01)
***G02C 7/10*** (2006.01) ***G02C 7/12*** (2006.01)

(52) Cooperative Patent Classification (CPC):
**C09K 9/02; G02B 5/22; G02B 5/23; G02B 5/30; G02C 7/10; G02C 7/12**

(86) International application number:
**PCT/JP2022/016016**

(87) International publication number:
**WO 2022/224771 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.04.2021 JP 2021071841**
**14.09.2021 JP 2021149047**

(71) Applicant: **Tokuyama Corporation**
**Shunan-shi, Yamaguchi 745-8648 (JP)**

(72) Inventors:
- **HATTORI, Yuki**
  **Shunan-shi, Yamaguchi 745-8648 (JP)**
- **MORI, Katsuhiro**
  **Shunan-shi, Yamaguchi 745-8648 (JP)**
- **MOMODA, Junji**
  **Shunan-shi, Yamaguchi 745-8648 (JP)**

(74) Representative: **Hoffmann Eitle**
**Patent- und Rechtsanwälte PartmbB**
**Arabellastraße 30**
**81925 München (DE)**

(54) **OPTICAL ARTICLE, SPECTACLE LENS AND SPECTACLES**

(57) The optical article of the invention contains a photochromic compound, and a first compound having an absorption peak in a wavelength range of 550 to 600 nm, has a laminate structure in which (A) a first functional layer containing at least a photochromic compound and (B) a lens substrate independently exist, has a luminous transmittance of 30% or more in the state with no photochromic compound coloration, has a luminous transmittance of 25% or less in the state with photochromic compound coloration, and has a minimum transmittance of 0.1 to 20% in a wavelength range of 550 to 600 nm, in a state with photochromic compound coloration. According to the invention, there is provided a novel photochromic optical article exhibiting excellent photochromic properties, visibility and anti-glare properties, and further having a high contrast (red, green and blue can be clearly differentiated and the outline and protrusions/recesses of objects are clear).

Fig. 1

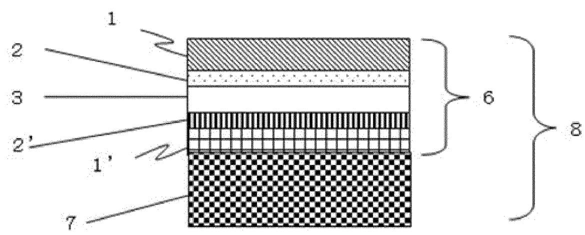


EP 4 328 636 A1

## Description

Technical Field

The present invention relates to a novel optical article having a laminate structure, a spectacle lens formed of the optical article, and spectacles with the spectacle lens. Precisely, the present invention relates to a novel optical article independently having a layer having photochromic properties and a lens substrate, excellent in photochromic properties, visibility and anti-glare properties and having high contrast (red, green and blue can be clearly distinguished, and the outline and protrusions/recesses of objects are clear), a spectacle lens formed of the optical article, and spectacles with the spectacle lens.

Background Art

A photochromic compound typified by a chromene compound, a fulgide compound and a spirooxazine compound has such characteristics (photochromic performance) that it rapidly changes its color when irradiated with light including UV rays such as sunlight or light from a mercury lamp, and when photoirradiation is stopped and the compound is kept in a dark place, it restores to the original color, and taking advantage of the characteristics, the compound is used in various applications especially for optical materials.

For example, a photochromic spectacle lens that uses a photochromic compound and is given a photochromic performance rapidly colors in an outdoor area where it is irradiated with light including UV rays such as sunlight, and functions as sunglasses, but in an indoor area with no such photoirradiation, it discolors and functions as transparent ordinary spectacles. A demand for such a photochromic spectacle lens is increasing these days (see PTLs 1 to 3).

In addition to this, for more increasing anti-glare properties, there has been developed an optical article having both photochromic properties and polarization properties (see PTL 4).

Citation List

Patent Literature

PTL 1: US 7166357

PTL 2: JP 4672768

PTL 3: JP 5914674

PTL 4: JP 2019-164271A

PTL 5: JP 2018-097173A

PTL 6: WO 2018/062385A1

Summary of Invention

Technical Problem

As described above, there have been developed optical articles having photochromic properties and increased anti-glare properties. Recently the following optical articles have been developed, as lenses having further more increased anti-glare properties and having high contrast.

Specifically, there have been developed optical articles having both photochromic properties and polarization properties and containing a dye that has a main absorption peak in a wavelength range of 565 nm to 605 nm (see PTLs 5 and 6).

The optical article described in PTL 5 is excellent especially in anti-glare properties while having prior-art properties. The optical article is excellent in anti-glare properties even in use thereof indoors like in automobiles.

However, the optical article according to the method described in PTL 5 has a relatively high optical absorbance at a wavelength of 420 nm since it exhibits high anti-glare properties. Consequently, there is room for improvement in the point that the optical article seems to yellow in the condition where the photochromic compound therein is not colored

(in use in unirradiated condition, indoors). Yellowing may be disfavored because plastic lenses appear to be degraded. On the other hand, in Comparative Example in PTL 5, there is exemplified an optical article that is transparent in an unirradiated state, but in that example, there is room for improvement in the point that further improvement of anti-glare properties and contrast is necessary.

PTL 6 discloses an optical article containing a photochromic compound and a tetraazaporphyrin compound and having a specific transmittance curve. This optical article has high contrast. PTL 6 discloses a method for producing an optical article formed of a polymerizable composition itself, which includes injecting a polymerizable composition containing a photochromic compound and a tetraazaporphyrin compound, between molding molds.

However, according to the method described in PTL 6, only an optical article having a relatively large thickness can be produced. In Examples therein, an optical article having a thickness of 2 mm is produced. In the case where such an optical article is used, for example, as a spectacle lens, there may inevitably occur a thickness difference between the central part and the edge part. An optical article containing a photochromic compound is colored in photoirradiation, as functioning as sunglasses. At that time, when there is a thickness difference between the central part and the edge part, there may inevitably occur color unevenness. Namely, the invention described in PTL 6 still has room for improvement since it contains a photochromic compound.

Accordingly, an object of the present invention is to provide an optical article excellent in anti-glare properties, having high contrast and excellent in visibility at the time when it is not irradiated with sunlight, and troubled little by color unevenness even in the state where the photochromic compound therein is colored.

Solution to Problem

The present inventors have made assiduous studies for solving the above-mentioned problems. With that, the inventors have found that, for increasing contrast and improving the initial luminous transmittance and visibility (luminous transmittance in the state with no photoirradiation) while maintaining high anti-glare properties, it is effective to use a specific photochromic compound and a compound having an absorption peak in a wavelength range of 550 to 600 nm and to make the optical article have a laminate structure, and have completed the present invention.

Specifically, a first aspect of the present invention is:

an optical article containing a photochromic compound, and a first compound having an absorption peak in a wavelength range of 550 to 600 nm,
having a laminate structure in which (A) a first functional layer containing at least a photochromic compound and (B) a lens substrate independently exist,
having a luminous transmittance of 30% or more in the state with no photochromic compound coloration,
having a luminous transmittance of 25% or less in the state with photochromic compound coloration,
having a minimum transmittance of 0.1 to 20% in a wavelength range of 550 to 600 nm, in a state with photochromic compound coloration.

A second aspect of the present invention is a spectacle lens formed of the optical article of the first aspect of the invention.

A third aspect of the present invention is spectacles with the spectacle lens of the second aspect of the invention.

Advantageous Effects of Invention

According to the present invention, there can be obtained an optical article having high luminous transmittance and visibility in the state with no photoirradiation, that is, in the state where the photochromic compound therein is not colored, and having sufficient anti-glare properties in the state with photoirradiation (in use under sunlight) and having high contrast. In addition, even in use as a spectacle lens, color unevenness in photoirradiation can be reduced.

By providing (D) a polarization functional layer, the anti-glare properties can be improved. In the case of providing (laminating) (D) a polarization functional layer, the first functional layer (A) needs to be provided on the side to be irradiated with sunlight than the polarization functional layer (D).

Brief Description of Drawings

Fig. 1 is an outline view showing one example of a laminate structure of a photochromic optical article of the present invention.
Fig. 2 is an outline view showing another example of a laminate structure of a photochromic optical article of the

present invention.

Description of Embodiments

<Optical Article>

The optical article of the present invention is:

an optical article containing a photochromic compound, and a first compound having an absorption peak in a wavelength range of 550 to 600 nm,
having a laminate structure in which (A) a first functional layer containing at least a photochromic compound and (B) a lens substrate independently exist,
having a luminous transmittance of 30% or more in the state with no photochromic compound coloration,
having a luminous transmittance of 25% or less in the state with photochromic compound coloration,
having a minimum transmittance of 0.1 to 20% in a wavelength range of 550 to 600 nm, in a state with photochromic compound coloration.

First described are the individual characteristics of the optical article.

Unless otherwise specifically indicated in the present specification, the expression "x to y" using numerical values x and y means "x or more and y or less". In the case where a unit is given to the numerical value y alone in the expression, the unit shall apply also to the numerical value x.

In the present specification, the first functional layer means a layer containing a photochromic compound. The second functional layer means a layer containing a first compound. A single layer may contain both a photochromic compound and a first compound. In such a case, the single layer can be a first functional layer and also a second functional layer (regarding this, the present specification may describe that a first functional layer can serve also as a second functional layer).

The optical article of the present invention may be expressed as a photochromic optical article.

<(1) Luminous Transmittance of Optical Article>

<Luminous Transmittance under no photoirradiation/Initial Luminous Transmittance>

Of the optical article of the present invention, the luminous transmittance in the state where the photochromic compound therein is not colored (under no photoirradiation) (hereinafter this may be simply referred to as "initial luminous transmittance") needs to be 30% or more. In the case where the initial luminous transmittance is less than 30%, transparency lowers and contrast under no photoirradiation (visibility indoors) lowers, and such is unfavorable. For the purpose of improving transparency under no photoirradiation to increase contrast (visibility), the initial luminous transmittance is preferably 50% or more and more preferably 60% or more, in the case where the polarization functional layer (D) to be described in detail hereinunder does not exist. The higher the initial luminous transmittance, the better the effect, but considering industrial production of the optical article, the upper limit of the initial luminous transmittance is 90%. Namely, in the case where the polarization functional layer does not exist, the initial luminous transmittance of the optical article is preferably 30 to 90%, more preferably 50 to 80%, even more preferably 60 to 80%.

For further improving anti-glare properties in the case where the polarization functional layer (D) is provided, the initial luminous transmittance is preferably 30% or more, more preferably 35% or more. Even in the case where the polarization functional layer (D) is provided, the upper limit of the initial luminous transmittance is 90%. However, in consideration of industrial production where the polarization functional layer (D) is provided, the initial luminous transmittance is preferably 30 to 70%, more preferably 35 to 60%, even more preferably 35 to 50%.

The initial luminous transmittance can be controlled by the materials constituting the optical article, for example, the first functional layer containing at least a photochromic compound (A) and the lens substrate (B) to be described in detail hereinunder, and the thickness and the material of the second functional layer (C) that may be provided optionally, as well as the compounds to be incorporated in these layers. Also as described above, in the case where the polarization functional layer (D) is provided, the initial luminous transmittance can be controlled by the transmittance and the polarization degree of the polarization functional layer.

<Luminous Transmittance under photoirradiation>

Of the optical article of the present invention, the luminous transmittance in the state where the photochromic compound therein is colored (in photoirradiation state, hereinunder this may be referred to as "under photoirradiation")

needs to be 25% or less. In the case where the luminous transmittance under photoirradiation is more than 25%, the function as sunglasses is not sufficient and anti-glare properties are not good, and such is unfavorable. For making anti-glare properties excellent and for sufficiently effectively exhibiting the function as sunglasses, the luminous transmittance under photoirradiation is preferably 20% or less. The lower limit of the luminous transmittance under photoirradiation is, in consideration of transmittance under photoirradiation (good visibility), preferably 8% or more, more preferably 10% or more. Namely, the luminous transmittance under photoirradiation of the optical article of the present invention is preferably 8 to 25%, more preferably 10 to 20%.

In the case where the polarization functional layer (D) is provided for the purpose of further improving anti-glare properties, in order to sufficiently exhibit the effect as the function of sunglasses to thereby secure transmittance under photoirradiation (good visibility), the luminous transmittance under photoirradiation is preferably 8 to 25%, more preferably 10 to 20%.

The luminous transmittance under photoirradiation can be controlled by the materials constituting the optical article, for example, the first functional layer containing at least a photochromic compound (A) and the lens substrate (B) to be described in detail hereinunder, and the thickness and the material of the second functional layer (C) that may be provided optionally, as well as the compounds to be incorporated in these layers. In the case where the polarization functional layer (D) is provided, the initial luminous transmittance can be controlled by the transmittance and the polarization degree of the polarization functional layer.

<(2) Minimum Transmittance at wavelength of 550 to 600 nm under photoirradiation>

Of the optical article of the present invention, the minimum transmittance at a wavelength of 550 to 600 nm in the state where the photochromic compound therein is colored (in photoirradiation state, hereinunder this may be referred to as "under photoirradiation") needs to be 0.1 to 20%. In other words, under photoirradiation, the transmittance at the maximum absorption wavelength in a wavelength range of 550 to 600 nm needs to be 0.1 to 20%. When the minimum transmittance at a wavelength of 550 to 600 nm under photoirradiation is 20% or less, contrast can be high. Consequently, irrespective of under photoirradiation or under no photoirradiation, contrast can be high. The optical article can attain high contrast while exhibiting photochromic properties under photoirradiation. For exhibiting a more excellent effect, the minimum transmittance at a wavelength of 550 to 600 hm under photoirradiation is preferably 15% or less. In consideration of industrial production of the optical article, the lower limit of the minimum transmittance at a wavelength of 550 to 600 nm under photoirradiation is 0.1%. In consideration of industrial production and higher contrast of the optical article, the minimum transmittance of under photoirradiation is preferably 1 to 15%.

Of the optical article of the present invention, the luminous transmittance under no photoirradiation is set high, and therefore the contrast thereof under no photoirradiation can be high. The minimum transmittance at a wavelength of 550 to 600 nm under no photoirradiation is preferably 10 to 70%. When it is 10% or more, initial coloration (coloration under no photoirradiation) is little, and when 70% or more, visibility improvement can be attained. For improving visibility while reducing initial coloration, the minimum transmittance at a wavelength of 550 to 600 nm under no photoirradiation is preferably 20 to 65%, most preferably 30 to 60%.

In the case where the polarization functional layer (D) is provided for further improving anti-glare properties, for contrast increase, the minimum transmittance at a wavelength of 550 to 600 nm under photoirradiation is preferably 0.1 to 20%, more preferably 1 to 15%.

On the other hand, in the case where the polarization functional layer (D) is provided, the minimum transmittance at a wavelength of 550 to 600 nm under no photoirradiation is, for exhibiting the excellent effect, preferably 10 to 50%, more preferably 10 to 40%.

The minimum transmittance at a wavelength of 550 to 600 nm under photoirradiation or under no photoirradiation can be controlled by the materials constituting the optical article, that is, the first functional layer containing at least a photochromic compound (A) and the lens substrate (B) to be described in detail hereinunder, and the thickness and the material of the second functional layer (C) that may be provided optionally, as well as the compounds to be incorporated in these layers. In the case where the polarization functional layer (D) is provided, the initial luminous transmittance can be controlled by the transmittance and the polarization degree of the polarization functional layer. Above all, it is preferable that the kind and the amount to be incorporated of the first compound having an absorption peak at a wavelength of 550 to 600 nm to be described in detail hereinunder, and the thickness of the second functional layer (C) containing the first compound are controlled mainly.

<(3) Other Characteristics>

The optical article of the present invention is not specifically limited so far as it satisfies the above-mentioned characteristics (1) to (2). Above all, for exhibiting more excellent characteristics, the optical article preferably satisfies the following characteristics.

(3)-1 Difference between transmittance at wavelength 550 nm and minimum transmittance at wavelength 550 to 600 nm under photoirradiation

Preferably, the transmittance at a wavelength of 550 nm under photoirradiation is 20% or less. With that, under photoirradiation, it is preferable that the transmittance at a wavelength of 550 nm is higher than the minimum transmittance at a wavelength of 550 to 600 nm. The smallest value of the transmittance at a wavelength of 550 nm under photoirradiation is, though not specifically limited, preferably 1%.

The optical article of the present invention contains the first compound having an absorption peak in a wavelength range of 550 to 600 nm, and therefore the optical article also has an absorption peak within a wavelength range of 550 to 600 nm. The absorption peak of the optical article can exist at a wavelength of 550 nm, but preferably exists at a wavelength more than 550 nm and 600 nm or less, more preferably at a wavelength of 575 to 600 nm, even more preferably at a wavelength of 580 to 595 nm. With that, under photoirradiation of the optical article of the present invention, the difference between the transmittance at a wavelength of 550 nm and the minimum transmittance at a wavelength of more than 550 nm and 600 nm or less is preferably 0.1% or more and 19% or less (hereinunder the difference can be referred to simply as "transmittance difference"). When the transmittance difference under photoirradiation is 0.1% or more, the optical article can have high contrast. On the other hand, when the transmittance difference is 20% or less, the transparency of the optical article is high and can suppress coloration in blue and violet, under no photoirradiation. In consideration of higher contrast and coloration resistance under no photoirradiation, the transmittance difference under photoirradiation is preferably 1% or more and 19% or less, more preferably 3% or more and 15% or less, even more preferably 4% or more and 10% or less.

On the other hand, the transmittance difference under no photoirradiation is, when coloration resistance is taken into consideration, preferably 5 to 60%, more preferably 15 to 45%.

In the case where a polarization functional layer is provided for further enhancing anti-glare properties, preferably, the polarization functional layer is provided in the optical article that satisfies the transmittance difference under photoirradiation to fall within the above-mentioned range. With that, in order that the optical article with a polarization functional layer is made to secure high contrast and high visibility, the transmittance difference under photoirradiation is preferably 1 to 19%, more preferably 2 to 10%.

On the other hand, in order that the optical article with a polarization functional layer is made to have high visibility, the transmittance difference under no photoirradiation is preferably 5 to 50%, more preferably 8 to 30%.

(3)-2 Absorbance at wavelength 420 nm under no photoirradiation

<Optical Article colored little and having high transparency under no photoirradiation>

In the case where the polarization functional layer (D) is not provided in the optical article of the present invention, the absorbance at a wavelength of 420 nm under no photoirradiation of the optical article is preferably 0.25 or less. In PTL 5, the optical article of Examples has an absorbance of 0.29 or more, and is sometimes yellowed under no photoirradiation. In the case where the polarization functional layer (D) is not provided, the absorbance at a wavelength of 420 nm under no photoirradiation is preferably 0.25 or less. In other words, the optical article of the present invention is so designed as not to have a high absorbance at a wavelength of 420 nm under no photoirradiation, and can therefore has high transparency under no photoirradiation. With that, the absorption in a visible range is low, and therefore the optical article can be colored little. In addition, the optical article necessarily contains the first compound, and is therefore considered to be excellent in anti-glare properties.

For exhibiting a more excellent effect, the absorbance at a wavelength of 420 nm is more preferably 0.24 or less, even more preferably 0.22 or less. Regarding the lower limit of the absorbance at a wavelength of 420 nm, when it is lower, the transparency can be higher. However, in consideration of industrial production of the optical article, the lower limit is 0.05. The absorbance can be determined by direct measurement of the optical article.

In the case where the absorbance at a wavelength of 420 nm under no photoirradiation is more than 0.25, yellowing of the optical article can be suppressed by adding a blue dye thereto. However, when such a dye is added, the initial luminous transmittance may lower and the visibility may lower, as the case may be. Consequently, as mentioned above, the absorbance at a wavelength of 420 nm under no photoirradiation is preferably 0.25 or less.

In the present invention, the luminous transmittance, the minimum transmittance at a wavelength of 550 to 600 nm, and the absorbance at different wavelengths can be measured with a UV/VIS spectrophotometer at a measurement temperature of 23°C. Details thereof are as described in the section of Examples.

In the case where the optical article is made to be colored little and is made to have high transparency at the time of no coloration, the optical coloration can be made to have a gradation region to be mentioned in detail hereinunder for the purpose of enhancing the design performance thereof.

<Optical Article with polarization functional layer colored little under no photoirradiation>

In the case where the polarization functional layer (D) is provided, the absorbance at a wavelength of 420 nm under no photoirradiation is preferably 0.60 or less, more preferably 0.55 or less. The lower limit of the absorbance at a wavelength of 420 nm in the case where the polarization functional layer (D) is provided is 0.10. The value can be determined by direct measurement of the optical articles having the polarization functional layer (D).

By providing the polarization functional layer (D), the absorbance at a wavelength of 420 nm under no photoirradiation can be high, but yellowing is not seen (is not visible). Namely, for enhancing anti-glare properties, the polarization functional layer (D) is provided, and by providing the polarization functional layer (D), yellowing is not seen, and appearance betters. With that, preferably, the polarization functional layer (D) is further provided in the optical article in the state with little yellowing. For this, in the present invention, preferably the polarization functional layer (D) is provided in the optical article whose absorbance at a wavelength of 420 nm under no photoirradiation is preferably 0.25 or less, more preferably 0.24 or less, even more preferably 0.22 or less under the condition not containing the polarization functional layer (D) (provided that the lower limit of the absorbance at a wavelength of 420 nm under no photoirradiation is preferably 0.05). With that, in the state where the polarization functional layer (D) is provided, the absorbance at a wavelength of 420 nm under no photoirradiation is preferably 0.60 or less, more preferably 0.55 or less (provided that in the case, the lower limit of the absorbance at a wavelength of 420 nm under no photoirradiation is preferably 0.10).

The optical article with a polarization functional layer colored little can be made to have a gradation region to be mentioned in detail hereinunder for the purpose of enhancing the design performance thereof.

<Optical Article with polarization functional layer that is colored under no photoirradiation>

On the other hand, as described above, in the case where the polarization functional layer (D) is provided, coloration can be made nonvisible. Consequently, a dye can be used, or a photochromic compound whose absorbance at a wavelength of 420 nm under no photoirradiation is 0.10 or more (a photochromic compound (b) mentioned below) can be used. The optical article of such an embodiment can be an optical article that colors in brown under no photoirradiation, and colors in gray under photoirradiation.

In that case, it is preferable that the polarization functional layer (D) is provided in the optical article whose absorbance at a wavelength of 420 nm in the state not containing the polarization functional layer (D) and under no photoirradiation is preferably 0.28 to 0.60, more preferably 0.32 to 0.58, even more preferably 0.36 to 0.56. With that, in the state where the polarization functional layer (D) is provided, the absorbance at a wavelength of 420 nm under no photoirradiation is preferably 0.55 to 1.00, more preferably 0.60 to 0.95.

Also in such an optical article, a gradation region to be mentioned in detail hereinunder can be provided for enhancing the design performance.

In the present invention, preferably, the absorbance at a wavelength of 420 nm of the optical article under no photoirradiation is controlled by the kind and the amount of the photochromic compound to be therein and by the thickness of the first functional layer. Especially for providing an optical article colored little under no photoirradiation, the following photochromic compound is preferably used. Specifically, it is preferable that the absorbance is controlled by incorporating a relatively large amount of a photochromic compound whose absorbance at a wavelength of 420 nm (in toluene, at 23°C, absorbance at 1.0 mmol/l) is less than 0.10, which is described in detail hereinunder (the photochromic compound (a) mentioned below).

On the other hand, for providing an optical article which is colored under no photoirradiation, it is preferable that the absorbance is controlled by incorporating a relatively large amount of a photochromic compound whose absorbance at a wavelength of 420 nm (in toluene, at 23°C, absorbance at 1.0 mmol/l) is 0.10 or more, which is described in detail hereinunder (the photochromic compound (b) mentioned below).

For controlling the absorbance at a wavelength of 420 nm under no photoirradiation in the case where the polarization functional layer (D) is provided, an optical article in the state not having the polarization functional layer (D) is previously supposed, and the kind and the amount of the photochromic compound to be incorporated and the thickness of the first functional layer may be determined. From the optical article having a polarization function, the parameters can be confirmed by the following method. For example, the optical article is analyzed to determine the materials constituting it. The photochromic compound is extracted out, and the absorbance in coloration thereof is confirmed. With that, from the materials and the absorbance of the photochromic compound, the absorbance of the optical article not having the polarization functional layer (D) can be estimated. Naturally, the absorbance can also be controlled by the properties (e.g., polarization degree) and the thickness of the polarization functional layer (D).

<Regarding Contrast>

The optical article of the present invention can have high contrast. Namely, even in the case where the photochromic compound therein colors outdoors, when the ambient scene is confirmed through the optical article, color, and the outline and protrusions/recesses of objects can be clearly visually confirmed. Consequently, the optical article of the present invention preferably satisfies the following requirements.

Specifically:
the optical article is preferably as follows:

when a blue film with L* of 69, a* of -42, and b* of -34 and a yellow film with L* of 81, a* of 0, and b* of 85 relating to the hue in the CIE1976 (L*, a*, b*) color space are photographed with a hyperspectral camera through the optical article in which the photochromic compound is colored,
and when the average reflectance at a wavelength of 420 to 519 nm in photographing the blue film is referred to as R1, and the average reflectance at a wavelength of 580 to 595 nm in photographing the yellow film is referred to as R2, the ratio of R1 to R2 (R1/R2) is 0.9 or more and 2.0 or less.

The photographing condition with the hyperspectral camera and the method of determining the average reflectance are as described in the section of Examples given below.

The hyperspectral camera is a camera capable of spectroscopically photographing an object with scanning light for each wavelength. R1 is an average reflectance at a wavelength of 420 to 519 nm (accurately, a wavelength of 420.39 to 519.15 nm) in photographing the blue film, and this is a value that indicates how blue can be confirmed (in other words, a value indicating an average transmittance in a blue region). Also, R2 is an average reflectance at a wavelength of 580 to 595 nm (accurately, a wavelength of 580.03 to 594.63 nm) in photographing the yellow film, and this is a value that indicates how yellow can be confirmed (in other words, a value indicating an average transmittance in a yellow region). The ratio of the two (R1/R2) is an index that indicates how clearly blue can be confirmed, based on the easy visibility of yellow. Namely, it is considered that when R1/R2 is higher, contrast can be higher.

For the blue film and the yellow film having the above-mentioned hue, those having values of L*, a*, and b* as mentioned above are prepared. For the blue film and the yellow film, commercially-available ones can be used. For example, Neocellophane 8-color 8-sheet set 63983 by Artec Co., Ltd. can be used.

In the present invention, in order that the optical article can have a higher contrast, R1/R2 is more preferably 1.0 or more and 1.9 or less.

The optical article of the present invention has the above-mentioned characteristics, and for exhibiting the characteristics, the optical article needs to contain a photochromic compound and a first compound having an absorption peak within a wavelength range of 550 to 600 nm. Next, the photochromic compound and the first compound are described.

<Photochromic Compound>

The photochromic compound for use in the present invention is not specifically limited so far as it is used in such a manner that the optical article can satisfy the above-mentioned characteristics (1) and (2) (and optionally the characteristics (3)). Preferably, the photochromic compound is selectively used depending on the intended use of the resultant optical article. Specifically, in the case where the optical article can be highly transparent with little coloration under no photoirradiation, preferably used is a photochromic compound having an absorbance at a wavelength of 420 nm of less than 0.10 (hereinunder the photochromic compound can be simply referred to as "photochromic compound (a)"). On the other hand, in the case where the optical article has the polarization functional layer (D) to be mentioned in detail hereinunder, also usable is a photochromic compound capable of coloring even in a visible light region and having an absorbance at a wavelength of 420 nm of 0.10 or more (hereinunder the photochromic compound can be simply referred to as "photochromic compound (b)"). In that case, the photochromic compound is in a colored state under no photoirradiation, but even indoors, anti-glare properties can be improved further more. Next, these photochromic compounds are described.

Photochromic Compound (a)

Photochromic compound (a) having an absorbance at a wavelength of 420 nm of less than 0.10 is preferably used. Using the photochromic compound (a), the optical article can have a lowered absorbance at a wavelength of 420 nm under no photoirradiation. In particular, an optical article satisfying the requirement (3)-2 can be readily produced. As a result, the optical article can have good transparency, especially good transparency under no photoirradiation, and good appearance (in the uncolored state). Namely, for providing the optical article that is not colored and has high transparency under no photoirradiation, preferably used is a photochromic compound having an absorbance at a wavelength of 420 nm of less than 0.10. The absorbance of the photochromic compound is a value measured by preparing a solution of the photochromic compound in toluene at 23°C to have a concentration of 1 mmol/l (1 millimole/liter) and using a quartz cell having an optical path length of 10 mm.

A more preferred photochromic compound has an absorbance at a wavelength of 420 nm of less than 0.10 and has absorbance at a wavelength of 430 nm of less than 0.015. For color control, plural kinds of photochromic compounds can be used. In such a case, in order that the optical article is uncolored and has high transparency under no photoirradiation, preferably used are photochromic compounds satisfying the following requirements. Namely, it is preferable that all photochromic compounds have an absorbance at a wavelength of 420 nm or less than 0.10 and have an absorbance at a wavelength of 430 nm of less than 0.015. Preferably, the lower limit of the absorbance at a wavelength of 420 nm of the above-mentioned photochromic compound (a) is 0.001, and the lower limit of the absorbance at a wavelength of 430 nm thereof is preferably 0.000.

Typical examples of such photochromic compounds include fulgide compounds, chromene compounds and spirooxazine compounds. These are disclosed in many documents, for example, JP 2-28154A, JP 62-288830A, WO94/22850A1, and WO96/14596A1.

In the present invention, among known photochromic compounds, chromene compounds having an indeno[2,1-f]naphtho[1,2-b]pyran skeleton are more preferably used, from the viewpoint of photochromic performance such as color density, initial colorability, durability and fading rate. In particular, chromene compounds having a molecular weight of 540 or more are favorably used as especially excellent in color density and fading rate. Among them, a chromene compound represented by the following formula (1) is preferred.

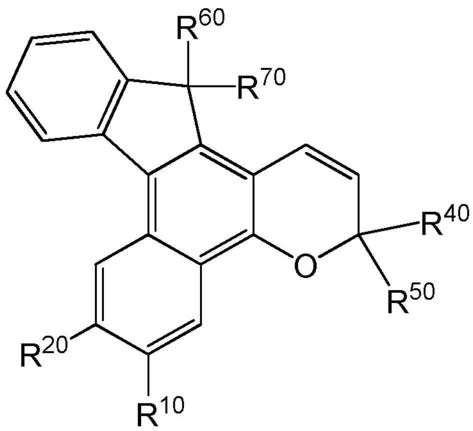

(1)

<$R^{10}$, and $R^{20}$>

In the formula, $R^{10}$, and $R^{20}$ each represent a hydrogen atom, a hydroxy group, a cyano group, a nitro group, an alkyl group, a haloalkyl group, a cycloalkyl group, an alkoxy group, an amino group, a heterocyclic group containing a ring nitrogen atom and bonding to an aromatic hydrocarbon ring or an aromatic hetero ring to which it bonds via the nitrogen atom, a formyl group, a hydroxycarbonyl group, an alkylcarbonyl group, an alkoxycarbonyl group, a halogen atom, an aralkyl group, an aralkoxy group, an aryloxy group, an arylthio group or an aryl group.

The alkyl group is preferably an alkyl group having 1 to 6 carbon atoms. Preferred examples of the alkyl group include a methyl group, an ethyl group, an n-propyl group, an isopropyl group, an n-butyl group, a sec-butyl group, a tert-butyl group, a pentyl group, and a hexyl group.

The haloalkyl group is preferably an alkyl group having 1 to 6 carbon atoms and substituted with a fluorine atom, a chlorine atom or a bromine atom. Preferred examples of the haloalkyl group include a trifluoromethyl group, a tetrafluoroethyl group, a chloromethyl group, a 2-chloroethyl group, and a bromomethyl group.

The cycloalkyl group is preferably a cycloalkyl group having 3 to 8 carbon atoms. Preferred examples of the cycloalkyl group include a cyclopropyl group, a cyclobutyl group, a cyclopentyl group, and a cyclohexyl group.

The alkoxy group is preferably an alkoxy group having 1 to 6 carbon atoms. Preferred examples of the alkoxy group include a methoxy group, an ethoxy group, an n-propoxy group, an isopropoxy group, an n-butoxy group, a sec-butoxy group, and a tert-butoxy group.

The amino group is not limited to an amino group ($-NH_2$), but one or two hydrogen atoms therein can be substituted. Examples of the substituent that the amino group can have include an alkyl group having 1 to 6 carbon atoms, a haloalkyl group having 1 to 6 carbon atoms, an alkoxy group having 1 to 6 carbon atoms, a cycloalkyl group having 3 to 7 carbon atoms, an aryl group having 6 to 14 carbon atoms, and a heteroaryl group having 4 to 14 carbo atoms. Preferred examples of the amino group include an amino group, a methylamino group, a dimethylamino group, an ethylamino group, a diethylamino group, a phenylamino group, and a diphenylamino group.

Regarding the heterocyclic group containing a ring nitrogen atom and bonding to an aromatic hydrocarbon ring or an aromatic hetero ring to which it bonds via the nitrogen atom, preferred examples thereof include an aliphatic

heterocyclic group such as a morpholino group, a piperidino group, a pyrrolidinyl group, a pieprazino group, and an n-methylpiperazino group, and an aromatic heterocyclic group such as an indolinyl group. The heterocyclic group can have a substituent. An alkyl group is a preferred substituent. Preferred examples of the heterocyclic group having a substituent include a 2,6-dimethylmorpholino group, a 2,6-dimethylpiperidino group, and a 2,2,6,6-tetramethylpiperidino group.

The alkylcarbonyl group is preferably an alkylcarbonyl group having 2 to 7 carbon atoms. Preferred examples of the alkylcarbonyl group include an acetyl group, and an ethylcarbonyl group.

The alkoxycarbonyl group is preferably an alkoxycarbonyl group having 2 to 7 carbon atoms. Preferred examples of the alkoxycarbonyl group include a methoxycarbonyl group, and an ethoxycarbonyl group.

Examples of the halogen atom include a fluorine atom, a chlorine atom, a bromine atom, and an iodine atom.

The aralkyl group is preferably an aralkyl group having 7 to 11 carbon atoms. Preferred examples of the aralkyl group include a benzyl group, a phenylethyl group, a phenylpropyl group, a phenylbutyl group, and a naphthylmethyl group.

The aralkoxy group is preferably an aralkoxy group having 7 to 11 carbon atoms. Preferred examples of the aralkoxy group include a benzyloxy group, and a naphtylmethoxy group.

The aryloxy group is preferably an aryloxy group having 6 to 12 carbon atoms. Preferred examples of the aryloxy group include a phenyloxy group, and a naphthyloxy group.

The arylthio group is preferably an arylthio group having 6 to 12 carbon atoms. Preferred examples of the arylthio group include a phenylthio group, and a naphthylthio group.

The aryl group is preferably an aryl group having 6 to 14 carbon atoms. Preferred examples of the aryl group include a phenyl group, a 1-naphthyl group, and a 2-naphthyl group.

In these aralkyl group, aralkoxy group, aryloxy group, arylthio group, and aryl group, 1 to 7 hydrogen atoms of the benzene or naphthalene ring, especially 1 to 4 hydrogen atoms can be substituted with any of the above-mentioned hydroxy group, alkyl group, haloalkyl group, cycloalkyl group, alkoxy group, amino group, cyano group, nitro group and halogen atom. A phenylthio group of an arylthio group preferably has a substituent at least one ortho-position, and the substituent is preferably an alkyl group having 1 to 4 carbon atoms, an alkoxy group having 1 to 3 carbon atoms or an aryl group having 6 to 14 carbon atoms.

Above all, in order that the resultant photochromic optical article can readily control the color thereof, and can highly satisfy both transmittance and anti-glare properties, it is preferable that $R^{10}$, and $R^{20}$ each are a hydrogen atom, an alkyl group, an alkoxy group, an amino group, an aryloxy group, an arylthio group or an aryl group.

<$R^{40}$, and $R^{50}$>

$R^{40}$, and $R^{50}$ each are preferably an aryl group, a heteroaryl group, or an alkyl group. Among them, for exhibiting especially excellent photochromic characteristic fading rate, at least one, preferably both of $R^{40}$ and $R^{50}$ are preferably an aryl group or a heteroaryl group. Further, at least one, preferably both of $R^{40}$ and $R^{50}$ are especially preferably any of the following groups (i) to (iii).

(i) An aryl group or a heteroaryl group having an alkyl group or an alkoxy group as a substituent.
(ii) An aryl group or a heteroaryl group having an amino group as a substituent.
(iii) An aryl group or a heteroaryl group having, as a substituent, a heterocyclic group having a nitrogen atom as a ring hetero atom and bonding to the aryl group or the heteroaryl group via the nitrogen atom.

The position and the total number of the substituents with which the aryl group or the heteroaryl group is substituted in the above (i) to (iii) are not specifically limited, but for exhibiting excellent photochromic properties, when the aryl group is a phenyl group, it is preferable that the substitution position is 3-position or 4-position and the number of the substituent is 1. It is especially preferable that the 3-position or the 4-position of the phenyl group is substituted with an alkyl group, an alkoxy group, an amino group, a heterocyclic group containing a ring nitrogen atom and bonding to the benzene ring to which it bonds via the nitrogen atom, or an aryl group.

Examples of the preferred aryl group for $R^{40}$ and $R^{50}$ include a 4-methylphenyl group, a 4-methoxyphenyl group, a 3,4-dimethoxyphenyl group, a 4-n-propoxyphenyl group, a 4-(N,N-dimethylamino)phenyl group, a 4-(N,N-diethylamino)phenyl group, a 4-(N,N-diphenylamino)phenyl group, a 4-morpholinophenyl group, a 4-piperidinophenyl group, a 3-(N,N-dimethylamino)phenyl group, and a 4-(2,6-dimethylpiperidino)phenyl group.

The position and the total number of the substituents with which the heteroaryl group is substituted in the above (i) to (iii) are not specifically limited, but the number is preferably 1. Preferred examples of the heteroaryl group include a 4-methoxythienyl group, a 4-(N,N-dimethylamino)thienyl group, a 4-methylfuryl group, a 4-(N,N-diethylamino)furyl group, a 4-(N,N-diphenylamino)thienyl group, a 4-morpholinopyrrolinyl group, a 6-piperidinobenzothienyl group, and a 6-(N,N-dimethylamino)benzofuranyl group.

When $R^{40}$ and $R^{50}$ are selected from the above-mentioned groups, the chromene compound (photochromic compound) can be a double peak compound having two absorption peaks. The double peak compound can be favorably used because of the reason that color control is easy and color change with time owing to degradation is little. In particular, it can be favorably used in color control by mixing with any other photochromic compound.

<$R^{60}$, and $R^{70}$>

In the formula (1), $R^{60}$ and $R^{70}$ each represent a hydrogen atom, a hydroxy group, an alkyl group, a haloalkyl group, a cycloalkyl group, an alkoxy group, an alkoxyalkyl group, a formyl group, a hydroxycarbonyl group, an alkylcarbonyl group, an alkoxycarbonyl group, a halogen atom, an aralkyl group, an aralkoxy group, an aryloxy group or an aryl group.

Of the above-mentioned groups, the alkyl group, the haloalkyl group, the cycloalkyl group, the alkoxy group, the alkylcarbonyl group, the alkoxycarbonyl group, the halogen atom, the aralkyl group, the aralkoxy group, the aryloxy group and the aryl group include the same ones as those described for $R^{10}$, and $R^{20}$ hereinabove.

The alkoxyalkyl group is preferably an alkoxyalkyl group having 2 to 7 carbon atoms. Preferred examples thereof include a methoxymethyl group, a methoxyethyl group, a methoxy-n-propyl group, a methoxy-n-butyl group, an ethoxyethyl group and an n-propoxypropyl group.

$R^{60}$ and $R^{70}$ can form, along with the 13-positioned carbon atoms to which they bond:

an aliphatic ring having 3 to 20 ring carbon atoms,
a condensed poly-ring of the aliphatic ring condensed with an aromatic ring or an aromatic hetero ring, or a heteroring having 3 to 20 ring atoms, or
a condensed poly-ring of the heteroring condensed with an aromatic ring or an aromatic heteroring.

Examples of the aliphatic ring include a cyclopentane ring, a cyclohexane ring, a cyclooctane ring, a cycloheptane ring, a norbornane ring, a bicyclononane ring, and an adamantane ring.

Examples of the condensed poly-ring of the aliphatic ring condensed with an aromatic ring or an aromatic heteroring include a phenanthrene ring.

Examples of the heteroring include a thiophene ring, a furan ring, and a pyridine ring.

Examples of the condensed poly-ring of the heteroring condensed with an aromatic ring or an aromatic heteroring include a phenylfuran ring, and a biphenylthiophene ring.

In the present invention, preferred substituents for $R^{60}$ and $R^{70}$ include a hydroxy group, an alkyl group, an alkoxy group, and a ring formed by $R^{60}$ and $R^{70}$ along with the 13-positioned carbon atom to which they bond. The alkyl group includes a methyl group, and the alkoxy group includes a methoxy group. Among the preferred substituents, for more increasing the fading rate while maintaining the double peak performance, $R^{60}$ and $R^{70}$ preferably form a ring along with the 13-positioned carbon atom to which they bond. Above all, from the viewpoint of especially increasing the fading rate, preferably formed is the aliphatic ring, or the condensed poly-ring of the aliphatic ring condensed with an aromatic ring or an aromatic heteroring. Especially from the viewpoint of reducing the initial coloration owing to thermochromism, the aliphatic ring is formed more preferably.

The aliphatic ring which $R^{60}$ and $R^{70}$ form is especially preferably an unsubstituted aliphatic hydrocarbon ring, or an aliphatic hydrocarbon ring having at least one substituent selected from the group consisting of an alkyl group, a haloalkyl group, a cycloalkyl group, an alkoxy group, an amino group, an aralkyl group, an aryl group and a halogen atom. The substituents of the alkyl group, the haloalkyl group, the cycloalkyl group, the alkoxy group, the amino group, the aralkyl group, the aryl group and the halogen atom include the same groups as those described hereinabove for $R^{10}$ and $R^{20}$.

Examples of more preferred groups include a monocyclic ring such as a cyclohexane ring, a cyclooctane ring and a cycloheptane ring; a bicyclic ring such as a norbornane ring, a bicyclo[3,2,1]octane ring, a bicyclo[4,2,0]octane ring, a bicyclo[3,3,0]octane ring, a bicyclo[3,3,1]nonane ring, a bicyclo[4,3,0]nonane ring, and a bicyclo[6,3,0]undecane ring; a tricyclic ring such as an adamantane ring; and these rings substituted with at least one lower alkyl group having 4 or less carbon atoms. Among them, from the viewpoint of reducing initial coloration owing to thermochromism while maintaining high double peak performance and rapid fading rate, a monocyclic ring or a bicyclic ring exhibits especially excellent effects.

In the present invention, most preferred typical examples of the monocyclic ring or the bicyclic ring which $R^{60}$ and $R^{70}$ form, bonding to each other, are shown, for example, by the following formulae. In the following formulae, the carbon atom with 13 is the 13-positioned carbon atom.

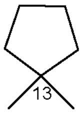
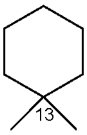
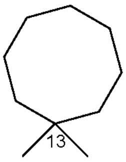
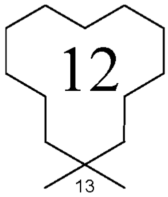

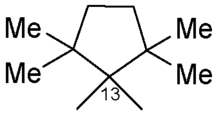
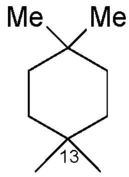
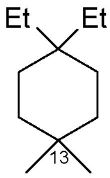
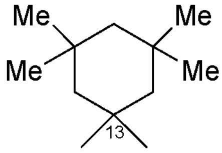

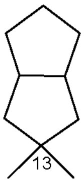
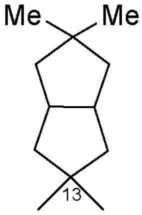
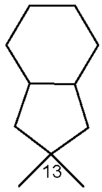
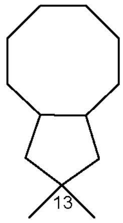

Among the above-mentioned monocyclic ring and bicyclic ring, in particular, the cyclooctane ring, the 3,3,5,5-tetramethylcyclohexane ring, the 4,4-diethylcyclohexane ring, the 4,4-dimethylcyclohexane ring, and the bicyclo[4,3,0]nonane ring are most preferred.

When the photochromic compound having a monocyclic ring or a bicyclic ring as mentioned above is used, fading rate can be increased and transparency can be enhanced. In particular, since coloration by thermochromism can be reduced, and therefore temperature-dependent coloration of the optical article can be reduced. Plural kinds of these photochromic compounds can be used for color control.

Preferred examples of the photochromic compound (a) are shown below.

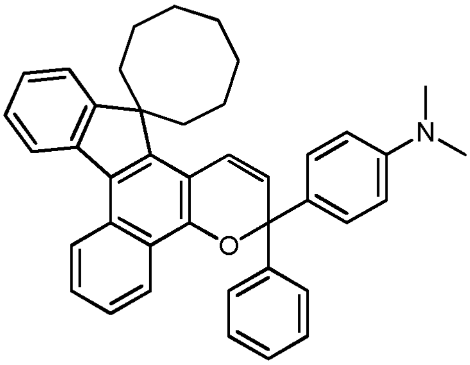

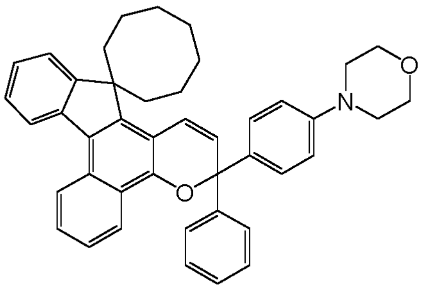

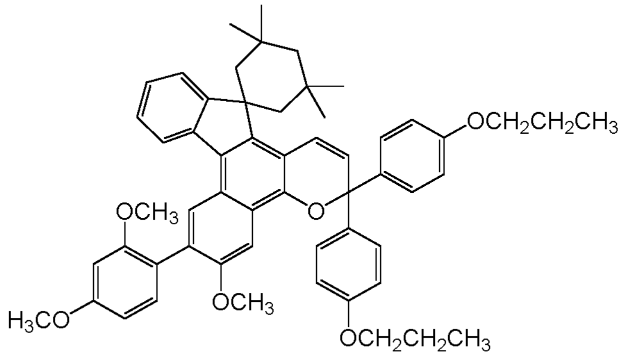

Next described is the photochromic compound (b) favorably usable in the case of providing the polarization functional layer (D).

Photochromic Compound (b)

In the present invention where the optical article has the polarization functional layer (D), preferably used is a photochromic compound (b) having an absorbance at a wavelength of 420 nm of 0.100 or more and having an absorbance at a wavelength of 430 nm of 0.015 or more, for further more enhancing indoor anti-glare properties. In the case where the polarization functional layer (D) is provided, the optical article can be transparent, for example, indoors under no photoirradiation, for example, but is in a colored state. Consequently, when the luminous transmittance under no photoirradiation satisfies 30% or more, the photochromic compound (b) is preferably used. By using the photochromic compound (b), anti-glare properties can be enhanced. The photochromic compound (b) is preferably such that the upper limit of the absorbance at a wavelength of 420 nm thereof is 0.800 or less and the upper limit of the absorbance at a wavelength of 430 nm thereof is 0.500. The measurement condition for the absorbance can be the same as that described hereinabove for the photochromic compound (a).

In the present invention where the polarization functional layer (D) is provided, plural photochromic compounds can be used for color matching. In that case, a photochromic composition composed of only the photochromic compounds (b) can be used. However, the composition containing plural photochromic compounds can contain the above-mentioned photochromic compound (a) so far as the absorbance at a wavelength of 420 nm of the composition satisfies 0.100 or more and 0.800 or less and the absorbance at a wavelength of 430 nm or more thereof satisfies 0.015 or more and 0.500 or less.

Regarding specific examples of the photochromic compound (b) usable herein, preferably mentioned are chromene compounds having an indeno[2,1-f]naphtho[1,2-b]pyran skeleton, shown by the following formula (2).

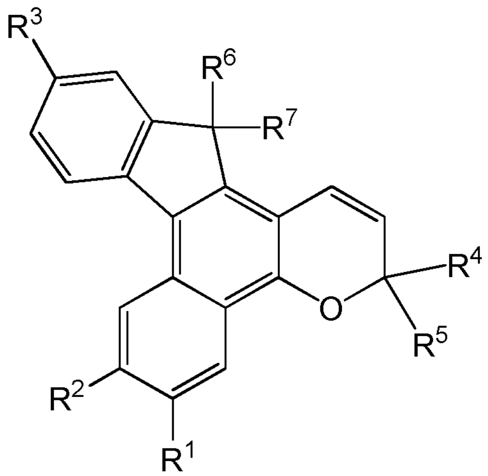

(2)

($R^1$, and $R^2$)

Here, preferably, $R^1$ and $R^2$ each are a group selected from the following substituents. Namely, $R^1$ and $R^2$ each are a hydrogen atom, a hydroxy group, a cyano group, a nitro group, an alkyl group, a haloalkyl group, a cycloalkyl

group, an alkoxy group, an amino group, a heterocyclic group containing a ring nitrogen atom and bonding to an aromatic hydrocarbon ring or an aromatic hetero ring to which it bonds via the nitrogen atom, a formyl group, a hydroxycarbonyl group, an alkylcarbonyl group, an alkoxycarbonyl group, a halogen atom, an aralkyl group, an aralkoxy group, an aryloxy group, or an aryl group. Specific examples of these groups are the same as those of the groups described for $R^{10}$ and $R^{20}$ hereinabove. However, to be the photochromic compound (b), it is preferable that both $R^1$ and $R^2$ are not hydrogen atoms.

(R3)

$R^3$ represents a hydroxy group, a nitro group, an alkyl group, a cycloalkyl group, an alkoxy group, an amino group, a heterocyclic group containing a ring nitrogen atom and bonding to an aromatic hydrocarbon ring or an aromatic hetero ring to which it bonds via the nitrogen atom, a formyl group, a hydroxycarbonyl group, an alkylcarbonyl group, an alkoxycarbonyl group, a halogen atom, an aralkyl group, an aralkoxy group, an aryloxy group, or an aryl group. The alkyl group, the cycloalkyl group, the alkoxy group, the amino group, the heterocyclic group containing a ring nitrogen atom and bonding to an aromatic hydrocarbon ring or an aromatic hetero ring to which it bonds via the nitrogen atom, the alkylcarbonyl group, the alkoxycarbonyl group, the halogen atom, the aralkyl group, the aralkoxy group, the aryloxy group, and the aryl group can be the same as those described hereinabove for $R^{10}$ and $R^{20}$.

(Preferred Combination of $R^1$, $R^2$, and $R^3$)

In order that the wavelength of the absorption end of the photochromic compound (b) can be made longer and that the absorbance can be improved, the following combination of substituent is preferred. At least two of $R^1$, $R^2$, and $R^3$ each are preferably the above-mentioned alkyl group, cycloalkyl group, alkoxy group, amino group, heterocyclic group containing a ring nitrogen atom and bonding to an aromatic hydrocarbon ring or an aromatic hetero ring to which it bonds via the nitrogen atom, aralkyl group, aralkoxy group, aryloxy group, or aryl group. The remaining one group can be any of the above-exemplified groups.

More preferably:

$R^1$ is an alkoxy group, an aryloxy group or an aryl group,
$R^2$ is an alkoxy group, an amino group, a heterocyclic group containing a ring nitrogen atom and bonding to an aromatic hydrocarbon ring or an aromatic hetero ring to which it bonds via the nitrogen atom, an aryloxy group or an aryl group,
and most preferably, $R^3$ is an alkoxy group, an amino group, an aryloxy group or an aryl group.

The aryl group of $R^1$, $R^2$ or $R^3$ can have a substituent.

Even more preferably:

$R^1$ is any group selected from an alkoxy group, an aryloxy group or an aryl group,
$R^2$ is an alkoxy group, an amino group, an aryloxy group or an aryl group,
and most preferably, $R^3$ is an alkoxy group.

($R^4$ and $R^5$)

$R^4$ and $R^5$ each are preferably an aryl group, a heteroaryl group or an alkyl group. Specific examples of these groups are the same as those described hereinabove in the section of <$R^{40}$, and $R^{50}$>.

($R^6$, and $R^7$)

For $R^6$ and $R^7$, the same groups as those described hereinabove for $R^{60}$ and $R^{70}$ are mentioned. From the viewpoint of rapid fading rate, and like $R^{60}$ and $R^{70}$, these can form, along with the 13-positioned carbon atom to which they bond,

an aliphatic ring having 3 to 20 ring carbon atoms,
a condensed poly-ring of the aliphatic ring condensed with an aromatic ring or an aromatic heteroring,
a heteroring having 3 to 20 ring atoms, or
a condensed poly-ring of the heteroring condensed with an aromatic ring or an aromatic heteroring.

Especially preferred substituents for $R^6$ and $R^7$ are the same as those for $R^{60}$ and $R^{70}$.

Preferred compounds for the photochromic compound (b) are shown below.

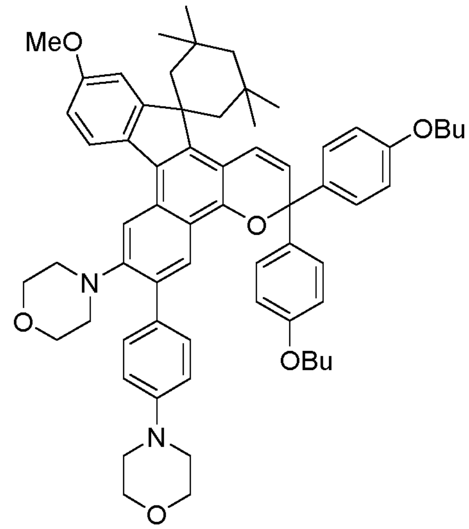

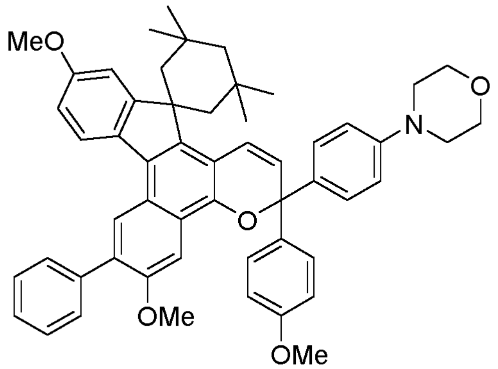

Preferably, the photochromic compound (a) or the photochromic compound (b) is is selectively used depending on the intended use. In the following description relating to the blending ratio of photochromic compounds in the case where plural kinds of photochromic compounds are used, the total amount of these photochromic compound is used as a standard reference. For example, in the case where plural kinds of photochromic compounds (a) are used, the total amount of these photochromic compounds (a) is the standard reference. Similarly, in the case where the photochromic compound (a) and the photochromic compound (b) are used, the blending amount of the photochromic compound is based on the total amount of the photochromic compound (a) and the photochromic compound (b).

<Compound (first compound) having an absorption peak within a wavelength range of 550 to 600 nm>

The compound (first compound) having an absorption peak within a wavelength range of 550 to 600 nm, which is used in the present invention, is not specifically limited so far as it is used in such a manner that the optical article can satisfy the above-mentioned characteristics (1) and (2) (and optionally the characteristic (3)). One kind alone or two or more kinds of the first compound can be used either singly or as combined.

The absorption intensity of the absorption peak of the first compound is, in consideration of the anti-glare properties and transparency of the resultant optical article, preferably $0.1\times10^5$ to $10.0\times10^5$ ml/g·cm, more preferably $0.5\times10^5$ to $5.0\times10^5$ ml/g cm, even more preferably $1.0\times10^5$ to $5.0\times10^5$ ml/g cm.

The full-width at half-maximum of the maximum absorption peak of the first compound is, in consideration of the anti-glare properties and transparency of the resultant optical article, preferably 40 nm or less. The lower limit of the full-width at half-maximum is, though not specifically limited, 10 nm.

The absorption peak, the absorption intensity and the full-width at half-maximum are values measured in chloroform under the condition of 23°C and $1.0\times10^{-5}$ g/mL.

The first compound for use in the present invention includes nitro compounds, azo compounds, anthraquinone compounds, threne compounds, porphyrin compounds, and rare earth metal compounds. Among them, from the balance between anti-glare properties and visibility, porphyrin compounds and rare earth compounds are preferred. Further,

from the viewpoint of dispersion stability in plastic materials, porphyrin compounds are most preferred.

The rare earth metal compounds include complexes such as aquahydroxy(1-phenyl-1,3-butanedionato)neodymium, aquahydroxy(phenacylphenylketonato)neodymium, aquahydroxy(1-phenyl-2-methyl-1,3-butanedionato)neodymium, aquahydroxy(1-thiophenyl-1,3 -butanedionato)neodymium, aquahydroxy(1 -phenyl-1,3 -butanedionato)erbium, and aquahydroxy(1-phenyl-1,3-butanedionato)holmium.

The porphyrin compounds are compounds that can have various substituents in the porphyrin skeleton. For example, compounds described in JP 5-194616A, JP 5-195446A, JP 2003-105218A, JP 2008-134618A, JP 2013-61653A, JP 2015-180942A, WO2012/020570A1, JP 5626081, JP 5619472, and JP 5778109 are preferably used. Among them, especially preferred porphyrin compounds are tetraazaporphyrin compounds represented by the following formula (3):

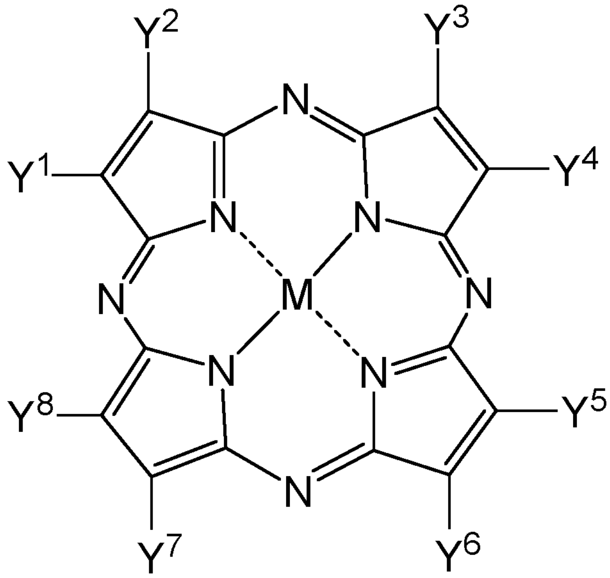

(3)

In the formula, $Y^1$, $Y^2$, $Y^3$, $Y^4$, $Y^5$, $Y^6$, $Y^7$, and $Y^8$ each independently represent a hydrogen atom, a halogen atom, a nitro group, a cyano group, a hydroxy group, an amino group, a carboxy group, a sulfonic acid group, a linear, branched or cyclic alkyl group having 1 to 20 carbon atoms, an alkoxy group having 1 to 20 carbon atoms, a substituted or unsubstituted aryl group having 6 to 20 carbon atoms, an aryloxy group having 6 to 20 carbon atoms, a substituted or unsubstituted heteroaryl group having 2 to 20 carbon atoms, a monoalkylamino group having 1 to 20 carbon atoms, a dialkylamino group having 2 to 20 carbon atoms, a dialkylamino group having 7 to 20 carbon atoms, an aralkyl group having 7 to 20 carbon atoms, an alkylthio group having 6 to 20 carbon atoms, or an arylthio group having 6 to 20 carbon atoms, these can form a ring except an aromatic ring, via a linking group, and a part or all of the hydrogen atoms of the alkyl group, the alkoxy group and the aryl group can be substituted with halogen.

M represents a divalent metal atom or an oxidized metal atom.

Above all, preferred are the following:

$Y^1$, $Y^3$, $Y^5$, and $Y^7$ are hydrogen atoms, and
$Y^2$, $Y^4$, $Y^6$, and $Y^8$ each are a linear or branched alkyl group having 1 to 6 carbon atoms.

The linear or branched alkyl group having 1 to 6 carbon atoms includes a methyl group, an ethyl group, an n-propyl group, an isopropyl group, an n-butyl group, an isobutyl group, a tert-butyl group, an n-pentyl group, an isopentyl group, a neopentyl group, a tert-pentyl group, a 1,2-dimethylpropyl group, a 1-methylbutyl group, a 2-methylbutyl group, an n-hexyl group, a 2-methylpentyl group, a 4-methylpentyl group, a 4-methyl-2-pentyl group, a 1,2-dimethylbutyl group, a 2,3-dimethylbutyl group, and a 2-ethylbutyl group.

Examples of the divalent metal atom include Cu, Zn, Fe, Co, Ni, Ru, Pd, Pt, Mn, Mg, Ti, Ba, Cd, Hg, Pd, and Sn. Examples of the oxidized metal atom includes VO, MnO, and TiO.

Above all, the metal atom (M) is preferably divalent Cu (copper). A tetraazaporphyrin compound having Cu is preferably used. When a tetraazaporphyrin compound having copper is used, the photochromic performance persistence to be mentioned in detail hereinunder can be maintained high, and the durability can be enhanced. In particular, the effect can be noticeably exhibited when the first functional layer (A) contains the first compound. In other words, in the case where the first functional layer (A) contains the first compound, a tetraazaporphyrin compound containing Cu is

preferably used, in consideration of the photochromic performance persistence. It is presumed that the oxygen-derived radical or the singlet oxygen to form in photoexcitation of a porphyrin compound may decompose a photochromic compound, but it is considered that a Cu-containing tetraazaporphyrin compound can suppress the decomposition.

Further, when a Cu-containing tetraazaporphyrin compound is used, the retention of the porphyrin compound itself can be maintained high in durability evaluation, and therefore high contrast can be maintained.

In fact, the tetraazaporphyrin compound represented by the formula (3) expresses a mixture of one kind or two more kinds of isomers. In describing the structure of such a mixture composed of plural isomers, in the present invention, one structural formula, for example, represented by the formula (3) is described for convenience sake.

In the optical article of the present invention, one kind alone or plural kinds of the tetraazaporphyrin compounds can be used either singly or as combined. Further, a mixture of one kind or two or more kinds of isomers can also be used. In addition, as needed, individual isomers can be isolated from the mixture, and one kind of the compound amount the isomers can be used, and further, plural isomers can be used as combined in an arbitrary ratio.

In consideration of the desired properties of the optical article of the present invention, among the above-mentioned tetraazaporphyrin compounds, preferred are compounds having an absorption peak at a wavelength of more than 550 nm and 600 nm or less, more preferred are compounds having an absorption peak at a wavelength of 575 to 600 nm, and even more preferred are compounds having an absorption peak at a wavelength of 580 to 595 nm. Especially more preferred are compounds having an absorption peak at a wavelength of 590 to 595 nm.

When the first compound of the type is contained, anti-glare properties can be enhanced, but when the content thereof is too high, the resultant photochromic optical article tends to be colored in violet or blue. Consequently, the content of the compound preferably satisfies the following blending ratio.

<Blending Ratio of Photochromic Compound and First Compound>

The blending ratio of the photochromic compound and the first compound in the optical article is not specifically limited so far as the optical article of the present invention can satisfy the above-mentioned characteristics (1) and (2). Further, in addition to the characteristics (1) and (2), it is preferable that the blending ratio is one that can satisfy the characteristics (3). Above all, in order to produce an optical article having more excellent effective performance and to produce such an optical article with ease, the following blending ratio is preferred. Namely, when the mass of the first functional layer (A) is 100% by mass, the content of the photochromic compound is preferably 0.1 to 10.0% by mass. In the case where the first functional layer (A) contains the first compound, preferably, the content of the first compound is 0.001 to 2.0% by mass. Further, for producing an optical article capable of exhibiting more excellent performance, in the case where the first functional layer (A) contains the first compound, it is preferable that the content of the photochromic compound is 0.5 to 8.0% by mass and the content of the first compound is 0.003 to 1.0% by mass.

The optical article of the present invention is characterized by having a laminate structure. The thickness of each layer varies, depending on the production method and the use of the optical article, and therefore the amount of the photochromic compound and the first compound contained in each layer cannot be unambiguously defined. For example, when the first functional layer (A) is thick, the amount of the photochromic compound to be contained in the first functional layer (A) can be reduced. Consequently, the blending amount of the photochromic compound and the first compound is shown herein as the amount thereof contained in the optical article of interest.

The blending ratio of the photochromic compound and the first compound preferably satisfies the following range. In the case where the compounds are contained in plural layers, the total amount of the photochromic compound and the total amount of the first compound can be the standard reference for each. When the amount of the photochromic compound is 100 parts by mass, preferably, the first compound is used in a range of 0.01 to 20 parts by mass, more preferably 0.05 to 10 parts by mass, even more preferably 0.05 to 5 parts by mass. As described in detail hereunder, the first functional layer (A) can contain both the photochromic compound and the first compound. Even in that case, or in the case where the first functional layer (A) and the second functional layer (C) exist independently, it is still desirable to satisfy the above-mentioned blending ratio. Namely, it is desirable that the blending ratio of the first compound satisfies the above-mentioned range relative to the total amount of all the photochromic compounds contained in the optical article. In the case where plural kinds of photochromic compounds and plural kinds of first compounds are used, the total amount thereof is taken as a standard reference.

<Others; Antioxidant>

Known additives can be added to the optical article of the present invention. The first functional layer (A) is an important functional layer containing the photochromic compound. Consequently, in order that the first functional layer (A) itself is not oxidatively degraded during production of the optical article and/or during long-term use of the optical article, it is preferable to add an antioxidant to the first functional layer (A). The antioxidant can prevent oxidative degradation of the photochromic compound and the first compound. Therefore, it is considered that the antioxidant has an

effect of enhancing the durability (photochromic retention rate, contrast durability) of the optical article. Consequently, even in the case where the first functional layer (A) contains the first compound, the antioxidant can be favorably added to the first functional layer (A). Further, as described in detail hereunder, in the case where the first functional layer (A) contains the first compound, preferably both the antioxidant and a stabilizer to be mentioned in detail hereunder are added to the layer.

Naturally, the antioxidant can be added in any other layer than the first functional layer (A).

Specifically, the antioxidant for use in the present invention includes a hindered phenol-type antioxidant, a phosphorus-based antioxidant and a sulfur-based antioxidant. Among these, a hindered phenol-type antioxidant is preferred.

In the present invention, as a hindered phenol-type antioxidant, commercially-available ones can be used. Examples thereof include 2,6-bis(1,1-dimethylethyl)-4-methylphenol,

ethylenebis(oxyethylene)bis[3-(5-tert-butyl-4-hydroxy-m-tolyl)propionate], octadecyl-3-(3,5-di-tert-butyl-4-hydroxyphenyl)propionate, pentaerythritol tetrakis[3-(3,5-di-tert-butyl-4-hydroxyphenyl)propionate, thiodiethylenebis[3-(3,5-di-tert-butyl-4-hydroxyphenyl]propionate, tris-(2-methyl-4-hydroxy-5-tert-butylphenyl)-butane, 4,4'-butylidenebis(3-methyl-6-tert-butylphenyl), tris-(3,5-di-tert-butyl-4-hydroxyphenyl)isocyanurate, 2,4,6-tris[3,5-di-tert-butyl-4-hydroxybenzyl]-1,3,5-trimethylbenzene, and 4-[[4,6-bis(octylthio)-1,3,5-triazin-2-yl]amino]-2,6-bis(1,1-dimethylethyl)phenol. Examples of trade names thereof include ADK Stab (registered trademark) AO Series (e.g., AO-20, AO-30, AO-40, AO-50, AO-60, AO-80) by ADEKA Corporation, Irganox (registered trademark) Series (e.g., Irganox 245, Irganox 1010, Irganox 1135) by BASF Japan Corporation, and SUMILIZER (registered trademark) GA80 by Sumitomo Chemical Co., Ltd.

<Blending Amount of Antioxidant>

In the present invention, the blending amount of the antioxidant is not specifically limited. In particular, from the viewpoint of suppressing oxidative degradation, and improving the durability of the optical article by combining with a stabilizer to be mentioned in detail hereunder, the blending amount is preferably as mentioned below. Specifically, in the first functional layer (A), the amount is preferably 20 to 200 parts by mass relative to 100 parts by mass of the photochromic compound. When the blending amount is satisfied, the effect of preventing oxidative degradation and the effect of maintaining durability can be exhibited. For exhibiting these effects more favorably, in the first functional layer (A) the amount is preferably 50 to 150 parts by mass relative to 100 parts by mass of the photochromic compound.

The antioxidant can be used alone, or plural kinds thereof can be used. When plural kinds are used, the total amount is a standard reference.

Next described is a stabilizer which is necessary in the optical article of the present invention for more effectively enhancing the durability thereof.

<Stabilizer>

In the optical article of the present invention, the first functional layer (A) at least containing a photochromic compound preferably contains at least one stabilizer selected from the group consisting of a UV absorbent, a hindered amine-type light stabilizer, and a singlet oxygen quencher. By adding the stabilizer, the photochromic performance persistence can be maintained high and the durability can be improved. In particular, the effect can be especially noticeably exhibited in the following case. Namely, when the first functional layer (A) contains the first compound, the effect of adding the stabilizer can be remarkable. The stabilizer can be used alone or plural kinds thereof can be used as mixed.

The present inventors estimate this effect as follows. In particular, in the case where the first compound and the photochromic compound exist together in one and the same layer, it is considered that the first compound gives negative influences to the photochromic compound. Only the estimation is as follows. It is considered that the radical and the singlet oxygen formed by the first compound having absorbed UV rays to be in an excited state decompose the photochromic compound. As a result, the photochromic performance persistence is considered to lower. When the stabilizer is added to the case (is made to exist in the case), it is considered that the photochromic decomposition can be suppressed. As a result, it is considered that the photochromic performance persistence can be maintained high and the durability can be enhanced. In addition, at that time, the compound to be used is preferably a copper-having tetraazaporphyrin compound. By using a copper-having tetraazaporphyrin compound, the effect of suppressing decomposition of the photochromic compound (the effect of maintaining high the photochromic performance persistence) can be enhanced more favorably. Further, in the case where the first functional layer (A) contains the first compound, it is desirable that the layer contains the antioxidant.

Further, the effect to be attained by addition of the stabilizer can be noticeably exhibited in the case where the

first functional layer (A) is a relatively thin layer. For example, in the case where the thickness of the first functional layer (A) is 10 to 100 μm or so, the blending amount of the photochromic compound and/or the first compound increases. In that case, since the concentration of the photochromic compound is high, the effect of suppressing decomposition to be attained by adding the stabilizer can be more remarkable.

<Stabilizer; UV Absorbent>

In the present invention, commercially-available UV absorbents can be used. Above all, UV absorbents having an absorption peak at a wavelength of 320 to 400 nm are preferably used. Specifically, a benzotriazole-type compound, a triazine-type compound, a benzophenone-type compound, a cyanoacrylate-type compound, and a benzoate-type compound can be used. Among them, a benzotriazole-type compound is especially preferred.

Specifically, the following compounds are usable.

2-(2H-benzotriazol-2-yl)-4,6-bis(1-methyl-1-phenylethyl)phenol, 2-(2H-benzotriazol-2-yl)-4-(1,1,3,3-tetramethylbutyl)phenol, 2,2'-methylenebis[6-(2H-benzotriazol-2-yl)-4-(1,1,3,3-tetramethylbutyl)phenol], 2-(2H-benzotriazol-2-yl)-p-cresol, 2-(5-chloro-2H-benzotriazol-2-yl)-6-tert-butyl-4-methylphenol, 2-(2-hydroxy-5-methylphenyl)-2H-benzotriazole, 2-(3-tert-butyl-2-hydroxy-5-methylpheyl)-5-chloro-2H-benzotriazole, 2-(3,5-di-tert-pentyl-2-hydroxyphenyl)-2H-benzotriazole, 2-(2-hydroxy-5-tert-octylphenyl)-2H-benzotriazole, 2-(2H-benzotriazol-2-yl)-4,6-bis(1,1-dimethylpropyl)phenol, 2-(2-hydroxy-5-tert-octylphenyl)benzotriazole, 2,2'-methylenebis[6-(benzotriazol-2-yl)-4-tert-octylphenol, 2-(2-hydroxy-5-tert-butylphenyl)-2H-benzotriazole, branched/linear alkyl ester having 7 or more and 9 or less of 3-(2H-benzotriazol-2-yl)-5-(1,1-dimethylethyl)-4-hydroxy,
mixture of about 50% by mass of ester compound of β-[3-(2H-benzotriazol-2-yl)-4-hydroxy-5-tert-butylphenyl]-propionic acid and polyethylene glycol 300, about 38% by mass of ester compound of bis{β-[3-(2H-benzotriazol-2-yl)-4-hydroxy-5-tert-butylphenyl]-propionic acid} and polyethylene glycol 300, and about 12% by mass of polyethylene glycol 300. Examples of commercial products usable here include ADK Stab (registered trademark) LA Series (e.g., LA-24, LA-29, LA-31, LA32, LA-36) by ADEKA Corporation, SEESORB (registered trademark) Series (e.g., SEESORB 701, SEESORB 703, SEESORB 704, SEESORB 709) by Shipro Kasei Kaisha, Ltd., KEMSORB (registered trademark) Series (e.g., KEMSORB (registered trademark) 74, KEMSORB 79, KEMSORB 279) by Chemipro Kasei Kaisha, Ltd., and TINUVIN (registered trademark) Series (e.g., TINUVIN PS, TINUVIN 384-2, TINUVIN 1130) by BASF Japan Corporation. One kind alone or plural kinds of these UV absorbents can be used.

The UV absorbent is effectively contained in the first functional layer (A), but can also be added to other layers.

(Stabilizer; Hindered Amine-type Light Stabilizer>

In the present invention, as the hindered amine-type light stabilizer, preferably used are hindered amine-type compounds having a 2,2,6,6-tetramethyl-4-piperidyl skeleton, and commercial products can also be used. Examples thereof include bis(2,2,6,6-tetramethyl-4-piperidyl) sebacate, bis(1,2,2,6,6-pentamethyl-4-piperidyl) sebacate, bis(1-octyloxy-2,2,6,6-tetramethyl-4-piperidyl) sebacate, 1-[2-{3-(3,5-di-t-butyl-4-hydroxyphenyl)propionyloxy}ethyl]-4-{3-(3,5-di-t-butyl-4-hydroxyphenyl)propionyloxy } - 2,2,6,6-tetramethylpiperidine, 4-benzoyloxy-2,2,6,6-tetramethylpiperidine, methyl(1,2,2,6,6-pentamethyl-4-piperidyl) sebacate, 1,2,2,6,6-pentamethyl-4-piperidinyl methacrylate, [1,2,2,6,6-pentamethyl-4-piperidinyl] 2-[[3,5-bis(1,1-dimethylethyl)-4-hydroxyphenyl]methyl]-2-butylpropane-dioate, poly[{ 6-(1,1,3,3-tetramethylbutyl)amino-1,3,5-triazine-2,4-diyl}{2,2,6,6-tetramethyl-4-piperidyl)imino}hexamethylene{(2,2,6,6-tetramethyl-4-piperidyl)imino}], and 1,2,2,6,6-pentamethyl-4-piperidyl methacrylate. Trade names thereof include ADK Stab (registered trademark) LA Series (e.g., (LA-52, LA-57, LA-63P, LA-68, LA-72, LA-77Y, LA-81, LA-82), and TINUVIN (registered trademark) Series (e.g., TINUVIN 123, TINUVIN 171, TINUVIN 249, TINUVIN 292, TINUVIN 765, TINUVIN 622SF) and Chimassorb (registered trademark) Series (e.g., Chimassorb 2020FDL, Chimassorb 944FDL) by BASF Japan Corporation. One kind alone or plural kinds of these hindered amine-type light stabilizers can be used.

The hindered amine-type light stabilizer is effectively contained in the first functional layer (A), but can also be added to other layers.

<Stabilizer; Singlet Oxygen Quencher>

In the present invention, the singlet oxygen quencher is not specifically limited so far as it can trap the singlet oxygen formed by activated oxygen under light energy to inactivate the singlet oxygen. Commercial products can be used. Examples thereof include ethylenes, amines, furans, diimonium salts and nickel complexes. Not specifically limited, more specific examples thereof include ethylenic compounds such as tetramethylethylene, cyclopentene, cyclohexene, 2,5-dimethyl-2,4-hexadiene, 1,3-cyclopentadiene, α-terpinene, and β-carotin;

amines such as diethylamine, triethylamine, 1,4-diazabicyclooctane (DABCO), 2,2,6,6-tetramethylpiperidine, N-ethylimidazole, N,N,N',N'-tetramethylphenylenediamine, N,N'-diphenyl-N,N'-di(3-methylphenyl)-1,1'-biphenyl-4,4'-diamine, N-isopropylcarbazole, and N-phenylcarbazole; furan compounds such as 1,3-diphenylisobenzofuran;

polycyclic aromatic compounds such as naphthalene, dimethylnaphthalene, dimethoxyanthracene, anthracene, diphenylanthracene, pyrene, chrysene, perylene, coronene, tetracene, pentacene, rubrene, 3,4-benzofluoranthrene, 2,3-benzofluorene, 1,12-benzoperylene, 3,4-benzopyrene, 4,5-benzopyrene, and alkyl-substituted derivatives thereof;

aromatic compounds such as 1,2,3,4-tetraphenyl-1,3-cyclopentadiene, and pentaphenyl cyclopentadiene; and

organic nickel compounds such as bis(dithiobenzyl)nickel, nickel p-toluenesulfonate, bis(4-dimethylaminodithiobenzyl)nickel, bis(dithiobiacetyl)nickel, nickel bis(dibutyldithiocarbamate), bis(octylphenyl)sulfide nickel, bis(1,2-dithiophenolate)nickel tetrabutylammonium salt, bis(thiocatechol)nickel tetrabutylammonium salt, bis(1,2-benzenedithiolato)nickelic(III) acid tetrabutylphosphonium salt, bis(4,4'-di-tert-butyl-dithiobenzyl)nickel, bis(4,4'-diisopropyldithiobenzyl)nickel, and 4-N,N-diethylsulfamoyl-1,2-benzenedithiol nickel.

The singlet oxygen quencher is effectively contained in the first functional layer (A), but can be added to any other layer.

<Preferred Blending Amount of Stabilizer, and Combination thereof with antioxidant>

In the present invention, the blending amount of the stabilizer is not specifically limited, but in the case where the stabilizer is added to the first functional layer (A), the blending amount is preferably as follows. The first functional layer (A) contains the stabilizer preferably in an amount of 1 to 1000 parts by mass relative to 100 parts by mass of the photochromic compound therein, more preferably 5 to 800 parts by mass, even more preferably 10 to 400 parts by mass. In the case where the stabilizer is alone, the blending amount thereof preferably satisfies the above-mentioned range, but in the case where plural kinds are used, the total amount thereof preferably satisfies the range.

In particular, the optimum level of the blending amount of the stabilizer may be determined to fall within the range in accordance with the effect and the compatibility thereof with resin. Especially, for example, in the case where a UV absorbent is used, the amount thereof is preferably 20 to 250 parts by mass relative to 100 parts by mass of the photochromic compound. In the case where a hindered amine-type light stabilizer is used, its amount is preferably 20 to 250 parts by mass relative to 100 parts by mass of the photochromic compound. In the case where a singlet oxygen quencher is used, its amount is preferably 10 to 100 parts by mass relative to 100 parts by mass of the photochromic compound.

In the case where the stabilizer is used, preferably, the first functional layer (A) contains the first compound. Namely, the first functional layer (A) preferably contains the photochromic compound, the first compound and the stabilizer. In that case, the amount of the stabilizer preferably falls within the above-mentioned range. Also preferably the first functional layer (A) contains the first compound in an amount of 0.01 to 20 parts by mass relative to 100 parts by mass of the photochromic compound therein, more preferably 0.05 to 10 parts by mass, even more preferably 0.05 to 5 parts by mass.

Also in the case where the stabilizer is contained, the first functional layer (A) preferably contains the above-mentioned antioxidant. Namely, in the case where the first functional layer (A) contains the photochromic compound and the first compound, the layer preferably contains both the antioxidant and the stabilizer. The antioxidant is preferably the above-mentioned hindered phenol-type antioxidant. For improving durability of the optical article, it is considered effective to add the stabilizer, but it is considered that adding the antioxidant exhibits a higher effect.

In the case where the first functional layer (A) contains the photochromic compound and the first compound, the antioxidant is contained therein preferably in an amount of 20 to 200 parts by mass relative to 100 parts by mass of the photochromic compound, more preferably 50 to 150 parts by mass. When the antioxidant satisfies the range, not only the first functional layer (A) can be prevented from being oxidatively degraded but also can exhibit an excellent effect to improve durability. At that time, the blending amount of the first compound and the stabilizer is as mentioned above.

Further, the effect can be noticeably exhibited in the case where the first functional layer (A) is a relatively thin film, as mentioned above.

<Layer Configuration of Optical Article>

The optical article of the present invention has a laminate structure where the first functional layer (A) and the lens substrate (B) exist independently. Namely, in the laminate structure, for example, in the case of spectacle lenses, the part of the first functional layer (A) is prevented from having color unevenness because the thickness difference between the central part and the edge part thereof is small (almost zero). Namely, in the laminate structure the first functional layer (A) can be relatively thin, and therefore the absolute thickness difference can be small. As a result, color

unevenness in coloration can be suppressed.

In the optical article of the present invention, the method for forming the laminate structure having the first functional layer (A) and the lens substrate (B) is not specifically limited, and the laminate structure can be formed according to the following method.

There can be mentioned a method that includes bonding a pair of optical sheets with the first functional layer (A) which is adhesive to give a laminate, and then forming the lens substrate (B), for example, by injection molding on one surface of the optical sheet of the resultant laminate. Hereinunder the method may be referred to as "binder method".

There can also be mentioned a method that includes preparing the lens substrate (B), and then forming the first functional layer (A) thereon by a coating method or a cast polymerization method. Hereinunder the case of forming a laminate structure by a coating method may be referred to simply as "coating method". The case of forming a laminate structure by a cast polymerization method may be referred to simply as "cast polymerization method".

In these "binder method", "coating method" and "cast polymerization method", the first compound can be added to the first functional layer (A). In that case, the first functional layer (A) can serve also as the second functional layer (C) containing the first compound.

Further, in the above-mentioned method, the first compound can be added to the lens substrate (B), or the first compound can be added to any other layer than the first functional layer (A) and the lens substrate (B). In the case where the first compound is added to the lens substrate (B), the lens substrate (B) can be regarded as the second functional layer (C). In the case where the first compound is added to the other layer than the first functional layer (A) and the lens substrate (B), the second functional layer (C) exists independently.

In the present invention, the first functional layer (A) at least containing the photochromic compound exists independently of the lens substrate (B), and the thickness thereof is preferably 10 to 1000 μm, more preferably 20 to 900 μm. When the range is satisfied, there can be provided a photochromic optical article capable of sufficiently exhibiting photochromic properties with little color unevenness. A preferred range of the thickness of the first functional layer (A) to be formed may vary in the "binder method", the "coating method", or the "cast polymerization method". This will be described in detail hereinunder. For forming the first functional layer (A) having a thickness of 10 to 100 μm or so, the "binder method" or the "coating method" is advantageous, though the layer can also be formed in the "cast polymerization method".

Naturally, the first compound can be added by combining the methods mentioned hereinabove.

<Lens Substrate (B)>

The (optical) substrate to be used is not specifically limited, and any ordinary optical substrate can be used. Specifically, for the substrate, a plastic lens and inorganic glass can be used. The plastic lens can be a thermosetting resin or a thermoplastic resin. The lens substrate can have the polarization functional layer (D) to be described in detail hereinunder. The lens substrate (B) can be subjected to chemical treatment with an alkali solution or an acid solution or physical treatment of corona discharge, plasma discharge or polishing, on the surface on which the first functional layer and/or the second functional layer are formed. In the case where the coating method to be mentioned in detail hereinunder is utilized, an adhesive resin layer (that is, primer layer) can be provided. The thickness of the lens substrate (B) is not specifically limited, but is preferably 0.5 to 30 mm.

<First Functional Layer (A) and/or Second Functional Layer (C)>

<Matrix to form First Functional Layer (A) and/or Second Functional Layer (C)>

In the above-mentioned "binder method", "coating method" and "cast polymerization method", preferably used is an adhesive composition or a curable composition containing an adhesive resin or a polymerizable monomer, the photochromic compound and the first compound. Preferably, the first functional layer (A) and/or the second functional layer (C) are formed, using the composition.

The resin to constitute the adhesive resin includes an acrylic resin (e.g., poly(meth)acrylic acid, polymethyl methacrylate, polymethyl acrylate, acrylonitrile-methyl acrylate copolymer resin), an epoxy resin, an episulfide resin, a thietanyl resin, an allyl resin, a vinyl resin, a poly(thio)urethane resin, a poly(thio)urethane-urea resin, a polyvinyl alcohol, a polyvinyl pyrrolidone, a cellulosic resin (e.g., carboxymethyl cellulose, hydroxyethyl cellulose, hydroxypropyl cellulose), a polyacrylamide, a polyethylene oxide, a polyethylene glycol, a polypropylene glycol, a casein, a gelatin, a starch, an olefinic resin (e.g., polyethylene, polypropylene), a polyester, a polyvinyl chloride, a styrenic resin (e.g., polystyrene, acrylonitrile-styrene copolymer resin), a polycarbonate, a vinyl chloride-vinyl acetate copolymer resin, a polyvinyl butyral, a polyisobutylene, a polytetrahydrofuran, a polyaniline, an acrylonitrile-butadiene-styrene copolymer (ABS resin), a polyamide (e.g., nylon), a polyimide, a polydiene (e.g., polyisoprene, polybutadiene), a polysiloxane (e.g., polydimethylsiloxane), a polysulfone, a polyimine, a polyacetic anhydride, a polyurea, a polysulfide, a polyphosphazene, a polyketone

polyphenylene, and a polyhaloolefin. These resins can be appropriately copolymerized, or can be modified.

As the polymerizable monomer, preferably used are monomer components constituting the above-mentioned resin. Usable is a urethane-based monomer including a polyiso(thio)cyanate component (polyisocyanate compound and/or polythiocyanate compound) and a poly(thi)ol component (polyol compound and/or polythiol compound). Also usable is a radical polymerizable monomer component including a vinyl-based monomer and a (meth)acrylic monomer.

In the present invention, as mentioned above, preferably used is a photochromic compound which colors by partial cleavage of the molecule and fades by recombination of the cleaved site. In the case where such a photochromic compound is used, preferred is a polymerizable monomer combination to form a matrix or a resin, in which a sufficient free space not interfering with the molecular movement in the cleavage and recombination can be formed.

To the resin to be the matrix, a known additive can be added.

Regarding the first functional layer (A) and the second functional layer (C), in the case where the first functional layer (A) contains the photochromic compound and the first compound, it is unnecessary to independently provide the second functional layer (C), but for exhibiting the effect, the second functional layer (C) can be provided even in that case. However, in the case where the first functional layer (A) contains the photochromic compound and the first compound, the first functional layer (A) preferably contains a stabilizer, as described above.

As a result of the investigations made by the present inventors, it has been found that when the optical article has the first functional layer (A) (not containing the first compound) and the second functional layer (C) existing independently, the photochromic performance persistence can be maintained high. In particular, when the first functional layer (A) (not containing the first compound) and the second functional layer (C) are not in direct contact with each other, specifically, when the two bond via the other layer, the photochromic performance persistence can be maintained high. For example, a laminate of first functional layer (A) (not containing the first compound)/polarization functional layer (D) or other adhesive layer/second functional layer (C) laminated in that order from the side which is exposed to sunlight can maintain a high photochromic performance persistence even when a stabilizer is not added thereto. However, in that case, a stabilizer can be added to each layer.

In the case where the second functional layer (C) is provided independently, it can be appropriately determined depending on the compounds to be used. Above all, it is preferable that the first functional layer (A) is provided on the side which is exposed to sunlight, and the second functional layer (C) is provided behind it. Specifically, when the second functional layer (C) is provided on the side which is exposed to sunlight, some light may be absorbed by the second functional layer (C). As a result, the photochromic compound in the first functional layer (A) cannot sufficiently color, as the case may be. Consequently, it is preferable that the first functional layer (A) is provided on the side which is exposed to sunlight.

Next described is a method for producing the optical article of the present invention.

<Formation of Laminate Structure by Binder Method>

<Formation of First Functional Layer (A) by Binder Method>

The binder method includes preparing the first functional layer (A) that is adhesive, and bonding an optical sheet at least onto one surface thereof. The optical sheet can have the polarization functional layer (D) to be mentioned in detail hereinunder. Fig. 1 shows one example of a laminate structure for which the binder method is used. Fig. 1 is an example of a case where the first functional layer contains the photochromic compound and the first compound. Fig. 1 is an example of an optical article with a configuration of optical sheet 1/backup adhesive layer 2/first functional layer 3 (In this example, the first functional layer 3 serves also as the second functional layer)/backup adhesive layer 2'/optical sheet 1'/lens substrate (B) 7 laminated in that order. In that, example, it is preferable that after a photochromic laminate 6 of optical sheet 1/backup adhesive layer 2/first functional layer 3 (In this example, the first functional layer 3 serves also as the second functional layer)/backup adhesive layer 2'/optical sheet 1 has been formed, the lens substrate (B) 7 is formed on the optical sheet 1' of the photochromic laminate 6 to product the optical article 8.

In he case where the first functional layer (A) is formed according to the binder method, a functional layer sheet is formed using an adhesive composition containing a polymerizable monomer or an adhesive resin, and a photochromic compound, and this is sandwiched between two transparent sheets (optical sheets) to produce a laminate having the first functional layer (A) (functional layer sheet) which is adhesive. In that case, for forming the functional layer sheet, it is preferable that a coating liquid of an adhesive composition with an organic solvent is employed and the functional layer sheet is prepared by coating. The polymerizable monomer or the adhesive resin is preferably a urethane-based monomer or an urethane-based resin adhesive. At that time, the first compound can be added to the adhesive composition so that the first functional layer (A) can be a layer containing the photochromic compound and the first compound.

As the optical sheet, a sheet applicable to optical articles having light transparency can be used without any particular limitation. In particular, the laminate formed by the binder method can be processed for bending. Further, the laminate can be subjected to secondary processing of laminating a resin layer on the back of the laminate by injection

molding. Consequently, it is preferable that a thermoplastic resin is used for the optical sheet. Preferred examples of the thermoplastic resin include a polycarbonate resin, an acrylic resin, a polyacetal resin, a polyamide resin, a polyethylene resin, a polypropylene resin, a polyethylene terephthalate resin, a polystyrene resin, a polyphenylene sulfide resin, and polyvinyl chloride resin. Among these, a polyamide resin or a polycarbonate resin is especially preferred because of the reason of good adhesiveness and high versatility.

The optical sheet can contain the first compound. In the case where the optical sheet contains the first compound, the optical sheet can be regarded as the second functional layer (C). Further, the optical sheet can be the polarization functional layer (D) itself to be mentioned in detail hereunder. The optical sheet and the polarization functional layer (D) can be integrated for use herein.

A preferred thickness of the optical sheet is preferably 30 to 1000 μm, more preferably 50 to 400 μm. Optical sheets having a different thickness can be combined for use herein.

On at least one surface of the optical sheet, the lens substrate (B) is laminated. The lens substrate (B) can contain the first compound. In the case where the lens substrate (B) contains the first compound, the lens substrate (B) can be regarded as the second functional layer (C).

The thickness of the first functional layer (A) in the binder method is preferably 10 to 100 μm. In the adhesive composition containing the photochromic compound, the blending amount of the photochromic compound is not specifically limited so far as it is used to satisfy the characteristics (1) and (2) (and optionally the characteristic (3)) of the optical article. In particular, in consideration of productivity, the adhesive composition to form the first functional layer (A) preferably contains the photochromic compound in an amount of 0.5 to 5.0 parts by mass relative to 100 parts by mass of the polymerizable monomer or the adhesive resin (component to form matrix) therein. In particular, in carrying out the durability test according to the method described in the section of Examples, in order that the photochromic compound retention rate can be maintained high, the following blending ratio is preferred. Specifically, in the case where the polarization functional layer is not contained, it is preferable that the composition contains the photochromic compound in an amount of 1.0 to 5.0 parts by mass relative to 100 parts by mass of the polymerizable monomer or the adhesive resin (component to form matrix), more preferably in an amount of 1.5 to 5.0 parts by mass, even more preferably in an amount of 2.0 to 5.0 parts by mass. In the case where the polarization functional layer is contained, it is preferable that the composition contains the photochromic compound in an amount of 0.8 to 4.0 parts by mass relative to 100 parts by mass of the polymerizable monomer or the adhesive resin (component to form matrix), more preferably in an amount of 1.0 to 4.0 parts by mass, even more preferably in an amount of 1.2 to 4.0 parts by mass.

Details of the case of employing the binder method are described. Specifically, a functional layer sheet (to be finally the first functional layer (A)) of an adhesive composition containing a polymerizable monomer or an adhesive resin, the photochromic compound, and optionally the first compound and an organic solvent is formed. The adhesive functional layer sheet is sandwiched between two optical sheets, and the two optical sheets are bonded via the functional layer sheet. At that time, a layer of a backup adhesive resin (backup adhesive layer) can be laminated on the surface of the optical sheet to be bonded to the functional layer sheet. By providing the backup adhesive layer, a laminate having a high bonding strength can be formed. In that case, the first compound can be added to the backup adhesive layer. The backup adhesive layer with the first compound corresponds to the second functional layer (C).

Employing the above-mentioned method, a photochromic laminate having the following layer configuration can be produced.

Optical sheet/first functional layer (A)/optical sheet,
Optical sheet/backup adhesive layer/first functional layer (A)/optical sheet,
Optical sheet/backup adhesive layer/first functional layer (A)/backup adhesive layer/optical sheet.

The first compound can be added to at least one layer selected from the optical sheet, the first functional layer (A) and the backup adhesive layer, and the resulting layer can be the second functional layer (C). The first compound can be added to the lens substrate (B) to be formed on the surface of one optical sheet. In the case where the backup adhesive layer is used, the thickness thereof is preferably 0.5 to 50 μm. However, in the case where the polarization functional layer (D) to be mentioned in detail hereinunder is provided, it is preferable to provide the polarization functional layer (D) between the backup adhesive layer having a thickness of 20 to 50 μm and the first functional layer (A), for further enhancing the adhesiveness. At that time, the backup adhesive layer having a thickness of 0.5 to 20 μm is preferably provided on the optical sheet. The first compound can be added to any of the backup adhesive layers.

<Formation of Second Functional Layer (C) by Binder Method>

As described above, the first compound can be added to the optical sheet, the first functional layer (A), the backup adhesive layer and/or the lens substrate (B). The blending amount of the first compound is not specifically limited so far as it is used to satisfy the characteristics (1) and (2) (and optionally the characteristic (3)) of the optical article. In

particular, in consideration of productivity, the blending amount of the first compound is preferably 0.01 to 1.0 part by mass relative to 100 parts by mass of the component to form the matrix such as the resin component therein. By adding the first compound to the first functional layer (A), the productivity of the optical article itself can be improved. In the case where the first compound is added to the optical sheet, the backup adhesive layer and/or the lens substrate (B), the second functional layer (C) exists independently of the first functional layer (A). In that case, since the first functional layer (A) and the second functional layer (B) exist independently, the mutual influence of the first compound and the photochromic compound can be reduced. As a result, the respective layers exhibit their respective properties to give a high-quality optical article.

In the case where the first compound is added to the optical sheet, the backup adhesive layer or the lens substrate (B), the thickness of the second functional layer (C) is the thickness of the optical sheet, the backup adhesive layer or the lens substrate (B).

<Preferred Lens Substrate (B) in Binder Method>

In the laminate having the above-mentioned layer configuration, it is preferable that a thermoplastic resin of the same substance as that for the optical sheet is formed by injection molding on the optical sheet existing in the outermost layer so as to be integrated with the lens substrate (B). For integration, employable is an injection molding method which includes setting the laminate of the layer configuration mentioned above in a mold followed by injection-molding a thermoplastic resin to constitute the optical substrate, such as a polycarbonate resin, into the mold. The laminate having the first functional layer (A) formed by the binder method can be processed to have a lens-like spherical form by bending prior to injection molding. For the bending method, for example, employable is any of hot pressing, pressure working or vacuum suction working. The thickness of the lens substrate (B) is 1.0 to 5.0 mm, though not specifically limited thereto.

<Formation of Laminate Structure by Coating Method>

<Formation of First Functional Layer (A) by Coating Method>

For forming the laminate structure by the coating method, the following method is preferably employed. First, a curable composition containing at least the polymerizable monomer and a photochromic compound and optionally the first compound is applied to the lens substrate (B) by spin coating or dipping. In the case where the coating method is used, the polymerizable monomer is preferably a (meth)acrylic monomer. Using a (meth)acrylic monomer, the first functional layer (A) with little smooth unevenness can be formed. When the curable composition has a high viscosity, it can be appropriately diluted with an organic solvent, then the diluted curable composition is applied to the substrate and dried, and thereafter the organic solvent is removed.

Next, depending on the polymerizable monomer used, the first functional layer (A) can be formed on the lens substrate (B) by thermal polymerization and/or photopolymerization. When the curable composition contains the first compound, it can be considered that the first functional layer (A) can serve also as the second functional layer (C). The first compound can be added to the lens substrate (B). In that case, the lens substrate (B) can be regarded as the second functional layer (C).

In the case where the coating method is used, though not specifically limited but in consideration of productivity, the thickness of the first functional layer (A) is preferably 10 to 100 μm. In the curable composition containing the photochromic compound, the blending amount of the photochromic compound is not specifically limited so far as the compound is used to satisfy the characteristics (1) and (2) (and optionally the characteristic (3)) of the optical article. Especially in consideration of productivity, it is preferable that the adhesive composition to form the first functional layer (A) contains the photochromic compound in an amount of 0.5 to 5.0 parts by mass relative to 100 parts by mass of the polymerizable monomer or the adhesive resin (component to form matrix) therein.

<Preferred Lens Substrate (B) in Coating Method>

In the coating method, the lens substrate (B) described hereinabove for the lens substrate (B) can be used. Not specifically limited, the thickness of the lens substrate (B) is preferably 0.5 to 30 mm.

In the coating method, it is effective to form a primer layer on the surface of the lens substrate (B) on which the first functional layer (A) is formed. The primer layer can be formed using a known adhesive resin. For example, preferred for use herein is a primer composition containing a wet-curable polyurethane adhesive, a polyisocyanate-polyester two-component adhesive, polyisocyanate-polyether two-component adhesive, a polyisocyanate-polyacryl two-component adhesive, a polyisocyanate-polyurethane elastomer two-component adhesive, an epoxy adhesive, an epoxy-polyurethane two-component adhesive, a polyester adhesive, a polyurethane-urea one-component adhesive, or a water-dispersible polyurethane adhesive. The primer composition is applied onto the lens substrate (B), and then cured to form a primer layer. In the present invention, the first compound can be added to the primer layer. In that case, the primer layer can be regarded as the second functional layer (C). In forming the primer layer, the thickness thereof is preferably 0.5 to 10 μm.

Further, using the lens substrate (B) having the polarization functional layer (D), the resultant laminate can have the first functional layer (A) and the polarization functional layer (D). At that time, the polarization functional layer (D) can be formed on the surface of the lens substrate (B), or can be buried in the lens substrate (B). Using the substrate with the polarization functional layer (D), there can be produced a laminate having a configuration of first functional layer (A)/polarization functional layer (D). However, the first functional layer (A) can be formed on the substrate not having the polarization functional layer (D), and thereafter the polarization functional layer (D) can be laminated thereon.

<Formation of Second Functional Layer (C) by Coating Method>

In the present invention, the second functional layer (C) can be formed by adding to the first functional layer (A), the primer layer and/or the lens substrate (B). The blending amount of the first compound to be contained in the second functional layer (C) is not specifically limited so far as it is added to satisfy the characteristics (1) and (2) (and optionally the characteristic (3)) of the optical article. In particular, in consideration of productivity, it is preferable that the first compound is contained in an amount of 0.01 to 1.0 part by mass relative to 100 parts by mass of the component to form the matrix such as the resin component. When the first compound is added to the first functional layer (A), the productivity of the optical article itself can be enhanced. By adding the compound to the primer layer and/or the lens substrate (B), the second functional layer (C) comes to exist independently of the first functional layer (A). The effect is the same as that described in the section of binder method.

In the case where the first compound is added to the primer layer and/or the lens substrate (B), the thickness of the second functional layer (C) is the thickness of the primer layer or the thickness of the lens substrate (B).

<Formation of Laminate Structure by Cast Polymerization Method>

<Formation of First Functional Layer (A) by Cast Polymerization Method>

In the present invention, the cast polymerization method is preferably as follows. First, the lens substrate (B) is put between molds. At that time, there is kept a space between at least one mold and the substrate for forming the first functional layer (A) therein. Next, a curable composition containing a polymerizable monomer, the photochromic compound and optionally the first compound is case into the space between the substrate and the mold. Further, by curing the cast curable composition, the first functional layer (A) can be formed on the substrate. Using the method, the first functional layer (A) that is relatively thicker than in the coating method can be formed. For example, the method is favorable for forming the first functional layer (A) having a thickness of 100 to 1000 μm, and is more favorable for forming the first functional layer (A) having a thickness of 200 to 900 μm.

In the case of using the cast polymerization method, the polymerizable monomer contained in the curable composition can be any of a (meth)acrylic monomer or a urethane monomer. In the case of using the cast method, the blending amount of the photochromic compound in the curable composition containing the photochromic compound is not specifically limited so far as it is used to satisfy the characteristics (1) and (2) (and optionally the characteristic (3)) of the optical article. Especially in consideration of productivity, it is preferable that the curable composition (adhesive composition) to form the first functional layer (A) contains the photochromic compound in an amount of 0.05 to 1.0 parts by mass relative to 100 parts by mass of the polymerizable monomer or the adhesive resin (component to form matrix) therein.

In forming the laminate structure of the type, when the first compound is added to the curable composition, the first functional layer (A) comes to serve also as the second functional layer (C). In the case where the lens substrate (B) containing the first compound is used, the lens substrate (B) can be regarded as the second functional layer (C).

<Preferred Lens Substrate (B) in Cast Polymerization Method, and Formation of Second Functional Layer (C)>

The lens substrate (B) for use in the cast method can be the same as that described hereinabove for the lens substrate (B). Not specifically limited, the thickness of the lens substrate (B) is preferably 0.5 to 30 mm.

The polarization functional layer (D) to be described in detail hereinbelow can be buried in the lens substrate (B) or can be laminated on the surface of the lens substrate (B). In the case of laminating it, the layer can be bonded via an adhesive.

In the case of using the cast method, inorganic glass is favorably used as the lens substrate (B). An especially preferred method is as follows. In place of molds, inorganic glass is prepared. One pair of inorganic glass is regarded

as a mold, and a curable composition is injected between the inorganic glass and the inorganic glass to be polymerized and cured, and a laminate of inorganic glass (lens substrate)/first functional layer (A)/inorganic glass (lens substrate) is thereby produced. In that case, the curable composition to form the first functional layer (A) preferably uses an urethane-based monomer for enhancing the adhesiveness to inorganic glass. The first compound can be added to the curable composition containing the photochromic compound. In the case where the first compound is added to the curable composition, the first functional layer (A) serves also as the second functional layer (C).

Apart from the above, the curable composition containing the first compound can be applied to the surface of inorganic glass that is to bond to the first functional layer (A), and/or on the opposite surface thereto, and cured, and the resultant, second functional layer (C)-having inorganic glass can also be used here.

In the case where the polarization functional layer (D) to be described in detail hereinunder is provided, and where the second functional layer (C) exists independently, preferred is a laminate structure of inorganic glass/first functional layer (A)/polarization functional layer (D)/second functional layer (C)/inorganic glass. At that time, in order to exhibit excellent adhesiveness, the polymerizable monomer to form the first functional layer (A) and the second functional layer (C) is preferably a urethane-based monomer. However, not limited thereto, the laminate structure can also have a laminate configuration of, for example, inorganic glass/first functional layer (A)/polarization functional layer (D)/adhesive layer/inorganic glass. At that time, the adhesive layer can be formed of a photocurable acrylic adhesive or a urethane-based monomer. The first compound can be added to the first functional layer (A) and/or the adhesive layer. Examples with inorganic glass are shown hereinabove, but at least one of inorganic glass can be changed to a plastic lens (substrate).

In the case of forming the second functional layer (C) independently, it is preferable that a curable composition containing the first compound is prepared, and applied to the lens substrate (B) to form the second functional layer (C) on the lens substrate (B) by the coating method or the cast polymerization method. At that time, the thickness of the second functional layer (C) is preferably 5 to 1000 μm.

The amount of the first compound to be added to the first functional layer (A), the second functional layer (C) that exists independently, and/or the lens substrate (B) is specifically limited so far as it is used to satisfy the characteristics (1) and (2) (and optionally the characteristic (3)) of the optical article. In particular, in consideration of productivity, it is preferable that the first compound is contained in an amount of 0.01 to 1.0 part by mass relative to 100 parts by mass of the component to form the matrix such as the resin component.

<Preferred Laminate Structure, Thickness/Curvature of Optical Article>

According to the above-mentioned method, a laminate structure having at least the first functional layer (A) and the lens substrate (B) can be formed. In forming the laminate structure using the above-mentioned binder method, coating method or cast polymerization method, the following laminate structure is an embodiment of exhibiting excellent effects with good productivity.

Examples of a preferred laminate structure in the binder method are shown below.

- Optical sheet/first functional layer (A) (serving also as second functional layer (C)/optical sheet/lens substrate (B)
- Optical sheet/first functional layer (A)/second functional layer (C) of backup adhesive layer/lens substrate (B)
- Optical sheet/backup adhesive layer/first functional layer (A)/second functional layer (C) of backup adhesive layer/optical sheet/lens substrate (B)
- Optical sheet/backup adhesive layer/first functional layer (A)/second functional layer (C)/backup adhesive layer/optical sheet/lens substrate (B).

As described above, the first compound can be added to the first functional layer (A) (that is, the first functional layer (A) can serve also as the second functional layer (C).) At that time, the first compound to be used is preferably a tetraazaporphyrin compound having a copper atom. In addition, a stabilizer is preferably added. The stabilizer and the blending amount of the first compound are as described in the section of <Preferred Blending Amount of Stabilizer>.

Also as described above, in the case where both the photochromic compound and the first compound exist in the first functional layer (A), the photochromic performance persistence may lower. Consequently, for the purpose of solving the problem, it is preferable that the second functional layer (C) containing the first compound exists independently. In the case where the second functional layer (C) exists independently, as described above, the first compound can be added to the optical sheet or the lens substrate (B). In the case where the first compound is added to the optical sheet, it is preferable that the compound is added to the optical sheet provided rearward of the side to be irradiated with light. Other embodiments are as follows.

- Optical sheet/backup adhesive layer/first functional layer (A)/backup adhesive layer (or other protective layer)/second

functional layer (C) of backup adhesive layer/optical sheet/lens substrate (B)
- Optical sheet/backup adhesive layer/first functional layer (A)/backup adhesive layer (or other protective layer)/second functional layer (C)/backup adhesive layer/optical sheet/lens substrate (B).

As described above, it is preferable to provide an additional protective layer (this may be a backup adhesive layer) between the first functional layer (A) and the second functional layer (C). The additional protective layer (backup adhesive layer) to be provided is considered to exhibit an effect of preventing the first compound from diffusing from the second functional layer (C) to transfer to the first functional layer (A). Consequently, it is preferable that the protective layer (backup adhesive layer) has good adhesiveness to the other layers and can prevent the transfer of the first compound. Specifically, the layer is a crosslinked resin layer. The thickness of the protective layer (backup adhesive layer) is preferably 10 to 100 μm.

In these layer configurations, the first functional layer (A) plays a role of bonding the sheets or layers provided on both sides. In the above-mentioned exemplifications, the lens substrate (B) is provided separately from the optical sheet, but the part of optical sheet/lens substrate (B) can be regarded as one optical sheet. However, as described above, it is preferable to form the lens substrate (B) formed of the same material on the optical sheet by injection molding thereon.

Preferred examples of the laminate configuration in the coating method and the cast polymerization method are shown below.

- First functional layer (A) (serving also as second functional layer (C)/lens substrate (B)
- First functional layer (A)/second functional layer (C) of primer layer/lens substrate (B)
- First functional layer (A)/independent second functional layer (C)/lens substrate (B).

Also in the preferred laminate structure in the coating method and the cast polymerization method where the first functional layer (A) contains the first compound, the first compound is preferably a tetraazaporphyrin compound having a copper atom, and also preferably, a stabilizer is further added to the first functional layer (A). The blending amount of the compounds to be added is preferably the same as that described in the section of the preferred laminate structure in the binder method.

In addition, it is also preferable that the second functional layer (C) exists independently, and as described in the above, the first compound can be added to the lens substrate (B). Further, like in the binder method, a protective layer (adhesive layer) is preferably provided. The thickness of the protective layer (adhesive layer) in that case is also preferably 10 to 100 μm and the layer is preferably a crosslinked resin layer, for the same reason as that described in the section of the binder method.

<Preferred Form of Resultant Optical Article>

Though not specifically limited, in the optical article of the present invention, the thickness of all the layers including the first functional layer (A) and the lens substrate (B) is preferably 1 to 30 mm. The thickness of the center can differ from the thickness of the peripheral part. Specifically, it is preferable that the thickness of the center is 1 to 30 mm, and the thickness of the peripheral part (round edge) is 1 to 30 mm. At that time, regarding the curvature of the optical article, the curve of the convex face is preferably 0.5 to 10.0, and the base curve of the concave face is preferably 0.5 to 10.0. The present invention can provide a high-quality optical article with little color unevenness, even though the optical article has such a shape.

<Polarization Functional Layer (D), Optical Article with Polarization Functional Layer (D)>

The optical article of the present invention is not specifically limited so far as it has the above-mentioned laminate structure. Further, the polarization functional layer (D) having polarization function can be provided therein. In the case where the polarization functional layer (D) is provided, the first functional layer (A) needs to be provided closer to the side to be irradiated with sunlight than the polarization functional layer (D), so as not to interfere with the photochromic properties. When the polarization functional layer (D) is provided on the side to be irradiated with sunlight, the effect of the photochromic compound cannot be exhibited.

In the present invention, the polarization functional layer (D) is provided for controlling the polarization degree of the optical article. With that, by making the optical article have a specific polarization degree, the anti-glare properties can be improved and the luminous transmittance under no photoirradiation can be increased. In addition, since the luminous transmittance under no photoirradiation can be increased, the contract can be thereby increased.

The polarization functional layer (D) can be one formed by applying a dichroic dye-containing composition to the surface of the substrate. In that case, for example, the composition is applied to the substrate that constitute the

optical article, to form the polarization functional layer (D), and the first functional layer (A) and, as needed, the second functional layer (C) are formed on the polarization functional layer (D).

As the polarization functional layer (A), a polarization film formed by dyeing a stretched polyvinyl alcohol (PVA) film with a dichroic dye (hereinafter this may be referred to simply as polarization film) can be used. In the case of using the polarization film, for example, it can be provided on the surface of the lens substrate (B), or can be buried inside the lens substrate (B). Subsequently, the first functional layer (A) and, as needed, the second functional layer (C) can be formed on the polarization film on the lens substrate (B) or on the lens substrate (B) with the polarization film buried therein.

In the case of using the polarization film, a resin sheet of triacetyl cellulose, polycarbonate or polyamide can be bonded to both surfaces of the polarization film via an adhesive. Further, on the surface of the resin sheet, a coating layer of an acrylic or silane coupling agent can be formed. As the polarization film, usable is one having been processed into a shape having the same curvature as that of the optical article to be obtained finally.

As the dichroic dye to form the polarization functional layer (D), commercially-available dichroic dye can be used with no limitation. For example, azo-type dyes and anthraquinone-type dyes are usable. Specifically, examples of the dye include chlorantine fast red (C.I.28160), Congo red (C.I.22120), brilliant blue B (C.I.24410), benzopurpurine (C.I.23500), chlorazol black BH (C.I.22590), direct blue 2B (C.I.22610), diamine green (C.I.30295), chrysophenine (C.I.24895), sirius yellow (C.I.29000), direct fast red (C.I.23630), acid black (C.I.20470), direct sky blue (C.I.24400), solophenyl blue 4GL (C.I.34200), direct copper blue 2B (C.I.24185), and Nippon brilliant violet BKconc (C.I.27885). Among these dichroic dyes, two or more dyes can be selected and used in accordance with the intended object. In the parentheses, shown are Color Index Nos. described in "New Edition Dye Handbook" edited by Organic Synthesis Association (by Maruzen Co., Ltd., 1970).

The polarization functional layer (D) having the constitution as above is prepared. The polarization functional layer (D) is preferably one capable of making the resultant optical article have a polarization degree of 10 to 99.9%, more preferably 30 to 99.5%, even more preferably 50 to 99.5%.

The polarization degree of the polarization functional layer (D) is, from the viewpoint that the initial luminous transmittance of the optical article can be on a certain level or more, preferably 10 to 99.5%, more preferably 20 to 99.0%.

In the case where a polarization film is used as the polarization functional layer (D), first, the polarization degree of the polarization film is examined. With that, the polarization degree of the optical article to be obtained finally is measured, and the polarization degree of the optical article is confirmed to fall within a range of 10 to 99.9%. In the case where the polarization functional layer (D) is formed using a composition containing a dichroic dye. first, the relationship between the formation condition for the polarization functional layer (D) and the polarization degree of the resultant optical article is examined. With that, the polarization degree of the optical article is controlled to fall within a range of 10 to 99.9%. The polarization degree of the optical article depends mainly on the polarization functional layer (D). Consequently, it is considered that the degree of polarization of the polarization functional layer (D) formed of a dichroic dye-containing composition can be the same value as the polarization degree of the optical article.

The thickness of the polarization functional layer (D) can be appropriately determined in accordance with the luminous transmittance under photoirradiation or under no photoirradiation of the resultant optical article. Specifically, the thickness is preferably 10 to 100 μm.

Preferred laminate configurations of the case having the polarization functional layer (D) are as described below.

Examples of the preferred laminate configuration in the binder method are shown below.

• Optical sheet/first functional layer (A) (serving also as second functional layer (C))/polarization functional layer (D)/backup adhesive layer/optical sheet/lens substrate (B),

- Optical sheet/first functional layer (A)/polarization functional layer (D)/second functional layer (C) of backup adhesive layer/optical sheet/lens substrate (B),
- Optical sheet/backup adhesive layer/first functional layer (A)/polarization functional layer (D)/second functional layer (C) of backup adhesive layer/optical sheet/lens substrate (B),
- Optical sheet/backup adhesive layer/first functional layer (A)/polarization functional layer (D)/backup adhesive layer/second functional layer (C) of backup adhesive layer/optical sheet/lens substrate (B).

Optical sheet/backup adhesive layer/first functional layer (A)/polarization functional layer (D)/second functional layer (C) of backup adhesive layer/backup adhesive layer/optical sheet/lens substrate (B).

In these layer configurations, the first functional layer (A) plays a role of bonding the sheets or layers provided on both sides. In the above-mentioned exemplifications, the lens substrate (B) and the optical sheet are described independently, but the part of optical sheet/lens substrate (B) can be regarded as one optical sheet. However, as described above, it is preferable to form the lens substrate (B) formed of the same material on the optical sheet by injection molding thereon.

Among the above-mentioned configurations, a laminate configuration shown in Fig. 2 is preferred. Specifically, a photochromic laminate 6' with a polarization functional layer, which is composed of optical sheet 1/backup adhesive

layer 2/first functional layer (A) 3/polarization functional layer (D) 4/second functional layer (C) 5 formed of backup adhesive layer/backup adhesive layer 2'/optical sheet 1', is prepared. Next, on the optical sheet 1' of the photochromic laminate 6', a lens substrate (B) 7 is formed to produce an optical article 8' with polarization function. The thickness of the second functional layer (C) 5 formed of a backup adhesive layer can be different from or can be the same as the thickness of the backup adhesive layer 2'.

In the case where the polarization functional layer (D) is provided and the first functional layer (A) serves also as the second functional layer (C), it is preferable that a copper atom-having tetraazaporphyrin compound is used for the first functional layer (A) and further a stabilizer is added thereto, like in the case where the polarization functional layer (D) is not provided. The blending amount of these components is preferably the same as the blending amount in the case where the polarization functional layer (D) is not provided, as described hereinabove.

Also consequently, it is favorable that the second functional layer (C) containing the first compound exists independently. The case where the second functional layer (C) exists independently is as described above, or the first compound can be added to the optical sheet or the lens substrate (B) in that case. In the case where the first compound is added to the optical sheet, it is preferable that the compound is added to the optical sheet provided rearward of the side on which light irradiated.

Regarding the others, also like in the above, it is desirable that the first functional layer (A) and the second functional layer (C) are bonded via a protective layer (backup adhesive layer). Among these, in the case where the polarization functional layer (D) is provided, it is preferable that the first functional layer (A) and the second functional layer (C) are boned via the polarization functional layer (D). Namely, in consideration of productivity of the optical article itself, the layers are preferably provided in the order of first functional layer (A)/polarization functional layer (D)/second functional layer (C). Naturally, a backup adhesive layer can exist between the layers. Also in consideration of photochromic properties, the layers are preferably provided in the order of, from the side to be irradiated with sunlight, first polarization layer (A)/polarization functional layer (D)/second functional layer (C).

Examples of preferred laminate configurations in the coating method and the case polymerization method are as follows.

- First functional layer (A) (serving also second functional layer (C))/polarization functional layer (D)/adhesive layer layer of adhesive chemical/lens substrate (B),
- First functional layer (A)/polarization functional layer (D)/second functional layer (C) formed of bonding layer/optionally primer layer/lens substrate (B),
- First functional layer (A)/polarization functional layer (D)/bonding layer/second bonding layer (C) formed of primer layer/lens substrate (B),
- First functional layer (A) (serving also as second functional layer (C)/lens substrate (B) (having polarization function),
- First functional layer (A)/independent second functional layer (C)/lens substrate (B) (having polarization function).

Even when the polarization functional layer (D) is provided in the coating method and the cast polymerization method in the case where the first functional layer (A) contains the first compound, the first compound is preferably a copper atom-having tetraazaporphyrin compound, and a stabilizer is preferably added to the first functional layer (A). The blending amount of these components is preferably the same as the blending amount in the preferred laminate configurations in the binder method described hereinabove

Regarding the others, it is also preferable that the second functional layer (C) exists independently, and as in the above-mentioned configurations, the first compound can be added to the lens substrate (B). Further, also like in the binder method, a protective layer (adhesive layer) is preferably provided. In that case, also because of the same reason as that described for the binder method, the thickness of the protective layer (adhesive layer) is preferably 10 to 100 μm and the layer is preferably a crosslinked resin layer. Further, in the case of the above-mentioned configuration where the polarization functional layer (D) is provided, the first functional layer (A) and the second functional layer (C) are preferably bonded via the polarization functional layer (D), like in the binder method described hereinabove. With that, the first functional layer (A) is arranged on the side to be irradiated with sunlight.

The laminate configuration can be as mentioned above. However, even in the case where the polarization functional layer (D) is provided, the optical article of the present invention satisfies the above-mentioned characteristics (1) and (2) (and optionally the characteristic (3)).

In the optical article of the present invention even where the polarization functional layer (D) is provided therein, the total thickness of all the layers is preferably 1 to 30 mm. The thickness of the center can differ from the thickness of the peripheral part. Specifically, it is preferable that the thickness of the center is 1 to 30 mm, and the thickness of the peripheral part (round edge) is 1 to 30 mm. At that time, regarding the curvature of the optical article, the curve of the convex face is preferably 0.5 to 10.0, and the base curve of the concave face is preferably 0.5 to 10.0. The present invention can provide a high-quality optical article with little color unevenness, even though the optical article has such a shape.

<Improvement of Anti-glare Properties: improvement of anti-glare properties in the case where the polarization functional layer (D) is provided>

The optical article of the present invention where the polarization functional layer (D) is provided therein satisfies the above-mentioned characteristics, and additionally can be the following embodiment. Specifically, as the photochromic compound, the above-mentioned photochromic compound (b) can be sued. In addition, a dye can be added to the optical article. Having such embodiments, there can be provided an optical article that is brown under no photoirradiation and is gray under photoirradiation. With that, the optical article can have enhanced anti-glare properties even indoors.

The dye to be used includes anthraquinone compounds, azo compounds, quinonaphthalone compounds, anthraquinone compounds, perinone compounds, quinoline compounds, methine compounds, and bromoanthraquinone compounds. Above all, anthraquinone compounds, perinone compounds and quinoline compounds are preferred.

Examples of anthraquinone dyes include those commercially available as Color Indices of Solvent Red 52, Solvent Red 111, Solvent Red 149, Solvent Red 150, Solvent Red 151, Solvent Red 168, Solvent Red 191, Solvent Red 207, Disperse Red 22, and Disperse Red 60.

Examples of perinone dyes include those commercially available as Color Indices of Solvent Orange 60, Solvent Orange 78, Solvent Orange 90, Solvent Red 135, Solvent Red 162, and Solvent Red 17.

Examples of quinoline dyes include those commercially available as Color Indices of Solvent Yellow 33, Solvent Yellow 98, Solvent Yellow 157, Disperse Yellow 54, and Disperse Yellow 160.

The layer to which the dye is added is not specifically limited. The dye can be added to the lens substrate, or can be added to the optical sheet. In particular, for maintaining high transparency with good dispersibility, the dye is preferably added to the first functional layer and/or the second functional layer. The blending amount is not specifically limited so far as the above-mentioned characteristics of the optical article can be satisfied. Specifically, it is preferable to add the dye in an amount of 5 to 25 parts by mass or so relative to 100 parts by mass of the photochromic compound.

<Other Treatments>

The present invention can provide the optical article having the above-mentioned layer configuration. In addition to the above-mentioned laminate configuration in accordance with the intended use, the optical article of the present invention can be further processed for post treatments such as formation of a hard coat film using a hard coating agent that contains, as the main ingredients, a silane coupling agent and a sol of silicon, zirconium, antimony, aluminum, tin or tungsten, or formation of a thin film vapor deposition of a metal oxide such as $SiO_2$, $TiO_2$, or $ZrO_2$, or coating with a thin film of an organic polymer for antireflection treatment, antistatic treatment, soil-resistant treatment or anti-fogging treatment. In addition for enhancing design performance, the surface of the optical article can be modified in an known method, for example, according to a method of dip dyeing or sublimation dyeing. In particular, for enhancing design performance to maintain transmittance, the optical article can be modified to have a gradation region where the color changes gradually.

<Formation of Gradation Region>

The optical article of the present invention can have a gradation region where the color gradually changes, so far as it satisfies the above-mentioned characteristics of (1) luminous transmittance and (2) minimum transmittance at a wavelength of 550 to 600 nm under photoirradiation. Further, in addition to the characteristics (1) and (2), the optical articles can satisfy the other characteristic (3) and the characteristic of <contrast> mentioned above, and can have the gradation region.

The method for forming the gradation region includes a sublimation dyeing method and dipping method.

For the sublimation dyeing method, JP 2005-099842A can be referred to. For the dipping method, JP 03-072978A, and JP 2004-036032A can be referred to.

The gradation region can be formed in a part of the optical article with no specific limitation. For example, the gradation region is not limited to exist in the outermost surface of the optical article. For example, the gradation region can be formed in the surface part of each layer of the laminate configuration to form the optical article. The gradation region can be previously provided in the material to form each layer. For example, when the binder method to be mentioned in detail hereinunder is used, the gradation region can be formed in the surface of the first optical sheet. However, for satisfying the characteristics, it is preferable that the gradation region is formed in the outermost surface of the optical article having the laminate configuration according to the above-mentioned method.

Even through processed for these other treatments, the optical article of the present invention still satisfies the above-mentioned characteristics (1) and (2) (and optionally the characteristic (3)).

<Other Additives>

Per-se known various ingredients, for example, various stabilizers and additives such as a release agent, a UV absorbent, an IR absorbent, a UV stabilizer, an antioxidant, a discoloration inhibitor, an antistatic agent, a fluorescent dye and a fragrance can be added to the optical article of the present invention within a range not detracting from the advantageous effects of the present invention. These additives can be contained in any part of the laminate configuration. Namely, the additives can be made to be contained in any of the first functional layer (A), the lens substrate (B), and the other optional layers of the second functional layer (C), the polarization functional layer (D), the primer layer, the adhesive layer and the backup adhesive resin layer. Regarding the stabilizer, as mentioned above, it is preferably contained in the first functional layer (A).

As obvious from the above description, the optical article of the present invention can be used as spectacle lenses. Consequently, the industrial applicability of the spectacles with the spectacle lenses of the optical article of the present invention is high.

Examples

Next, the present invention is described in detail with reference to Examples, but the present invention is not limited by these Examples. The compounds used in the present Examples are as follows.

<Photochromic Compound (a)>

PC1: Compound shown by the following formula (the absorbance of 1 mmol/l toluene solution thereof, as measured using a quartz cell having an optical length of 10 mm, is 0.005 at a wavelength of 420 nm, and 0.003 at a wavelength of 430 nm).

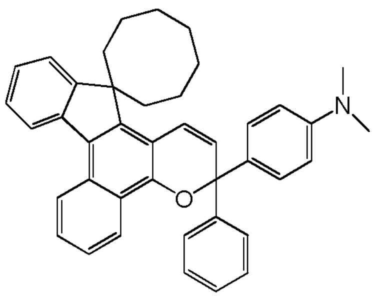

PC1

PC2: Compound shown by the following formula (the absorbance of 1 mmol/l toluene solution thereof, as measured using a quartz cell having an optical length of 10 mm, is 0.075 at a wavelength of 420 nm, and 0.008 at a wavelength of 430 nm).

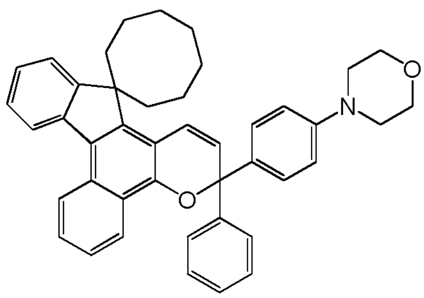

PC2

PC3: Compound shown by the following formula (the absorbance of 1 mmol/l toluene solution thereof, as measured using a quartz cell having an optical length of 10 mm, is 0.094 at a wavelength of 420 nm, and 0.012 at a wavelength of 430 nm).

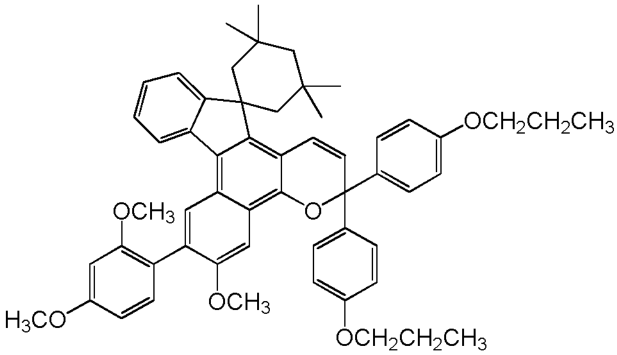

PC3

<Photochromic Compound (b)>

PC4: Compound shown by the following formula (the absorbance of 1 mmol/l toluene solution thereof, as measured using a quartz cell having an optical length of 10 mm, is 0.512 at a wavelength of 420 nm, and 0.112 at a wavelength of 430 nm).

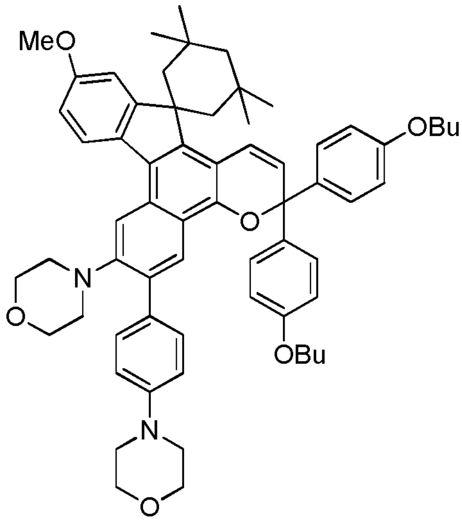

PC4

PC5: Compound shown by the following formula (the absorbance of 1 mmol/l toluene solution thereof, as measured using a quartz cell having an optical length of 10 mm, is 0.325 at a wavelength of 420 nm, and 0.056 at a wavelength of 430 nm).

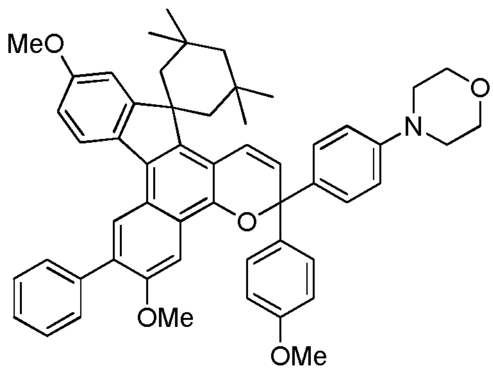

PC5

<Frist Compound having absorption peak in range of 550 to 600 nm>

Dye 1: Tetraazaporphyrin compound (FDG-006, by Yamada Chemical Co., Ltd.). As a result of measurement in chloroform, the absorption peak (maximum absorption wavelength) thereof was 585 nm, and the absorption intensity at 585 nm was $0.7\times10^5$ ml/g cm. The central metal atom the compound is palladium (Pd).
Dye 2: Tetraazaporphyrin compound (FDG-005, by Yamada Chemical Co., Ltd.). As a result of measurement in chloroform, the absorption peak (maximum absorption wavelength) thereof was 583 nm, and the absorption intensity at 583 nm was $1.4\times10^5$ ml/g cm. The central metal atom the compound is palladium (Pd).
Dye 3: Tetraazaporphyrin compound (FDG-007, by Yamada Chemical Co., Ltd.). As a result of measurement in chloroform, the absorption peak (maximum absorption wavelength) thereof was 594 nm, and the absorption intensity at 594 nm was $1.5\times10^5$ ml/g·cm. The central metal atom the compound is copper (Cu).

<Polarization Functional Layer: polarization sheet>

- PS1: Polyvinyl alcohol polarization film containing a dichroic dye, having a luminous transmittance of 44% and a polarization degree of 94.4%, and having a gray color tone (thickness 27 μm).
- PS2: Polyvinyl alcohol polarization film containing a dichroic dye, having a luminous transmittance of 48% and a polarization degree of 86.4%, and having a gray color tone (thickness 27 μm).
- PS3: Polyvinyl alcohol polarization film containing a dichroic dye, having a luminous transmittance of 53% and a polarization degree of 64.7%, and having a gray color tone (thickness 27 μm).
- PS4: Polyvinyl alcohol polarization film containing a dichroic dye, having a luminous transmittance of 68% and a polarization degree of 29.9%, and having a gray color tone (thickness 27 μm).
- PS5: Polyvinyl alcohol polarization film containing a dichroic dye, having a luminous transmittance of 37% and a polarization degree of 99.5%, and having a gray color tone (thickness 27 μm).

<Example 1>

Binder Method/first functional layer containing photochromic compound and first compound

(1) Adjustment of adhesive resin for use in the binder method; production of polyurethane urea resin to be adhesive resin

A 5-liter separable flask (four-neck) equipped with a stirring blade, a condenser tube, a thermometer and a nitrogen gas introduction pipe was prepared. 885 parts by mass of polycarbonate diol having a number-average molecular weight of 800, 350 parts by mass of isophorone diisocyanate and 250 parts by mass of toluene were put into the flask, and reacted therein in a nitrogen atmosphere at 100°C for 7 hours to synthesize a urethane prepolymer having an isocyanate group at the terminal. After the urethane prepolymer reaction, the reaction liquid was cooled down to around 0°C, then dissolved in 715 parts by mass of isopropyl alcohol and 1335 parts by mass of diethyl ketone, and thereafter the liquid temperature thereof was kept at 0°C. Next, a mixture solution of 85 parts by mass of a chain extender, bis(4-aminocyclohexyl)methane and 70 parts by mass of diethyl ketone was dropwise added thereto within a period of 30 minutes, and then reacted at 0°C for 1 hour. Subsequently, 20 parts by mass of 1,2,2,6,6-pentamethyl-4-aminopiperidine was dropwise added, and reacted at 0°C for 1 hour to give a diethyl ketone solution of a polyurethane urea resin. The solid concentration (polyurethane urea resin concentration) in the resultant polyurethane urea solution was 36.8% by mass.

(2) Preparation of adhesive composition 1 containing photochromic compound

500 parts by mass of the polyurethane urea resin solution obtained in the above (1), 3.1 parts by mass of the photochromic compound (PC1/PC2/PC3 = 0.53 parts by mass/0.35 parts by mass/2.2 parts by mass), 0.16 parts by mass of the first compound (Dye 1) having an absorption peak at 550 to 600 nm, and 24 parts by mass of an isomer mixture of 4,4'-methylenebis(cyclohexyl isocyanate), to which 2.1 parts by mass of an antioxidant (hindered phenol antioxidant), ethylenebis(oxyethylene)bis[3-(5-tert-butyl-4-hydroxy-m-tolyl)propionate] and 0.2 parts by mass of a surfactant, "DOW CORNING TORAY L-7001" were added, were stirred and mixed at room temperature to give a photochromic compound-containing adhesive composition 1 for a binder method. Since the adhesive composition 1 contains the photochromic compound and the first compound, the layer formed of the adhesive composition 1 is a layer serving

as both the first functional layer and the second functional layer.

(3) Adjustment of resin for backup adhesive layer on optical sheet: production of polyurethane urea resin to form backup adhesive layer

A 5-liter separable flask (four-neck) equipped with a stirring blade, a condenser tube, a thermometer and a nitrogen gas introduction pipe was prepared. 400 parts by mass of polycarbonate diol having a number-average molecular weight of 1000, 175 parts by mass of isophorone diisocyanate and 120 parts by mass of toluene were put into the flask, and reacted therein in a nitrogen atmosphere at 110 for 7 hours to synthesize a urethane prepolymer having an isocyanate group at the terminal. After the urethane prepolymer reaction, the reaction liquid was cooled down to around 20°C, then dissolved in 2500 parts by mass of propylene glycol monomethyl ether, and thereafter the liquid temperature thereof was kept at 20°C. Next, 60 parts by mass of a chain extender, isophoronediamine was dropwise added thereto, and then reacted at 20°C for 1 hour. Subsequently, 3 parts by mass of n-butylamine was dropwise added, and reacted at 20°C for 1 hour to give a propylene glycol monomethyl ether solution of a polyurethane urea resin.

(4) Preparation of adhesive agent 1 for backup adhesive layer for forming backup adhesive layer on optical sheet

0.2 parts by mass of a surfactant, DOW CORNING TORAYL-7001 was added to 500 parts by mass of the polyurethane urea resin solution obtained in the above (3), and stirred and mixed at room temperature to give an adhesive 1 for backup adhesive layer.

<Production 1 of photochromic optical article using binder method>

(5) Adjustment of photochromic laminate before provision of lens substrate

Using a coater (by Tester Sangyo Co., Ltd.), the adhesive agent 1 for backup adhesive layer obtained in (4) was applied onto a polycarbonate sheet (first, second optical sheet) having a thickness of 300 μm, at a coating speed of 0.5 m/min. Next, this was dried at a drying temperature of 110°C for 3 minutes to give a polycarbonate sheet having a backup adhesive layer with a thickness of 10 μm.

Next, using a coater (Tester Sangyo Co., Ltd.), the photochromic compound-containing adhesive composition 1 obtained in (2) was applied onto a PET (polyethylene terephthalate) film (Pulex Film by Teijin DuPont Film Corporation, with silicone coating film) having a thickness of 50 μm at a coating speed of 0.3 m/min, and dried at a drying temperature of 100°C for 5 minutes to form a functional layer sheet on PET. The side of the functional layer sheet (photochromic layer (thickness 40 μm); finally to be a first functional layer/second functional layer) was arranged on the backup adhesive layer of the backup adhesive layer-having first optical sheet obtained in the above (5), and these were bonded together.

Further, the PET film was peeled off from the laminate of the first optical sheet/backup adhesive layer/functional layer sheet (photochromic layer; finally the first functional layer)/PET film laminated in that order (to prepare a structure). The resultant structure was bonded to the backup adhesive layer-having polycarbonate sheet (second optical sheet) in the following manner. Namely, the two were bonded in such a manner that the functional layer sheet (photochromic layer; finally the first functional layer/second functional layer) and the polycarbonate sheet could bond to the backup adhesive layer on the polycarbonate sheet (second optical sheet). Next, the resultant laminate was statically kept at 40°C in vacuum for 24 hours, then heat-treated at 110°C for 60 minutes, next wet heat-treated at 60°C and 100% RH for 24 hours, and finally kept at 40°C in vacuum for 24 hours to give a photochromic laminate.

<Circular processing of photochromic laminate>

A two-layer (total thickness 80 μm) protective film of a polyethylene layer and a polypropylene layer was stuck to both surfaces of the resultant photochromic laminate to give a protective film laminate. Using a Thomson blade (double-edged, blade edge angle 42°), the protective film laminate was cut to give a ϕ80-mm circular laminate. The resultant ϕ80-mm circular laminate was bent to have a spherical shape by reduced-pressure suction processing (thermal bending) thereby giving a circular laminate with 6.0 curve. The reduced-pressure suction processing was as follows. A concave 6.0-cure mold with the circular laminate housed therein was set in an atmosphere at 145°C, and from one hole made through the concave mold, vacuum suction was performed by a vacuum pump. The processing time was about 2 minutes, and after the treatment, the laminate was released from the mold to give a circular laminate processed to have a spherical shape at 6.0 curve. The protective films existing on both surfaces of the resultant 6.0-curve circular laminate were peeled off to give a circular photochromic laminate (photochromic laminate 6 in Fig. 1), by the binder method.

(6) Production 1 of photochromic optical laminate

(Formation of lens substrate/integration of lens substrate)

The circular photochromic laminate by the binder method obtained in the above (5) and a polycarbonate resin were integrated to give a photochromic optical article. Specifically, first, the circular photochromic laminate obtained in the above (5) was set on the concave surface of a mold of an injection molding machine, and heated at 100°C. Pellets of a polycarbonate resin (Panlite by Teijin Chemicals, Ltd.), preheated at 120°C for 5 hours, were filled into the injection molding machine, them melted under heat at 300°C and 60 rpm, and at an injection pressure of 14000 N/$cm^2$, this was injected toward the circular photochromic laminate. In that manner, there was produced a photochromic optical article (center thickness 3 mm, edge thickness 10 mm) in which the lens substrate of polycarbonate resin was integrated with the photochromic laminate.

The resultant photochromic optical article has a laminate structure shown in Fig. 1.

Specifically;
there was obtained a photochromic optical article 8 of:
first optical sheet 1 (thickness 300 μm)/backup adhesive layer 2 of adhesive agent 1 for backup adhesive layer (thickness 10 μm)/first functional layer 3 of adhesive composition 1 (thickness 40 μm, containing photochromic compound and first compound, and serving also as second functional layer)/backup adhesive layer 2' of adhesive agent 1 for backup adhesive layer (thickness 10 μm)/second optical sheet 1' (thickness 300 μm)/lens substrate 7 of polycarbonate resin, laminated in that order.

In that case, the first functional layer 3 serves also as the second functional layer. The resultant photochromic optical article had 6.0 curve (convex face) and 8.0 curve (concave face).

The resultant photochromic optical article had the following physical properties. The luminous transmittance before coloration was 66.5%. The absorbance at 420 nm was 0.15. The minimum transmittance at 550 to 600 nm was 44.8%. The luminous transmittance during coloration as photochromic properties after UV irradiation was 17.5%. The minimum transmittance at 550 to 600 nm was 9.0%. The fading half-life was 42 seconds.

The resultant photochromic optical article had no color unevenness any time before coloration and during coloration (the thickness of the first functional layer was 40 μm and no color unevenness was confirmed during coloration). The photochromic properties including the luminous transmittance before coloration, the absorbance at 420 nm, the minimum transmittance at 550 to 600 nm, the luminous transmittance during coloration and the fading rate, as well as the visibility (indoors), anti-glare properties (outdoors), contrast performance (outdoors), color unevenness and initial coloration were evaluated according to the following methods. The evaluation results are shown in Table 1.

<Luminous transmittance before coloration, absorbance at 420 nm and minimum transmittance at 550 to 600 nm of photochromic optical article>

Regarding the photochromic optical article obtained in the present invention, the visual transmittance in the state of no coloration of the photochromic compound therein (initial luminous transmittance), the absorbance at 420 nm, and the minimum transmittance at 550 to 600 nm thereof were measured at a measurement temperature of 23°C, using a UV/VIS spectral photometer (Model; UV-2500, by Shimadzu Corporation). "Luminous transmittance" can be measured in accordance with ISO8980-3.

<Evaluation of photochromic properties>

The resultant photochromic optical article was tested as a sample. Using an irradiation light source of a xenon lamp L-2480(300W)SHL-100 by Hamamatsu Photonics Corporation via an air-mass filer having an illuminance of 50000 lux at the sample and having and an irradiance value defined in ISO8980-3, the optical article of the sample was irradiated for 900 seconds on the surface thereof at 23°C±1°C, and the photochromic properties of the optical article were measured. The photochromic properties were evaluated according to the following methods.

1) Luminous transmittance in the state where the photochromic compound has colored: Using a spectral photometer by Otsuka Electronics Co., Ltd. (Instantaneous Multichannel Photodetector MCPD1000), the optical article was irradiated with the above-mentioned light (the light having an illuminance of 50000 lux at the sample and having and an irradiance value defined in ISO8980-3) at 23°C for 900 seconds, and then the spectral transmittance was measured to calculate the luminous transmittance in coloration, based on ISO8980-3.

The luminous transmittance in the state where the photochromic compound has colored is expressed as "luminous transmittance in coloration" or "luminance transmittance under photoirradiation" in the tables.

2) Minimum transmittance at a wavelength of 550 to 600 nm in the state where the photochromic compound has colored: Using a spectral photometer by Otsuka Electronics Co., Ltd. (Instantaneous Multichannel Photodetector MCPD1000), the optical article was irradiated with the above-mentioned light (the light having an illuminance of 50000 lux at the sample and having and an irradiance value defined in ISO8980-3) at 23°C for 900 seconds, and the minimum transmittance at a wavelength of 550 to 600 nm was measured. The minimum transmittance at a wavelength of 550 to 600 nm in the state where the photochromic compound has colored is expressed as "minimum transmittance under photoirradiation" in the tables.

3)Fading rate [1/2(sec)]: First, using a spectral photometer by Otsuka Electronics Co., Ltd. (Instantaneous Multichannel Photodetector MCPD1000), the maximum absorption wavelength after coloration was measured. Next, a difference between the absorbance after irradiation for 900 seconds at the maximum absorption wavelength ε(900) and the absorbance under no photoirradiation at the maximum absorption wavelength ε(0), [ε(900)-ε(0)] was determined, and when photoirradiation was stopped after irradiation for 900 seconds, the time needed for reduction of the absorbance of the sample at the maximum wavelength to 1/2 of [ε(900)-ε(0)] (fading rate) was calculated. A shorter time means more excellent photochromic properties.

<Evaluation of visibility (indoors), anti-glare properties (outdoors), contrast performance (outdoors)>

Spectacle lenes of the photochromic optical article formed according to the above-mentioned method were produced. Regarding the visibility indoors, the samples were tested indoors at 10:00 to 15:00 in April (in Japan). Indoors, 10 subjects wore the spectacles, and the number of the panelists who said to have felt that the visibility was higher when they wore the spectacles than when they did not wear was counted.

The anti-glare properties outdoors were evaluated according to the following method. The anti-glare properties were evaluated outdoors at 10:00 to 15:00 in April (in Japan). Outdoors, 10 subjects wore the spectacles, and the number of the panelists who said to have felt that the anti-glare properties were better (not glaring) when they wore the spectacles than when they did not wear was counted.

The contrast outdoors was evaluated according to the following method. The contrast was evaluated outdoors at 10:00 to 15:00 in April (in Japan). Outdoors, 10 subjects wore the spectacles, and the number of the subjects who said that the red, green and blue contrast was higher, and the traffic signs (e.g., white lines) and the outlines of trees and buildings were clearer, and the objects can be recognized more clearly (the contrast was higher) when they wore the spectacles than when they did not wear was counted.

<Color Unevenness, and initial coloration>

The resultant photochromic optical article was arranged on a white or transparent plate, and evaluated as to whether or not the color tone and the density before coloration were seen uniform with no color unevenness on the entire surface of the photochromic optical article. The evaluation was carried out by visual confirmation (presence of absence of unevenness was evaluated). Further, the initial coloration (especially color tone; violet to blue relating to 550 to 600 nm) was evaluated by visual observation. The initial coloration was checked visually by 10 subjects. The number of the panelists who felt no problem in point of coloration of the photochromic optical article was counted.

In addition, the photochromic optical article was arranged on a white or transparent plate, then exposed to sunlight, and thereafter evaluated as to whether or not the color tone and the density in coloration of the photochromic optical article were seen uniform with no color unevenness on the entire surface of the photochromic optical article. The evaluation was carried out by visual confirmation (presence of absence of unevenness was evaluated).

<Contrast evaluation by hyperspectral camera (R1/R2)>

A hyperspectral camera, PIKA Outdoor Measurement System, by RESONON Corporation was used. The reflectance standard of the hyperspectral camera (reflectance 100%) was calibrated using Spectralon (registered trademark).

Specifically, the photographing was carried out outdoors at 10:00 to 15:00 in June (in Japan) when the photochromic compound could fully color. A blue film such that the color hue in the color space CIE1976(L*,a*,b*) measured with a chromometer (Color Meter SM-T45, by Suga Test Instruments Co., Ltd.) satisfies L* of 69, a* of -42, and b* of -34; and a yellow film satisfying L* of 81, a* of 0, and b* of 85 were prepared. The blue film or the yellow film was stuck to the Spectralon (registered trademark), and this was photographed with the hyperspectral camera via the optical article to provide hyperspectral data. From the resultant hyperspectral data, the average reflectance spectrum of the blue film

and the average reflectance spectrum of the yellow film were obtained.

From the reflectance spectrum of the blue film, the average reflectance (R1) at a wavelength of 420 to 519 nm (accurately, a wavelength of 420.39 to 519.15 nm) was measured. From the reflectance spectrum of the yellow film, the average reflectance (R2) at a wavelength of 580 to 595 nm (accurately, a wavelength of 580.03 to 594.63 nm) was measured. From the values, a ratio of R1 to R2 (R1/R2) was calculated.

The above-mentioned various measurement results, and the layer configuration, and the contrast evaluation results are summarized in Tables 1 and 2.

<Examples 2 to 9, Comparative Examples 1 and 2>

Photochromic optical articles were produced according to the same method as in Example 1 except that the photochromic compound shown in Table 1 and the first compound having an absorption peak at 550 to 600 nm were used, and the properties of the resultant photochromic optical articles (binder-method products) were evaluated. The results are shown in Table 1. An antioxidant (hindered phenol-type antioxidant), ethylenebis(oxyethylene)bis[3-(5-tert-butyl-4-hydroxy-m-tolyl)propionate] was added to the optical products, and the amount thereof was the same as in the first functional layer in Example 1.

<Example 10>

Production Example for photochromic optical article with the first compound (Dye 1) added to the backup adhesive layer 2' in Fig. 1, using binder method

(7) Preparation of adhesive composition 2 containing photochromic compound

500 parts by mass of the polyurethane urea resin solution obtained in the above (1), 3.1 parts by mass of the photochromic compound (PC1/PC2/PC3 = 0.53 parts by mass/0.35 parts by mass/2.2 parts by mass), and 24 parts by mass of an isomer mixture of 4,4'-methylenebis(cyclohexyl isocyanate), to which 2.1 parts by mass of an antioxidant (hindered phenol-type antioxidant), ethylenebis(oxyethylene)bis[3-(5-tert-butyl-4-hydroxy-m-tolyl)propionate] and 0.2 parts by mass of a surfactant, "DOW CORNING TORAY L-7001" were added, were stirred and mixed at room temperature to give a photochromic compound-containing adhesive composition 2 for a binder method. The adhesive composition 2 containing photochromic compound is the same as the adhesive composition 1 except that it does not contain the first compound.

(8) Preparation of adhesive agent 2 for backup adhesive layer

0.23 parts by mass of the first compound (Dye 1) having an absorption peak at 550 to 600 nm and 0.2 parts by mass of a surfactant, "DOW CORNING TORAYL-7001" were added to 500 parts by mass of the polyurethane urea resin solution obtained in the above (3), and stirred and mixed at room temperature to prepare an adhesive agent 2 for backup adhesive layer. The adhesive agent 2 for backup adhesive layer is the same as the adhesive agent 1 for backup adhesive layer, except that it contains the first compound. The backup adhesive layer of the adhesive agent 2 for backup adhesive layer is to be a layer corresponding to the second functional layer.

<Production 2 of photochromic optical article using binder method>

(9) Adjustment of photochromic laminate before provision of lens substrate

Using a coater (by Tester Sangyo Co., Ltd.), the adhesive agent 1 for backup adhesive layer obtained in the above (4) was applied onto a polycarbonate sheet (first optical sheet) having a thickness of 300 μm, at a coating speed of 0.5 m/min. Next, this was dried at a drying temperature of 110°C for 3 minutes to give a polycarbonate sheet having a backup adhesive layer with a thickness of 10 μm.

Separately, using a coater (Tester Sangyo Co., Ltd.), the adhesive agent 2 for backup adhesive layer obtained in the above (8) was applied onto a polycarbonate sheet (second optical sheet) having a thickness of 300 μm at a coating speed of 0.5 m/min. Next, this was dried at a drying temperature of 110°C for 3 minutes to produce a polycarbonate sheet having a backup adhesive layer (second functional layer) with a thickness of 10 μm.

Next, using a coater (Tester Sangyo Co., Ltd.), the photochromic compound-containing adhesive composition 2 obtained in the above (7) was applied onto a PET (polyethylene terephthalate) film (Pulex Film by Teijin DuPont Film Corporation, with silicone coating film) having a thickness of 50 μm at a coating speed of 0.3 m/min. Next, this was dried at a drying temperature of 100°C for 5 minutes to form a functional layer sheet on PET. The side of the functional layer

sheet (photochromic layer (thickness 40 μm), finally to be a first functional layer) formed on PET was arranged on the backup adhesive layer of the backup adhesive layer-having first optical sheet, and these were bonded together.

Further, the PET film was peeled off from the laminate of the first optical sheet/backup adhesive layer/functional layer sheet (photochromic layer; finally the first functional layer)/PET film laminated in that order (to prepare a structure). The resultant structure was bonded to the polycarbonate (second optical sheet) having the first compound-containing backup adhesive layer (finally to be the second functional layer) in the following manner. Namely, the two were bonded in such a manner that the functional layer sheet (photochromic layer; finally the first functional layer) and the polycarbonate sheet could bond to the backup adhesive layer (finally the second functional layer) on the polycarbonate sheet (the second optical sheet). The resultant laminate was statically kept at 40°C in vacuum for 24 hours, then heat-treated at 110°C for 60 minutes, next wet heat-treated at 60°C and 100% RH for 24 hours, and finally kept at 40°C in vacuum for 24 hours to give a photochromic laminate.

<Circular processing of photochromic laminate>

According to the same method as in Example 1, the photochromic laminate obtained in the above method was circular-processed to give a circular photochromic laminate.

<Lamination with lens substrate>

Next, the resultant circular photochromic laminate and a polycarbonate resin were integrated according to the same method as in the above (6) to produce a photochromic optical article (center thickness 3 mm, edge thickness 10 mm). The resultant photochromic optical article is a laminate photochromic optical article of first optical sheet (thickness 300 μm)/backup adhesive layer of adhesive 1 for backup adhesive layer (thickness 10 μm)/first functional layer of adhesive composition 2 (thickness 40 μm, containing photochromic compound)/second functional layer of adhesive agent 2 for backup adhesive layer (thickness 10 μm, first compound-containing backup adhesive layer)/second optical sheet (thickness 300 μm)/lens substrate of polycarbonate resin, laminated in that order. The resultant photochromic optical article had 6.0 curve (convex face) and 8.0 curve (concave face). The resultant photochromic optical article (binder-method product) had no color unevenness (the thickness of the first functional layer was 40 μm, and no color unevenness was confirmed during coloration). The properties of the resultant photochromic optical article (binder-method product) were evaluated. The results are shown in Table 1.

<Comparative Example 3>

A photochromic optical article was produced according to the same method as in Example 1, except that pellets of a polycarbonate resin were used so that the luminous transmittance before coloration of the finally-produced photochromic optical article could be 28.2%, and the properties of the resultant photochromic optical article (binder-method product) were evaluated. The results are shown in Table 1.

Table 1

| | Photochromic Compound (part by mass) | First Compound (part by mass) | Physical Properties before coloration | | | Photochromic Properties | | | | before coloration | | during coloration | Visibility indoors (number of subjects) | Anti-glare Properties outdoors (number of subjects) | Contrast outdoors (number of subjects) |
|---|---|---|---|---|---|---|---|---|---|---|---|---|---|---|---|
| | | | Initial Luminous Transmittance (%) | Transmittance at 550 nm (%) | Minimum Transmittance* (%) | Luminous Transmittance during coloration (%) | Transmittance at 550 nm under photoirradiation (%) | Minimum Transmittance* (%) under photoirradiation | Fading Half-life (sec) | Color Unevenness | Initial Coloration | Color Unevenness | | | |
| Example 1 | PC1/PC2/PC3 (0.53/0.35/2.2) | Dye1 (0.16) | 66.5 | 65.0 | 44.8 | 17.5 | 14.0 | 9.0 | 42 | no | 8 | no | 10 | 7 | 9 |
| Example 2 | PC1/PC2/PC3 (0.53/0.35/2.2) | Dye1 (0.38) | 55.0 | 62.5 | 21.2 | 14.5 | 13.8 | 4.1 | 42 | no | 5 | no | 10 | 7 | 10 |
| Example 3 | PC1/PC2/PC3 (0.53/0.35/2.2) | Dye1 (0.60) | 40.0 | 59.0 | 100 | 100 | 12.3 | 2.0 | 43 | no | 3 | no | 9 | 7 | 10 |
| Example 4 | PC1/PC2/PC3 (0.53/0.35/2.2) | Dye2 (0.079) | 72.9 | 72.7 | 44.9 | 17.1 | 13.8 | 7.9 | 42 | no | 8 | no | 9 | 7 | 10 |
| Example 5 | PC1/PC2/PC3 (0.53/0.35/2.2) | Dye3 (0.074) | 72.5 | 72.1 | 43.4 | 17.1 | 13.7 | 8.3 | 42 | no | 8 | no | 9 | 7 | 9 |
| Example 6 | PC1/PC2/PC3 (1.1/0.71/4.5) | Dye1 (0.16) | 64.9 | 63.1 | 43.6 | 12.1 | 8.9 | 5.8 | 43 | no | 6 | no | 10 | 8 | 9 |

(continued)

| | Photochromic Compound (part by mass) | First Compound (part by mass) | Physical Properties before coloration | | | Photochromic Properties | | | | before coloration | | during coloration | Visibility indoors (number of subjects) | Anti-glare Properties outdoors (number of subjects) | Contrast outdoors (number of subjects) |
|---|---|---|---|---|---|---|---|---|---|---|---|---|---|---|---|
| | | | Initial Luminous Transmittance (%) | Transmittance at 550 nm (%) | Minimum Transmittance* (%) | Luminous Transmittance during coloration (%) | Transmittance at 550 nm under photoirradiation (%) | Minimum Transmittance* (%) under photoirradiation | Fading Half-life (sec) | Color Unevenness | Initial Coloration | Color Unevenness | | | |
| Example 7 | PC1/PC2/PC3 (0.53/0.35/2.2) | Dye1 (008) | 72.3 | 71.9 | 55.6 | 19.5 | 15.7 | 11.5 | 42 | no | 8 | no | 8 | 6 | 7 |
| Example 8 | PC1/PC2/PC3 (0.53/0.35/2.2) | Dye1 (005) | 75.2 | 74.6 | 62.7 | 21.1 | 16.5 | 13.6 | 42 | no | 9 | no | 6 | 5 | 6 |
| Example 9 | PC1/PC2/PC3 (0.53/0.35/2.2) | Dye1 (003) | 77.1 | 76.5 | 67.8 | 22.2 | 17.4 | 14.3 | 42 | no | 9 | no | 5 | 5 | 5 |
| Example 10 | PC1/PC2/PC3 (0.53/0.35/2.2) | Dye1 (0.23) | 66.5 | 65.0 | 43.5 | 17.5 | 13.9 | 9.0 | 42 | no | 9 | no | 10 | 7 | 9 |
| Comparative Example 1 | PC1/PC2/PC3 (0.53/0.35/2.2) | - | 86.7 | 90.1 | 90.0 | 22.7 | 18.3 | 16.4 | 44 | no | 10 | no | 5 | 5 | 0 |
| Comparative Example 2 | PC1/PC2/PC3 (0.26/0.18/1.1) | Dye1 (0.16) | 68.1 | 66.2 | 45.2 | 31.6 | 36.7 | 22.5 | 43 | no | 8 | no | 10 | 3 | 3 |

(continued)

| | Photochromic Compound (part by mass) | First Compound (part by mass) | Physical Properties before coloration | | | Photochromic Properties | | | | before coloration | | during coloration | Visibility indoors (number of subjects) | Anti-glare Properties outdoors (number of subjects) | Contrast outdoors (number of subjects) |
|---|---|---|---|---|---|---|---|---|---|---|---|---|---|---|---|
| | | | Initial Luminous Transmittance (%) | Transmittance at 550 nm (%) | Minimum Transmittance* (%) | Luminous Transmittance during coloration (%) | Transmittance at 550 nm under photoirradiation (%) | Minimum Transmittance* (%) under photoirradiation | Fading Half-life (sec) | Color Unevenness | Initial Coloration | Color Unevenness | | | |
| Comparative Example 3 | PC1/PC2/PC3 (0.53/0.35/2.2) | Dye1 (0.16) | 28.2 | 27.0 | 22.5 | 7.5 | 5.9 | 5.5 | 45 | no | 0 | no | 1 | 9 | 10 |

* Minimum Transmittance: at wavelength of 550 nm to 600 nm.

Table 2

| | Layer Configuration of Optical Article | | | | | | Contrast Evaluation R1/R2 |
|---|---|---|---|---|---|---|---|
| Example 1 | First Optical Sheet 300 μm | Backup Adhesive Layer 10 μm | First Functional Layer serving also as second functional layer 40 μm | Backup Adhesive Layer 10 μm | Second Optical Sheet 300 μm | Lens Substrate | 1.3 |
| Example 2 | The layer configuration is the same as in Example 1. | | | | | | 1.7 |
| Example 3 | | | | | | | 1.9 |
| Example 4 | | | | | | | 1.2 |
| Example 5 | | | | | | | 1.2 |
| Example 6 | | | | | | | 1.4 |
| Example 7 | | | | | | | 1.1 |
| Example 8 | | | | | | | 1.0 |
| Example 9 | | | | | | | 0.9 |
| Comparative Example 1 | | | | | | | 0.7 |
| Comparative Example 2 | | | | | | | 1.5 |
| Comparative Example 3 | | | | | | | 1.3 |
| Example 10 | First Optical Sheet 300 μm | Backup Adhesive Layer 10 μm | First Functional Layer 40 μm | Second Functional Layer 10 μm | Second Optical Sheet 300 μm | Lens Substrate | 1.3 |

<Example 11>

Method for producing photochromic optical article having first functional layer (A) (serving also as second functional layer), polarization functional layer (D) and lens substrate (B), using binder method

Using a coater (by Tester Sangyo Co., Ltd.), the adhesive agent 1 for backup adhesive layer obtained in the above (4) was applied onto a polycarbonate sheet (first optical sheet) having a thickness of 300 μm, at a coating speed of 0.5 m/min. Next, this was dried at a drying temperature of 110°C for 3 minutes to give a polycarbonate sheet having a backup adhesive layer with a thickness of 10 μm.

Next, using a coater (Tester Sangyo Co., Ltd.), the photochromic compound-containing adhesive composition 3 obtained in the following (11) was applied onto a PET (polyethylene terephthalate) film (Pulex Film by Teijin DuPont Film Corporation, with silicone coating film) having a thickness of 50 μm at a coating speed of 0.3 m/min. Next, this was dried at a drying temperature of 100°C for 5 minutes to form a functional layer sheet on PET. Subsequently, the side of the functional layer sheet (photochromic layer (thickness 40 μm), finally to be a first functional layer/second functional layer) formed on PET was arranged on the backup adhesive layer of the backup adhesive layer-having first optical sheet, and these were bonded together.

Separately, using a coater (Tester Sangyo Co., Ltd.), the adhesive agent 1 for backup adhesive layer obtained in the above (4) was applied onto a polycarbonate sheet (second optical sheet) having a thickness of 300 μm, at a coating speed of 0.5 m/min. Next, this was dried at a drying temperature of 110°C for 3 minutes to produce a backup adhesive layer-having polycarbonate sheet having a thickness of 10 μm.

Separately, the adhesive agent 3 for backup adhesive layer obtained in the following (10) was applied onto a PET (polyethylene terephthalate) film (Pulex Film by Teijin DuPont Film Corporation, with silicone coating film). Next,

this was dried at 110°C for 10 minutes to form a layer (backup adhesive layer sheet, thickness 40 μm) of the adhesive agent 3 for backup adhesive layer, on PET. The backup adhesive layer sheet was stuck to the backup adhesive layer on the above-mentioned polycarbonate sheet (second optical sheet).

The PET film was peeled off from the laminate having the first and second optical sheets. With that, a polarization film (PS1; polarization functional layer) was sandwiched between the functional layer sheet (photochromic layer (thickness 40 μm, finally to be the first functional layer/second functional layer)) on the first optical sheet, and the backup adhesive layer sheet on the second optical sheet, and these were laminated. The resultant laminate product was left at 40°C in vacuum for 24 hours, then heat-treated at 90°C for 60 minutes, and thereafter wet-heat treated at 60°C and 100% RH for 24 hours, and finally left at 40°C in vacuum for 24 hours to produce a photochromic laminate having polarization properties.

<Circular processing of photochromic laminate>

According to the same method as in Example 1, the photochromic laminate obtained in the above method was circular-processed to give a polarization functional layer-having circular photochromic laminate (containing a polarization functional layer).

<Lamination with lens substrate>

Next, the circular photochromic laminate (containing a polarization functional layer) and a polycarbonate resin were integrated according to the same method as in the above (6) to produce a polarization functional layer-having photochromic optical article (center thickness 3 mm, edge thickness 10 mm). The resultant photochromic optical article is a laminate photochromic optical article of first optical sheet (thickness 300 μm)/backup adhesive layer of adhesive 1 for backup adhesive layer (thickness 10 μm)/first functional layer of adhesive composition 3 (thickness 40 μm, containing photochromic compound and first compound, and serving also as second functional layer)/polarization functional layer (thickness 27 μm)/backup adhesive layer (thickness 40 μm) of adhesive agent 3 for backup adhesive layer/backup adhesive layer (thickness 10 μm) of adhesive agent 1 for backup adhesive layer/ second optical sheet (thickness 300 μm)/lens substrate of polycarbonate resin, laminated in that order. The resultant photochromic optical article had 6.0 curve (convex face) and 8.0 curve (concave face).

The resultant, polarization functional layer-having photochromic optical article had a luminous transmittance before coloration of 31.6%, and an absorbance at 420 nm of 0.55. The minimum transmittance at 550 to 600 nm was 20.2%. The luminous transmittance during coloration as photochromic properties after UV irradiation was 10.7%. The fading half-life was 41 seconds. The visibility (indoors), the anti-glare properties (outdoors), and the contrast performance (outdoors) were evaluated in the same manner as in Example 1, and the results are shown in Table 3. The resultant photochromic optical article (binder-method product) had no color unevenness any time before coloration and during coloration. The results are summarized in Tables 3 and 4.

(10) Preparation of adhesive agent 3 for backup adhesive layer

500 parts by mass of the polyurethane urea resin solution obtained in the above (1), 24 parts by mass of an isomer mixture of 4,4'-methylenebis(cyclohexyl isocyanate) and 0.2 parts by mass of a surfactant, "DOW CORNING TORAY L-7001" were stirred and mixed at room temperature to prepare an adhesive agent 3 for backup adhesive layer. The adhesive agent 3 for backup adhesive layer is the same as the adhesive composition containing the above photochromic compound for backup adhesive layer, except that it does not contain the photochromic compound and the first compound.

(11) Preparation of adhesive composition 3 containing photochromic compound

500 parts by mass of the polyurethane urea resin solution obtained in the above (1), 1.9 parts by mass of the photochromic compound (PC1/PC2/PC3 = 0.32 parts by mass/0.21 parts by mass/1.3 parts by mass), 0.17 parts by mass of the first compound (Dye 1) having an absorption peak at 550 to 600 nm, and 24 parts by mass of an isomer mixture of 4,4'-methylenebis(cyclohexyl isocyanate), to which 2.1 parts by mass of an antioxidant (hindered phenol-type antioxidant), ethylenebis(oxyethylene)bis[3-(5-tert-butyl-4-hydroxy-m-tolyl)propionate] and 0.2 parts by mass of a surfactant, "DOW CORNING TORAY L-7001" were added, were stirred and mixed at room temperature to give a photochromic compound-containing adhesive composition 3 for a binder method.

<Examples 12 to 16, Comparative Examples 4 and 5>

Photochromic optical articles were produced according to the same method as in Example 11 except that the kind of the polarization film and the kind and the amount of the first compound were changed as in Table 3, and the resultant photochromic optical articles (binder-method products) were evaluated. The results are shown in Tables 3 and 4. The photochromic optical articles (binder-method products) had no color unevenness.
An antioxidant (hindered phenol-type antioxidant), ethylenebis(oxyethylene)bis[3-(5-tert-butyl-4-hydroxy-m-tolyl)propionate] was added to the optical products, and the amount thereof was the same as in the first functional layer in Example 11.

<Example 17>

Using a coater (by Tester Sangyo Co., Ltd.), the adhesive agent 1 for backup adhesive layer obtained in the above (4) was applied onto a polycarbonate sheet (first optical sheet) having a thickness of 300 μm, at a coating speed of 0.5 m/min. Next, this was dried at a drying temperature of 110°C for 3 minutes to give a polycarbonate sheet having a backup adhesive layer with a thickness of 10 μm.

Next, using a coater (Tester Sangyo Co., Ltd.), the photochromic compound-containing adhesive composition 4 obtained in the following (12) was applied onto a PET (polyethylene terephthalate) film (Pulex Film by Teijin DuPont Film Corporation, with silicone coating film) having a thickness of 50 μm at a coating speed of 0.3 m/min. Next, this was dried at a drying temperature of 100°C for 5 minutes to form a functional layer sheet on PET. Subsequently, the side of the functional layer sheet (photochromic layer (thickness 40 μm), finally to be a first functional layer) formed on PET was arranged on the backup adhesive layer of the backup adhesive layer-having first optical sheet, and these were bonded together.

Separately, using a coater (Tester Sangyo Co., Ltd.), the adhesive agent 2 for backup adhesive layer obtained in the above (8) was applied onto a polycarbonate sheet (second optical sheet) having a thickness of 300 μm, at a coating speed of 0.5 m/min. Next, this was dried at a drying temperature of 110°C for 3 minutes to produce a backup adhesive layer (second functional layer)-having polycarbonate sheet having a thickness of 10 μm.

Separately, the adhesive agent 3 for backup adhesive layer obtained in the above (10) was applied onto a PET (polyethylene terephthalate) film (Pulex Film by Teijin DuPont Film Corporation, with silicone coating film). Next, this was dried at 110°C for 10 minutes to form a layer having a thickness of 40 μm (backup adhesive layer sheet) of the adhesive agent 3 for backup adhesive layer, on PET. The backup adhesive layer sheet was arranged on the backup adhesive layer of the above-mentioned backup adhesive layer-having second optical sheet, and these were bonded together.

The PET film was peeled off from the laminate having the first and second optical sheets. With that, a polarization film (PS1; polarization functional layer) was sandwiched between the functional layer sheet (photochromic layer (thickness 40 μm, finally to be the first functional layer)) on the first optical sheet, and the backup adhesive layer sheet on the second optical sheet, and these were laminated. The resultant laminate product was left at 40°C in vacuum for 24 hours, then heat-treated at 90°C for 60 minutes, and thereafter wet-heat treated at 60°C and 100% RH for 24 hours, and finally left at 40°C in vacuum for 24 hours to produce a photochromic laminate having polarization properties.

<Circular processing of photochromic laminate>

According to the same method as in Example 1, the photochromic laminate obtained in the above method was circular-processed to give a polarization functional layer-having circular photochromic laminate.

<Lamination with lens substrate>

Next, the circular photochromic laminate (containing a polarization functional layer) and a polycarbonate resin were integrated according to the same method as in the above (6) to produce a polarization functional layer-having photochromic optical article (center thickness 3 mm, edge thickness 10 mm). The resultant photochromic optical article is a laminate photochromic optical article of first optical sheet (thickness 300 μm)/backup adhesive layer of adhesive agent 1 for backup adhesive layer (thickness 10 μm)/first functional layer of adhesive composition 4 (thickness 40 μm, containing photochromic compound)/polarization functional layer (thickness 27 μm)/backup adhesive layer (thickness 40 μm) of adhesive agent 3 for backup adhesive layer/second functional layer of adhesive agent 2 for backup adhesive layer (thickness 10 μm, second functional layer of backup adhesive layer)/second optical sheet (thickness 300 μm)/lens substrate of polycarbonate resin, laminated in that order. The resultant photochromic optical article had 6.0 curve (convex face) and 8.0 curve (concave face).

The properties of the resultant photochromic optical article (binder-method product) having polarization properties were evaluated. The results are shown in Tables 3 and 4. The resultant photochromic optical article (binder-method product) had no color unevenness.

(12) Preparation of adhesive composition 4 containing photochromic compound

An adhesive composition 4 was prepared in the same manner as that for the photochromic compound-containing adhesive composition 3 for binder method obtained in the above (11), except that the first compound (Dye 1) having an absorption peak at 550 to 600 nm was not contained. Naturally, this contains the same amount of the antioxidant (hindered phenol-type antioxidant), ethylenebis(ethyleneoxy)bis[3-(5-tert-butyl-4-hydroxy-m-tolyl)propionate] as in the adhesive composition 3.

<Example 18>

Using a coater (by Tester Sangyo Co., Ltd.), the adhesive agent 1 for backup adhesive layer obtained in the above (4) was applied onto a polycarbonate sheet (first/second optical sheet) having a thickness of 300 μm, at a coating speed of 0.5 m/min. Next, this was dried at a drying temperature of 110°C for 3 minutes to give a polycarbonate sheet having a backup adhesive layer with a thickness of 10 μm.

Next, using a coater (Tester Sangyo Co., Ltd.), the photochromic compound-containing adhesive composition 4 obtained in the above (12) was applied onto a PET (polyethylene terephthalate) film (Pulex Film by Teijin DuPont Film Corporation, with silicone coating film) having a thickness of 50 μm at a coating speed of 0.3 m/min. Next, this was dried at a drying temperature of 100°C for 5 minutes to form a functional layer sheet on PET. Subsequently, the side of the functional layer sheet (photochromic layer (thickness 40 μm), finally to be a first functional layer) formed on PET was arranged on the backup adhesive layer of the backup adhesive layer-having first optical sheet, and these were bonded together.

Next, the adhesive agent 4 for backup adhesive layer obtained in the following (13) was applied onto a PET (polyethylene terephthalate) film (Pulex Film by Teijin DuPont Film Corporation, with silicone coating film). Next, this was dried at 110°C for 10 minutes to form, on PET, a layer of the adhesive agent 4 for backup adhesive layer (backup adhesive layer sheet, thickness 40 μm, finally to be a second functional layer). With that, the backup adhesive layer sheet was stuck to the backup adhesive layer on the above-mentioned polycarbonate sheet (second optical sheet).

The PET film was peeled off from the laminate having the first and second optical sheets. With that, a polarization film (PS1) was sandwiched between the functional layer sheet (photochromic layer (thickness 40 μm, finally to be the first functional layer)) on the first optical sheet, and the backup adhesive layer sheet (finally to be a second functional layer) on the second optical sheet, and these were laminated. The resultant laminate product was left at 40°C in vacuum for 24 hours, then heat-treated at 90°C for 60 minutes, and thereafter wet-heat treated at 60°C and 100% RH for 24 hours, and finally left at 40°C in vacuum for 24 hours to produce a photochromic laminate having polarization properties.

<Circular processing of photochromic laminate>

According to the same method as in Example 1, the photochromic laminate obtained in the above method was circular-processed to give a polarization functional layer-having circular photochromic laminate (photochromic laminate 6' in Fig. 2).

<Lamination with lens substrate>

Next, the resultant, polarization functional layer-having circular photochromic laminate and a polycarbonate resin were integrated according to the same method as in the above (6) to produce a polarization properties-having photochromic optical article (center thickness 3 mm, edge thickness 10 mm). The resultant photochromic optical article had a laminate structure as shown in Fig. 2. Specifically, there was obtained a photochromic optical article 8' of first optical sheet 1 (thickness 300 μm)/backup adhesive layer 2 of adhesive agent 1 for backup adhesive layer (thickness 10 μm)/first functional layer 3 of adhesive composition 4 (thickness 40 μm)/polarization functional layer 4 (thickness 27 μm)/second functional layer 5 of adhesive agent 4 for backup adhesive layer (thickness 40 μm, second functional layer of backup adhesive layer)/backup adhesive layer 2' (thickness 10 μm) of adhesive agent 1 for backup adhesive layer/second optical sheet 1' (thickness 300 μm)/lens substrate 7 of polycarbonate resin, laminated in that order. The resultant photochromic optical article had 6.0 curve (convex face) and 8.0 curve (concave face). The properties of the polarization properties-having photochromic optical article (binder method-product) were evaluated. The results are shown in Tables 3 and 4. The photochromic optical article (binder-method product) did not have color unevenness.

(13) Preparation of adhesive agent 4 for backup adhesive layer

500 parts by mass of the polyurethane urea resin solution obtained in the above (1), 0.16 parts by mass of the first compound (Dye 1), 24 parts by mass of an isomer mixture of 4,4'-methylenebis(cyclohexyl isocyanate), 2.1 parts by mass of an antioxidant (hindered phenol-type antioxidant, ethylenebis(oxyethylene)bis[3-(5-tert-butyl-4-hydroxy-m-tolyl)propionate] and 0.2 parts by mass of a surfactant, "DOW CORNING TORAY L-7001" were stirred and mixed at room temperature to prepare a first compound-containing adhesive agent 4 for backup adhesive layer. The adhesive agent 4 for backup adhesive layer is the same as the photochromic compound-containing adhesive composition 3 obtained in the above (11), except that it does not contain the photochromic compound.

Table 3

| | Photochromic Compound (composition)* | First Compound (part by mass) | Polarization Functional Layer | Polarization Degree (%) | Physical Properties before coloration | | | Photochromic Properties | | | |
|---|---|---|---|---|---|---|---|---|---|---|---|
| | | | | | Initial Luminous Transmittance (%) | Transmittance at 550 nm (%) | Minimum Transmittance * (%) | Luminous Transmittance under photoirradiation (%) | Transmittance at 550 nm (%) | Minimum Transmittance* (%) under photoirradiation | Fading Half-life (sec) |
| Example 11 | PC1/PC2/PC3 (0.32/0.21/1.3) | Dye 1 (0.16) | PS1 | 94.4 | 31.6 | 29.0 | 20.2 | 10.7 | 8.9 | 5.9 | 41 |
| Example 12 | PC1/PC2/PC3 (0.32/0.21/1.3) | Dye 1 (0.16) | PS2 | 86.4 | 33.4 | 30.7 | 21.6 | 11.4 | 9.5 | 6.4 | 40 |
| Example 13 | PC1/PC2/PC3 (0.32/0.21/1.3) | Dye2 (0.079) | PS2 | 86.4 | 35.0 | 33.4 | 20.8 | 11.5 | 9.7 | 5.8 | 41 |
| Example 14 | PC1/PC2/PC3 (0.32/0.21/1.3) | Dye3 (0.074) | PS2 | 86.4 | 36.6 | 34.8 | 21.5 | 11.9 | 9.9 | 6.2 | 41 |
| Example 15 | PC1/PC2/PC3 (0.32/0.21/1.3) | Dye 1 (0.16) | PS3 | 64.7 | 37.9 | 35.1 | 24.3 | 12.9 | 10.7 | 7.0 | 40 |
| Example 16 | PC1/PC2/PC3 (0.32/0.21/1.3) | Dye 1 (0.16) | PS4 | 29.9 | 47.5 | 44.7 | 28.5 | 16.4 | 13.7 | 8.5 | 40 |
| Example 17 | PC1/PC2/PC3 (0.32/0.21/1.3) | Dye 1 (0.23) | PS1 | 94.4 | 31.6 | 29.0 | 20.2 | 10.7 | 8.9 | 5.9 | 41 |
| Example 18 | PC1/PC2/PC3 (0.32/0.21/1.3) | Dye 1 (0.16) | PS1 | 94.4 | 31.6 | 29.2 | 20.2 | 10.7 | 8.9 | 5.9 | 41 |
| Comparative Example 4 | PC1/PC2/PC3 (0.32/0.21/1.3) | - | PS1 | 94.4 | 42.1 | 39.5 | 39.3 | 14.5 | 12.2 | 11.7 | 40 |
| Comparative Example 5 | PC1/PC2/PC3 (0.32/0.21/1.3) | Dye 1 (0.16) | PS5 | 99.5 | 28.6 | 24.3 | 18.5 | 8.3 | 7.2 | 4.3 | 41 |

| | Before coloration | | During coloration | Visibility indoors (number of panelists) | Anti-glare Properties outdoors (number of panelists) | Contrast outdoors (number of panelists) |
|---|---|---|---|---|---|---|
| | Color Unevenness | Initial Coloration | Color Unevenness | | | |
| Example 11 | no | 6 | no | 6 | 10 | 8 |

(continued)

| | Before coloration | | During coloration | Visibility indoors (number of panelists) | Anti-glare Properties outdoors (number of panelists) | Contrast outdoors (number of panelists) |
|---|---|---|---|---|---|---|
| | Color Unevenness | Initial Coloration | Color Unevenness | | | |
| Example 12 | no | 6 | no | 6 | 10 | 8 |
| Example 13 | no | 7 | no | 6 | 10 | 8 |
| Example 14 | no | 7 | no | 6 | 10 | 7 |
| Example 15 | no | 7 | no | 7 | 9 | 9 |
| Example 16 | no | 8 | no | 9 | 6 | 9 |
| Example 17 | no | 6 | no | 6 | 10 | 8 |
| Example 18 | no | 6 | no | 6 | 10 | 8 |
| Comparative Example 4 | no | 7 | no | 8 | 8 | 0 |
| Comparative Example 5 | no | 2 | no | 3 | 10 | 8 |

* Minimum Transmittance: at wavelength of 550 nm to 600 nm.

Table 4

| | Layer Configuration of Optical Article | | | | | | | | Contrast Evaluation R1/R2 |
|---|---|---|---|---|---|---|---|---|---|
| Example 11 | First Optical Sheet 300 μm | Backup Adhesive Layer 10 μm | First Functional Layer serving also as second functional layer 40 μm | Polarization Functional Layer 27 μm | Backup Adhesive Layer 40 μm | Backup Adhesive Layer 10 μm | Second Optical Sheet 300 μm | Lens Substrate | 1.6 |
| Example 12 | The layer configuration is the same as in Example 11 | | | | | | | | 1.5 |
| Example 13 | | | | | | | | | 1.4 |
| Example 14 | | | | | | | | | 1.4 |
| Example 15 | | | | | | | | | 1.4 |
| Example 16 | | | | | | | | | 1.2 |
| Comparative Example 4 | | | | | | | | | 0.7 |
| Comparative Example 5 | | | | | | | | | 1.6 |
| Example 17 | First Optical Sheet 300 μm | Backup Adhesive Layer 10 μm | First Functional Layer 40 μm | Polarization Functional Layer 27 μm | Backup Adhesive Layer 40 μm | Second Functional Layer 10 μm | Second Optical Sheet 300 μm | Lens Substrate | 1.6 |
| Example 18 | First Optical Sheet 300 μm | Backup Adhesive Layer 10 μm | First Functional Layer 40 μm | Polarization Functional Layer 27 μm | Second Functional Layer 40 μm | Backup Adhesive Layer 10 μm | Second Optical Sheet 300 μm | Lens Substrate | 1.6 |

<Example 19>

Production Method for Photochromic Optical Article using coating method

< Adjustment of photochromic curable composition>

30 parts by mass of polyethylene glycol dimethacrylate (average chain length of ethylene glycol chain is 14, average molecular weight is 736), 30 parts by mass of 2,2-bis[4-(methacryloxy/polyethoxy)phenyl]propane (average chain length of ethylene glycol chain is 10, average molecular weight is 804), 10 parts by mass of esterified product of polyalkylene carbonate diol mainly composed of pentanediol and hexanediol, and acrylic acid (average molecular weight 640, (meth)acryl equivalent 320), 29 parts by mass of trimethylolpropane trimethacrylate, 1 part by mass of glycidyl methacrylate, 0.16 parts by mass of first compound (Dye 1), and 3.1 parts by mass of photochromic compound) (PC1/PC2/PC3 = 0.52 parts by mass/0.34 parts by mass/2.2 parts by mass) were mixed by stirring at 70°C for 15 minutes to dissolve the photochromic compound. After this was cooled down to room temperature, further, 5 parts by mass of γ-methacryloxypropyltrimethoxysilane, 3 parts by mass of bis(1,2,2,6,6-pentamethyl-4-piperidyl) sebacate (molecular weight 508; hindered amine-type light stabilizer (stabilizer)), 3 parts by mass of ethylenebis(oxyethylene)bis[3-(5-tert-butyl-4-hydroxy-m-tolyl) propionate] (Irganox (registered trademark) 245 by Ciba Specialty Chemicals Corporation; hindered phenol-type antioxidant), 0.3 parts by mass of phenylbis(2,4,6-trimethylbenzoyl)-phosphine oxide (trade name: Irgacure (registered trademark) 819. by BASF Corporation; polymerization initiator), and 0.1 parts by mass of a leveling agent, "DOW CORNING TORAY L-7001" were added thereto to give a photochromic curable composition for use in a coating method.
Next, using a spin coater (1H-DX2, by Mikasa Co., Ltd.), a primer layer was formed on a lens substrate. Specifically, a wet-curable urethane resin solution (product name: TR-SC-P, by Tokuyama Corporation; primer composition) was applied by spin coating on the surface of an acrylic plastic lens having a center thickness of 2 mm, an edge thickness of 8 mm and a refractive index of 1.50 (center thickness 2 mm, concave face base curve 6.0 (6.0 curve (concave face)), convex face base curve 2.0 (2.0 curve (convex face)), lens substrate), at a rotation speed 70 rpm for 15 seconds and then at 1500 to 2000 rpm for 4 seconds, and then dried at room temperature for 15 minutes. At that time, the spinning condition was so controlled that the thickness of the adhesive resin layer (primer layer of the wet-curable urethane resin) after dried could be 5 μm.
Subsequently, 2 g of the photochromic curable composition prepared in the above-mentioned method was applied by spin coating on the lens substrate with the primer layer formed thereon, so that the coating thickness after cured could be 40 μm. Next, using a metal halide lamp having an output power of 200 mW/cm$^2$ in a nitrogen gas atmosphere, this was irradiated with light for 90 seconds to cure the coating film. Further, this was heated at 100°C for 1 hour to produce a photochromic optical article (laminate product; coating method) having a photochromic layer (first functional layer 40 μm). The laminate configuration was a first layer with a thickness 40 μm (serving also as a second functional layer)/a primer layer with a thickness 5 μm/the above-mentioned lens substrate. The photochromic optical article having the laminate configuration (laminate product; coating method) has no color unevenness during coloration.
The resultant photochromic optical article had a luminous transmittance before coloration of 66.6%, an absorbance at 420 nm of 0.25, and a minimum transmittance at 550 to 600 nm of 44.5%. As photochromic properties after UV irradiation, the luminous transmittance during coloration was 17.5% and the fading half-life was 45 seconds. These physical properties were measured in the same manner as in Example 1. The visibility (indoors), the anti-glare properties (outdoors) and the contrast performance (outdoors) were evaluated according to the same methods as in Example 1, and the results are shown in Table 5. The resultant photochromic optical article (binder-method product) had no color unevenness any time before coloration and during coloration. The results are shown in Tables 5 and 6.
The photochromic optical article had a center thickness of about 2.045 mm, an edge thickness of about 8.045 mm, 6.0 curve (concave face) and 2.0 curve (convex face).

<Example 20>

Production Method for Photochromic Optical Article containing polarization functional layer, using coating method

<Preparation of lens substrate having polarization functional layer>

A polarization film PS1 (polarization functional layer) was buried in a polymerizable monomer consisting mainly of 45.6 parts by mass of norbornane diisocyanate and 54.4 parts by mass of pentaerythritol tetrakis(3-mercaptopropionate), which were thermally polymerized to give a lens substrate of a thiourethane plastic lens having polarization properties, having a center thickness 2 mm, and having a refractive index 1.6 (concave face base curve 6.0 (6.0 curve (concave face)), convex base curve 2.0 (2.0 curve convex fact)).

< Adjustment of photochromic curable composition>

A photochromic curable composition was adjusted in the same method as in Example 19, except that, in < Adjustment of photochromic curable composition> in Example 19, the blending ratio of photochromic compounds was changed to PC1/PC2/PC3 = 0.26 parts by mass/0.17 parts by mass/1.1 parts by mass.

A photochromic optical article was produced in the same method as in Example 19, except that the above-mentioned polarization properties-having lens substrate was used, and further the photochromic curable composition prepared in the above method was used. The laminate configuration was a first functional layer (serving also as a second functional layer) having a thickness of 40 μm/a primer layer having a thickness of 5 μm/a lens substrate having a polarization functional layer. The properties of the resultant photochromic optical article (laminate product; coating method) were evaluated in the same method as in Example 1. The results are shown in Tables 5 and 6. The resultant photochromic optical article (laminate product; coating method) had no color unevenness any time before coloration and during coloration.

The photochromic optical article had a center thickness of 2.045 mm, an edge thickness of 8.045 mm, 6.0 curve (concave face) and 2.0 curve (convex face).

<Comparative Example 6>

A photochromic optical article having polarization properties (laminate product; coating method) was produced in the same method as in Example 20, except that the first compound having an absorption peak at 550 to 600 nm was not used. The properties of the resultant photochromic optical article (laminate product; coating method) were evaluated in the same method as in Example 1. The results are shown in Tables 5 and 6. The resultant photochromic optical article (laminate product; coating method) had no color unevenness any time before coloration and during coloration.

The photochromic optical article had a center thickness of 2.045 mm, an edge thickness of 8.045 mm, 6.0 curve (concave face) and 2.0 curve (convex face).

<Example 21>

Production Method for Photochromic Optical Article using cast polymerization method

< Adjustment of photochromic curable composition>

44 parts by mass of 1,3-bis(isocyanatomethyl)cyclohexane, 36 parts by mass of dipentaerythritol hexakis(3-mercaptopropionate), 15 parts by mass of a surfactant (natural C12-C14 alcohol-type nonionic surfactant; "WonderSurf (registered trademark) 140" by Aoki Oil Industrial Co., Ltd.), 5 parts by mass of stearyl-3-mercaptopropionate, 0.014 parts by mass of the first compound (Dye 1), 0.12 parts by mass of a photochromic compound (PC1/PC2/PC3 = 0.020 parts by mass/0.014 parts by mass/0.086 parts by mass), 0.12 parts by mass of ethylenebis(oxyethylene)bis[3-(5-tert-butyl-4-hydroxy-m-tolyl)propionate] (Irganox (registered trademark) 245 by Ciba Specialty Chemicals Corporation; hindered phenol-type antioxidant), and 0.05 parts by mass of dimethyldichlorotin were mixed to prepare a photochromic curable composition for use in a cast polymerization method.

The resultant photochromic curable composition was cast into a casting mold formed of an upper mold of a glass plate and a lower mold of an allyl plastic lens having a center thickness 2 mm and a refractive index 1.50 (center thickness 2 mm, concave face base curve 6.0 (6.0 curve (concave face)), convex face base curve 2.0 (2.0 curve (convex face)) and wound with a tape (with silicone adhesive) around the outer periphery. Before use, the convex face side of the allyl plastic lens was corona-discharged with by MultiDyne by Navitas Machinery Co., Ltd.

Subsequently, this was left in an oven heated at 50°C for 30 minutes, then heated at 120°C for 2 hours to polymerize and cure the photochromic curable composition, and thereafter the tape was removed to give a photochromic optical article (laminate product; cast polymerization method) having a photochromic layer with a thickness 0.5 mm. The laminate configuration was a first functional layer (serving also as a second functional layer) with a thickness 0.5 mm/the above-mentioned lens substrate.

The resultant photochromic optical article had a luminous transmittance before coloration of 66.8 %, an absorbance at 420 nm of 0.25, and a minimum transmittance at 550 to 600 nm of 45.3%. As photochromic properties after UV irradiation, the luminous transmittance during coloration was 17.5% and the fading half-life was 75 seconds. These physical properties were measured in the same manner as in Example 1. The visibility (indoors), the anti-glare properties and the visibility (outdoors) were evaluated also according to the same methods as in Example 1. The results are shown in Tables 5 and 6. The resultant photochromic optical article (cast polymerization method) had no color unevenness any time before coloration and during coloration.

The photochromic optical article had a center thickness of 2.5 mm, an edge thickness of 8.5 mm, curve 6.0

(concave face) and 2.0 curve (convex face).

<Example 22>

Photochromic Optical Article having polarization functional layer, using cast polymerization method

<Preparation of lens substrate having polarization functional layer>

The lens substate having a polarization functional layer used in Example 20 was prepared.

< Adjustment of lens substrate having polarization functional layer>

A photochromic curable composition was adjusted in the same method as in Example 21, except that the blending ratio of the photochromic compounds was changed to PC1/PC2/PC3 = 0.020 parts by mass/0.014 parts by mass/0.09 parts by mass.

A photochromic optical article was produced in the same method as in Example 21, except that the same polarization functional layer-having lens substrate as that used in Example 20 was used, and further the above-mentioned photochromic curable composition was used. The laminate configuration was a first functional layer (serving also as a second functional layer) with a thickness 0.5 mm/the above-mentioned lens substrate. The properties of the resultant photochromic optical article (laminate product; cast polymerization method) were evaluated. The results are shown in Tables 5 and 6. The photochromic optical article (laminate product; cast polymerization method) had no color unevenness any time before coloration and during coloration.

The photochromic optical article had a center thickness of 2.5 mm, an edge thickness of 8.5 mm, curve 6.0 (concave face) and 2.0 curve (convex face).

<Comparative Example 7>

A photochromic optical article was produced in the same method as in Example 22, except that the first compound having an absorption peak at 550 to 600 nm was not used, and the properties of the resultant photochromic optical article (laminate product; cast polymerization method) were evaluated. The results are shown in Tables 5 and 6. The resultant photochromic optical article (laminate product; cast polymerization method) had no color unevenness any time before coloration and during coloration.

<Comparative Example 8>

55 parts by mass of m-xylylene diisocyanate, 30 parts by mass of dipentaerythritol hexakis(3-mercaptopropionate), 15 parts by mass of polyethylene glycol monooleyl ether (n≈10, Mw=668), 0.0035 parts by mass of the first compound (Dye 1), photochromic compound PC1/PC2/PC3 = 0.010/0.007/0.045 (parts by mass), 0.1 parts by mass of an internal release agent, Zelec (registered trademark) UN (acidic phosphate, by STEPAN Corporation), and 0.01 parts by mass of a curing catalyst dibutyltin dilaurate were fully mixed to prepare a photochromic curable composition for use in a kneading method.

The resultant photochromic curable composition was degassed, and then cast into a casting mold formed of a glass plate and a gasket of an ethylene-vinyl acetate copolymer, and the photochromic curable composition was polymerized by casting polymerization. For the polymerization, an air furnace was used, and while gradually heated from 27°C up to 120°C, the composition was cured, taking 24 hours. After the polymerization, the cured product was taken out of the glass mold of the casting mold to give a photochromic optical article (kneading-method product) having a center thickness 2 mm, an edge thickness of 8 mm, concave face base curve 6.0 (6.0 curve (concave face)), and convex face base curve 2.0 (2.0 curve (convex face)). The properties of the photochromic optical articles (kneading-method product) were evaluated. The results are shown in Tables 5 and 6. The resultant photochromic optical articles (kneading-method product) had color unevenness any time before coloration and during coloration.

Table 5

| | Photochromic Compound (composition)* | First Compound (part by mass) | Polarization Functional Layer | Polarization Degree (%) | Physical Properties before coloration: Initial Luminous Transmittance (%) | Physical Properties before coloration: Transmittance at 550 nm (%) | Physical Properties before coloration: Minimum Transmittance * (%) | Photochromic Properties: Luminous Transmittance under photoirradiation (%) | Photochromic Properties: Transmittance at 550 nm (%) | Photochromic Properties: Minimum Transmittance * (%) under photoirradiation | Photochromic Properties: Fading Half-life (sec) |
|---|---|---|---|---|---|---|---|---|---|---|---|
| Example 19 | PC1/PC2/PC3 (0.52/0.34/2.2) | Dye1 (0.16) | - | - | 66.6 | 65.0 | 44.5 | 17.5 | 14.0 | 9.0 | 45 |
| Example 20 | PC1/PC2/PC3 (0.26/0.17/1.1) | Dye1 (0.16) | PS1 | 94.4 | 31.6 | 29.0 | 20.2 | 10.7 | 8.9 | 5.9 | 45 |
| Example 21 | PC1/PC2/PC3 (0.040/0.027/0.17) | Dye1 (0.014) | - | - | 66.8 | 65.1 | 45.3 | 17.5 | 14.3 | 9.0 | 75 |
| Example 22 | PC1/PC2/PC3 (0.020/0.014/0.09) | Dye1 (0.014) | PS1 | 94.4 | 32.5 | 28.8 | 20.8 | 10.7 | 9.0 | 6.1 | 77 |
| Comparative Example 6 | PC1/PC2/PC3 (0.26/0.17/1.1) | - | PS1 | 94.4 | 42.1 | 39.5 | 39.3 | 14.5 | 11.7 | 14.2 | 45 |
| Comparative Example 7 | PC1/PC2/PC3 (0.020/0.014/0.09) | - | PS1 | 94.4 | 42.3 | 39.5 | 42.6 | 14.6 | 11.9 | 14.3 | 77 |
| Comparative Example 8 | PC1/PC2/PC3 (0.010/0.007/0.04) | Dye1 (0.0035) | - | - | 65.2 | 64.7 | 44.8 | 16.5 | 13.3 | 8.5 | 82 |

| | Before coloration: Color Unevenness | Before coloration: Initial Coloration | During coloration: Color Unevenness | Visibility indoors (number of subjects) | Anti-glare Properties outdoors (number of subjects) | Contrast outdoors (number of subjects) |
|---|---|---|---|---|---|---|
| Example 19 | no | 8 | no | 10 | 7 | 10 |
| Example 20 | no | 6 | no | 6 | 10 | 8 |

(continued)

| | Before coloration | | During coloration | Visibility indoors (number of subjects) | Anti-glare Properties outdoors (number of subjects) | Contrast outdoors (number of subjects) |
|---|---|---|---|---|---|---|
| | Color Unevenness | Initial Coloration | Color Unevenness | | | |
| Example 21 | no | 8 | no | 10 | 7 | 10 |
| Example 22 | no | 6 | no | 6 | 10 | 8 |
| Comparative Example 6 | no | 6 | no | 8 | 8 | 0 |
| Comparative Example 7 | no | 6 | no | 8 | 8 | 0 |
| Comparative Example 8 | yes | 7 | yes | 9 | 7 | 9 |

* Minimum Transmittance: at wavelength of 550 nm to 600 nm.

Table 6

| | Layer Configuration of Optical Article | | | Contrast Evaluation R1/R2 |
|---|---|---|---|---|
| Example 19 | First Functional Layer serving also as second functional layer 40 μm | Primer Layer 5 μm | Lens Substrate | 1.3 |
| Example 20 | First Functional Layer serving also as second functional layer 40 μm | Primer Layer 5 μm | Lens Substrate having polarization functional performance | 1.6 |
| Comparative Example 6 | First Functional Layer serving also as second functional layer 40 μm | Primer Layer 5 μm | Lens Substrate having polarization functional performance | 0.7 |
| Example 21 | First Functional Layer serving also as second functional layer 0.5 mm | | Lens Substrate | 1.3 |
| Example 22 | First Functional Layer serving also as second functional layer 0.5 mm | | Lens Substrate having polarization functional performance | 1.6 |
| Comparative Example 7 | First Functional Layer serving also as second functional layer 0.5 mm | | Lens Substrate having polarization functional performance | 0.7 |
| Comparative Example 8 | Monolayer Optical Article | | | 1.3 |

As obvious from the above Examples 1 to 22, the photochromic optical articles of the present invention are excellent in photochromic properties, visibility indoors, anti-glare properties outdoors, and contrast performance, and have no color unevenness before coloration and after coloration. The reason why the photochromic optical articles have such visibility, anti-glare properties and contrast performance and have no color unevenness is because they contain a photochromic compound and a compound having an absorption peak within a wavelength range of 550 to 600 nm (first compound), because the luminous transmittance before and after coloration of the photochromic compound and the minimum transmittance in a wavelength range of 550 nm to 600 nm after coloration of the photochromic compound each fall within a predetermined range, and because the first functional layer and the lens substrate form an independent layer configuration. The luminous transmittance and the minimum transmittance can be controlled by optionally using a polarization film or by making the thickness of each functional layer uniform.

On the other hand, in Comparative Examples 1 to 8, lenses, having no problem in point of photochromic properties but satisfying all the visibility indoors, the anti-glare properties outdoors, and the contrast performance and/or the absence of color unevenness before coloration and after coloration, could not be obtained.

Example 23

In preparation of the adhesive composition 1 containing the photochromic compound in (2) in Example 1, an adhesive composition (1A) not containing the photochromic compound and the first compound was prepared, separately from the adhesive composition 1.

In preparation of the adhesive agent 1 for backup adhesive layer for forming the backup adhesive layer on the optical sheet in (4) in Example 1, an adhesive agent (1B) for backup adhesive layer for the second functional layer of the adhesive agent 1 for backup adhesive layer was prepared by adding 0.23 parts by mass of the first compound (Dye 1) having an absorption peak at 550 to 600 nm, separately from the adhesive agent 1 for backup adhesive layer.

With that, according to the same method as in Example 1, a photochromic optical article of a laminate first optical sheet 1 (thickness 300 μm)/backup adhesive layer (thickness 10 μm) of adhesive agent 1 for backup adhesive layer/first functional layer (thickness 40 μm, containing only photochromic compound) of adhesive composition 1/protective adhesive layer (thickness 40 μm) of adhesive composition (1A)/second functional layer (thickness 10 μm) of adhesive agent (1B) for backup adhesive layer/second optical sheet (thickness 300 μm)/lens substrate of polycarbonate resin, as laminated in that order, was produced. In that, the first functional layer contains the same antioxidant as in

Example 1.

Thus obtained was a photochromic optical article (center thickness 3 mm, edge thickness 10 mm). In that case, the first functional layer and the second functional layer are bonded via the protective adhesive layer. The resultant photochromic optical article had 6.0 curve (convex face) and 8.0 curve (concave face).

The photochromic optical article was evaluated in the same manner as in Example 1. The results are shown in Table 7 and 8. However, the visibility (indoors), the anti-glare properties (outdoors), and the contrast performance (outdoors) were reconfirmed using Example 1 as a reference again at the same time in order to attain consistency. The evaluation results of the photochromic optical article obtained in Example 1 did not change in April and in June.

Example 24

An adhesive composition (1B) was prepared like the photochromic compound-containing adhesive composition 1 in (2) in Example 5, except that, in addition to the photochromic compound and the first compound (Dye 3), a stabilizer of a UV absorbent (benzotriazole-type UV absorbent), TINUVIN 1130 (by BASF Corporation; mixture of about 12% by mass $H(OCH_2CH_2)_{6\text{-}7}OH$, about 50% by mass β-[3-(2H-Benzotriazole-2-yl)-4-hydroxy-5-tert-butylphenyl]-propionic acid poly(ethyleneglycol)300-ester, about 38% by mass Bis{β-[3-(2H-Benzotriazole-2-yl)-4-hydroxy-5-tert-butylphenyl]-propionic acid}-poly(ethyleneglycol)300-ester) was added in an amount of 295 parts by mass relative to 100 parts by mass of the photochromic compound. Using the adhesive composition (1B), a photochromic optical article was produced in the same method as in Example 5.

Namely, there was obtained a photochromic optical article of a laminate of first optical sheet 1 (thickness 300 μm)/backup adhesive layer (thickness 10 μm) of adhesive agent 1 for backup adhesive layer/first functional layer (thickness 40 μm, containing photochromic compound, first compound (Dye 3) and UV absorbent) of adhesive composition (1B)/backup adhesive layer (thickness 10 μm) of adhesive agent 1 for backup adhesive layer/second optical sheet (thickness 300 μm)/lens substrate of polycarbonate resin, as laminated in that order. In that, the first functional contains the same amount of the same antioxidant as in Example 5.

The resultant photochromic optical article was (center thickness 3 mm, edge thickness 10 mm). In that case, the first functional layer and the second functional layer are bonded via the protective adhesive layer. The photochromic optical article had 6.0 curve (convex face) and 8.0 curve (concave face).

The photochromic optical article was evaluated in the same manner as in Example 23, and the results are shown in Tables 7 and 8.

Example 25

An adhesive composition (1B) was prepared like the photochromic compound-containing adhesive composition 1 in (2) in Example 5, except that, in addition to the photochromic compound and the first compound (Dye 3), a stabilizer of a hindered amine-type light stabilizer, 1,2,2,6,6-pentamethyl-4-piperidyl methacrylate (Adeka Stab LA-82 (by ADEKA Corporation) was added in an amount of 118 parts by mass relative to 100 parts by mass of the photochromic compound. Using the adhesive composition (1B), a photochromic optical article was produced in the same method as in Example 5.

Namely, there was obtained a photochromic optical article of a laminate of first optical sheet 1 (thickness 300 μm)/backup adhesive layer (thickness 10 μm) of adhesive agent 1 for backup adhesive layer/first functional layer (thickness 40 μm, containing photochromic compound, first compound (Dye 3) and hindered amine-type light stabilizer) of adhesive composition (1B)/backup adhesive layer (thickness 10 μm) of adhesive agent 1 for backup adhesive layer/second optical sheet (thickness 300 μm)/lens substrate of polycarbonate resin, as laminated in that order. In that, the first functional contains the same amount of the same antioxidant as in Example 5.

The resultant photochromic optical article was (center thickness 3 mm, edge thickness 10 mm). In that case, the first functional layer and the second functional layer are bonded via the protective adhesive layer. The photochromic optical article had 6.0 curve (convex face) and 8.0 curve (concave face).

The photochromic optical article was evaluated in the same manner as in Example 23, and the results are shown in Tables 7 and 8.

Example 26

An adhesive composition (1B) was prepared like the photochromic compound-containing adhesive composition 1 in (2) in Example 5, except that, in addition to the photochromic compound and the first compound (Dye 3), a stabilizer of a singlet oxygen quencher, bis(dithiobenzyl)nickel was added in an amount of 59 parts by mass relative to 100 parts by mass of the photochromic compound. Using the adhesive composition (1B), a photochromic optical article was produced in the same method as in Example 5.

Namely, there was obtained a photochromic optical article of a laminate of first optical sheet 1 (thickness 300

μm)/backup adhesive layer (thickness 10 μm) of adhesive agent 1 for backup adhesive layer/first functional layer (thickness 40 μm, containing photochromic compound, first compound (Dye 3) and singlet oxygen quencher) of adhesive composition (1B)/backup adhesive layer (thickness 10 μm) of adhesive agent 1 for backup adhesive layer/second optical sheet (thickness 300 μm)/lens substrate of polycarbonate resin, as laminated in that order. In that, the first functional contains the same amount of the same antioxidant as in Example 5.

The resultant photochromic optical article was (center thickness 3 mm, edge thickness 10 mm). In that case, the first functional layer and the second functional layer are bonded via the protective adhesive layer. The photochromic optical article had 6.0 curve (convex face) and 8.0 curve (concave face).

The photochromic optical article was evaluated in the same manner as in Example 23, and the results are shown in Tables 7 and 8.

Table 7

| | Photochromic Compound (part by mass) | First Compound (part by mass) | Physical Properties before coloration | | | Photochromic Properties | | | | Before coloration | | During coloration | Visibility indoors (number of panelists) | Anti-glare Properties outdoors (number of panelists) | Contrast outdoors (number of panelists) |
|---|---|---|---|---|---|---|---|---|---|---|---|---|---|---|---|
| | | | Initial Luminous Transmittance (%) | Transmittance at 550 nm (%) | Minimum Transmittance* (%) | Luminous Transmittance during coloration (%) | Transmittance at 550 nm under photoirradiation (%) | Minimum Transmittance* (%) under photoirradiation | Fading Half-life (sec) | Color Unevenness | Initial Coloration | Color Unevenness | | | |
| Example 1 | PC1/PC2/PC3 (0.53/0.35/2.2) | Dye1 (0.16) | 66.5 | 65.0 | 44.8 | 17.5 | 14.0 | 9.0 | 42 | no | 8 | no | 10 | 7 | 9 |
| Example 23 | PC1/PC2/PC3 (0.53/0.35/2.2) | Dye1 (0.16) | 66.3 | 65.0 | 44.7 | 17.4 | 13.9 | 9.0 | 42 | no | 8 | no | 10 | 7 | 9 |
| Example 24 | PC1/PC2/PC3 (0.53/0.35/2.2) | Dye3 (0.074) | 72.6 | 72.0 | 43.4 | 18.7 | 14.5 | 8.9 | 42 | no | 8 | no | 10 | 7 | 9 |
| Example 25 | PC1/PC2/PC3 (0.53/0.35/2.2) | Dye3 (0.074) | 71.5 | 71.1 | 44.5 | 16.1 | 12.8 | 8.1 | 40 | no | 8 | no | 10 | 7 | 9 |
| Example 26 | PC1/PC2/PC3 (0.53/0.35/2.2) | Dye3 (0.074) | 62.5 | 62.1 | 37.4 | 16.6 | 13.5 | 8.1 | 42 | no | 7 | no | 9 | 7 | 9 |

* Minimum Transmittance: at wavelength of 550 nm to 600 nm.

Table 8

| | Layer Configuration of Optical Article | | | | | | | Contrast Evaluation R1/R2 |
|---|---|---|---|---|---|---|---|---|
| Example 1 | First Optical Sheet 300 μm | Backup Adhesive Layer 10 μm | First Functional Layer serving also as second functional layer 40 μm | | Backup Adhesive Layer 10 μm | Second Optical Sheet 300 μm | Lens Substrate | 1.3 |
| Example 23 | First Optical Sheet 300 μm | Backup Adhesive Layer 10 μm | First Functional Layer 40 μm | Protective Adhesive Layer 40 μm | Second functional Layer 10 μm | Second Optical Sheet 300 μm | Lens Substrate | 1.3 |
| Example 24 | First Optical Sheet 300 μm | Backup Adhesive Layer 10 μm | First Functional Layer serving also as second functional layer 40 μm containing UV Absorbent | | Backup Adhesive Layer 10 μm | Second Optical Sheet 300 μm | Lens Substrate | 1.5 |
| Example 25 | First Optical Sheet 300 μm | Backup Adhesive Layer 10 μm | First Functional Layer serving also as second functional layer 40 μm containing hindered amine-type light stabilizer | | Backup Adhesive Layer 10 μm | Second Optical Sheet 300 μm | Lens Substrate | 1.3 |
| Example 26 | First Optical Sheet 300 μm | Backup Adhesive Layer 10 μm | First Functional Layer serving also as second functional layer 40 μm containing singlet oxygen quencher | | Backup Adhesive Layer 10 μm | Second Optical Sheet 300 μm | Lens Substrate | 1.2 |

<Evaluation of Photochromic Persistence (durability), and Contrast Durability>

The photochromic optical articles obtained in Example 1, Example 5, Example 10, Example 18 and Examples 23 to 26 were evaluated in point of the photochromic persistence and the contrast durability according to the following methods. The layer configuration characteristics, and the results of the persistence and the durability of these Examples are shown in Table 9. The optical articles of these Examples contain a hindered phenyl-type antioxidant in the first functional layer.

<Photochromic Performance Persistence>

For evaluating the durability of coloration by photoirradiation, the optical articles were tested in a 96-hours accelerated deterioration test, using Xenon Weather Meter X25 by Suga Test Instruments Co., Ltd. The color optical density was evaluated before and after the test, and from the color optical density (A0) before the test and the color optical density (A96) after the test, the photochromic performance persistence was determined according to the following formula.

Color optical density {ε(900)-ε(0)} is a difference between the absorbance after photoirradiation for 900 seconds {ε(900)} and the absorbance before photoirradiation ε(0), at an absorption peak after coloration determined with a spectral photometer by Otsuka Electronics Co., Ltd. (Instantaneous Multichannel Photodetector MCPD1000).

$$\text{Photochromic Performance Persistence (\%)} = (A96/A0) \times 100$$

The photochromic performance persistence is taken as an index, and it can be said that a higher persistence means a higher color durability.

<Contrast Durability>

For evaluating the contrast durability by photoirradiation, the optical articles were tested in a 96-hours accelerated deterioration test, using Xenon Weather Meter X25 by Suga Test Instruments Co., Ltd. At a measurement temperature 23°C, the absorbance at an absorption peak of the first compound (Dye 1: 585 nm, Dye 3: 594 nm) was measured before and after the test, using a UV/VIS spectral photometer (Model UV-2500, by Shimadzu Corporation). From the absorbance before the test (a0) and the absorbance after the test (a96), the contrast performance persistence was determined according to the following formula.

$$\text{Contrast Performance Persistence (\%)} = (a96/a0) \times 100$$

The contrast performance persistence is taken as an index, and it can be said that a higher persistence means a higher color durability.

After the durability test, the contrast performance was evaluated using a hyperspectral camera.

Table 9

| | Layer Configuration of Optical Article | | | | | | | Photochromic Performance Persistence (%) | Contrast Performance R1/R2 | Contrast Durability |
|---|---|---|---|---|---|---|---|---|---|---|
| Example 1 | First Optical Sheet | Backup Adhesive Layer | First Functional Layer serving also as second functional layer using Dye 1 | Backup Adhesive Layer | Second Optical Sheet | Lens Substrate | - | 10 | 0.7 | 58 |
| Example 5 | First Optical Sheet | Backup Adhesive Layer | First Functional Layer serving also as second functional layer using Dye 3 | Backup Adhesive Layer | Second Optical Sheet | Lens Substrate | - | 60 | 1.1 | 94 |
| Example 10 | First Optical Sheet | Backup Adhesive Layer | First Functional Layer | Second Functional Layer Dye 1 used | Second Optical Sheet | Lens Substrate | - | 10 | 0.7 | 64 |
| Example 18 | First Optical Sheet | Backup Adhesive Layer | First Functional Layer | Polarization Functional Layer | Second Functional Layer using Dye 1 | Second Optical Sheet | Lens Substrate | 75 | 1.6 | 94 |
| Example 23 | First Optical Sheet | Backup Adhesive Layer | First Functional Layer | Protective Adhesive Layer | Second Functional Layer using Dye 1 | Second Optical Sheet | Lens Substrate | 55 | 0.8 | 76 |
| Example 24 | First Optical Sheet | Backup Adhesive Layer | First Functional Layer serving also as second functional layer using Dye 3 using UV absorbent | Backup Adhesive Layer | Second Optical Sheet | Lens Substrate | - | 80 | 1.5 | 100 |
| Example 25 | First Optical Sheet | Backup Adhesive Layer | First Functional Layer serving also as second functional layer using Dye 3 using hindered amine-type light stabilizer | Backup Adhesive Layer | Second Optical Sheet | Lens Substrate | - | 85 | 1.3 | 97 |

(continued)

| | Layer Configuration of Optical Article | | | | | | | Photochromic Performance Persistence (%) | Contrast Performance R1/R2 | Contrast Durability |
|---|---|---|---|---|---|---|---|---|---|---|
| Example 26 | First Optical Sheet | Backup Adhesive Layer | First Functional Layer serving also as second functional layer using Dye 3 using singlet oxygen quencher | Backup Adhesive Layer | Second Optical Sheet | Lens Substrate | - | 78 | 1.1 | 94 |

Using a copper-containing tetraazaporphyrin compound as the first compound, the durability (photochromic persistence, contrast durability) could be improved. In the case where the first functional layer (A) contains the photochromic compound and the first compound, the photochromic persistence and the contrast durability could be improved more by further adding a stabilizer.

In the case where the first functional layer (A) (not containing the first compound) and the second functional layer (C) are independently of each other and are bonded via the other layer, the photochromic performance persistence and the contrast durability could be maintained high.

Example 27

A photochromic optical article was produced according to the same method as in Example 18 except that 0.11 parts by mass of Dye 3 was used in place of Dye 1, as the first compound having an absorption peak at 550 to 600 nm in Example 18, and the properties of the resultant photochromic optical article (binder-method product) were evaluated in the same manner as in Example 1. The results are shown in Tables 10 and 11. The optical article contains, as the antioxidant (hindered phenol-type antioxidant), ethylenebis(oxyethylene)bis[3-(5-tert-butyl-4-hydroxy-m-tolyl)propionate] in the same amount as in the first functional layer in Example 1.

Example 28

A photochromic optical article was produced according to the same method as in Example 27 except that 3.7 parts by mass of PC4 was used as the photochromic compound in the photochromic compound-containing adhesive composition 4 in Example 27, in place of PC1/PC2/PC3=0.32 parts by mass/0.21 parts by mass/1.3 parts by mass, and the properties of the resultant photochromic optical article (binder-method product) were evaluated in the same manner as in Example 1. The results are shown in Tables 10 and 11. The optical article contains, as the antioxidant (hindered phenol-type antioxidant), ethylenebis(oxyethylene)bis[3-(5-tert-butyl-4-hydroxy-m-tolyl)propionate] in the same amount as in the first functional layer in Example 1.

Example 29

A photochromic optical article was produced according to the same method as in Example 27 except that 0.16 parts by mass of Sumiplast (registered trademark) Red HL2B (Sorbent Red 151) by Sumika Chemtex Company, Limited and 0.33 parts by mass of Sumiplast Orange HRP (Sorbent Orange 60) by Sumika Chemtex Company, Limited were added as dyes to the photochromic compound-containing adhesive composition 4, and 2.9 parts by mass of PC5 was used as the photochromic compound in place of PC1/PC2/PC3 = 0.32 parts by mass/0.21 parts by mass/1.3 parts by mass, and the properties of the resultant photochromic optical article (binder-method product) were evaluated in the same manner as in Example 1. The results are shown in Tables 10 and 11. The optical article contains, as the antioxidant (hindered phenol-type antioxidant), ethylenebis(oxyethylene)bis[3-(5-tert-butyl-4-hydroxy-m-tolyl)propionate] in the same amount as in the first functional layer in Example 1.

Table 10

| | Photochromic Compound (part by mass) | First Compound (part by mass) | Polarization Functional Layer | Polarization Degree (%) | Physical Properties before coloration | | | | Photochromic Properties | | | | |
|---|---|---|---|---|---|---|---|---|---|---|---|---|---|
| | | | | | Initial Luminous Transmittance (%) | Transmittance at 550 nm (%) | Minimum Transmittance * (%) | Color | Luminous Transmittance during coloration (%) | Transmittance at 550 nm under photoirradiation (%) | Minimum Transmittance * (%) under photoirradiation | Fading Half-life (sec) | Color |
| Example 18 | PC1/PC2/PC3 (0.32/0.21/1.3) | Dye 1 (0.16) | PS1 | 94.4 | 31.6 | 29.2 | 20.2 | gray | 10.7 | 8.9 | 5.9 | 41 | gray |
| Example 27 | PC1/PC2/PC3 (0.32/0.21/1.3) | Dye3 (0.11) | PS1 | 94.4 | 35.9 | 36.2 | 19.0 | gray | 11.5 | 9.3 | 6.1 | 41 | gray |
| Example 28 | PC4 (3.7) | Dye3 (0.11) | PS1 | 94.4 | 34.9 | 35.5 | 18.4 | gray | 9.0 | 8.3 | 4.5 | 32 | brown |
| Example 29 | PC5 (2.9) | Dye3 (0.11) | PS1 | 94.4 | 30.8 | 27.3 | 20.4 | brown | 8.8 | 8.8 | 5.4 | 28 | gray |

| | Before coloration | | During coloration | Visibility indoors (number of subjects) | Anti-glare Properties outdoors (number of subjects) | Contrast outdoors (number of subjects) | Contrast Evaluation R1/R2 |
|---|---|---|---|---|---|---|---|
| | Color Unevenness | Initial Coloration | Color Unevenness | | | | |
| Example 18 | no | 6 | no | 6 | 10 | 8 | 1.6 |
| Example 27 | no | 6 | no | 6 | 10 | 8 | 1.5 |
| Example 28 | no | 5 | no | 5 | 10 | 7 | 1.5 |
| Example 29 | no | 4 | no | 4 | 10 | 6 | 1.4 |

* Minimum Transmittance: at wavelength of 550 nm to 600 nm.

Table 11

| | Layer Configuration of Optical Article | | | | | | | | Photochromic Performance Persistence (%) | Contrast Evaluation R1/R2 | Contrast Durability |
|---|---|---|---|---|---|---|---|---|---|---|---|
| Example 18 | First Optical Sheet 300 μm | Backup Adhesive Layer 10 μm | First Functional Layer 40 μm | Polarization Functional Layer 27 μm | Second Functional Layer using Dye 1 40 μm | Backup Adhesive Layer 10 μm | Second Optical Sheet 300 μm | Lens Substrate | 75 | 1.6 | 94 |
| Example 27 | First Optical Sheet 300 μm | Backup Adhesive Layer 10 μm | First Functional Layer 40 μm | Polarization Functional Layer 27 μm | Second Functional Layer using Dye 3 40 μm | Backup Adhesive Layer 10 μm | Second Optical Sheet 300 μm | Lens Substrate | 75 | 1.5 | 94 |
| Example 28 | First Optical Sheet 300 μm | Backup Adhesive Layer 10 μm | First Functional Layer 40 μm | Polarization Functional Layer 27 μm | Second Functional Layer using Dye 3 40 μm | Backup Adhesive Layer 10 μm | Second Optical Sheet 300 μm | Lens Substrate | 89 | 1.5 | 95 |
| Example 29 | First Optical Sheet 300 μm | Backup Adhesive Layer 10 μm | First Functional Layer 40 μm | Polarization Functional Layer 27 μm | Second Functional Layer using Dye 3 40 μm | Backup Adhesive Layer 10 μm | Second Optical Sheet 300 μm | Lens Substrate | 90 | 1.4 | 95 |

Example 30

The optical article obtained in Example 5 was subjected to sublimation dyeing treatment according to the following method.

As a sublimation ink, used was a commercially-available water-base disperse dye having a gray color tone. The dye was printed on a commercially-available A4-size sheet (high-quality PPC (high-quality plain paper copier) sheet) in a circular shape somewhat larger than the cured product. The sublimation ink was printed to give a gradation pattern.

The print and the cured product were arranged in a dyeing apparatus in such a manner that the printed face of the print could face the concave face of the cured product. At that time, the distance between the printed face and the concave face of the cured product was 15 mm.

Next, a vacuum pump was switched on, then the pressure inside the dyeing apparatus was lowered down to 60 Pa, and the back face of the print was heated with a halogen lamp so that the surface temperature thereof could be about 200°C. Accordingly, the dye was sublimed and adhered to the concave face of the cured product.

Subsequently, the pressure inside the sublimation dyeing apparatus was restored to normal pressure, and then the cured product with the dye adhering to the concave face thereof was taken out. Thus taken out, the cured product was heated in an oven at 130°C for 2 hours to fix the dye. Accordingly, there was obtained an optical article having a gradation color pattern. The resultant photochromic optical article was evaluated in the same manner as in Example 1. The results are shown in Table 12.

Example 31

The optical article obtained in Example 27 was subjected to gradation-pattern dyeing according to the same method as in Example 30 to give an optical article dyed to have a gray gradation pattern. The resultant photochromic optical article was evaluated in the same manner as in Example 1. The results are shown in Table 12.

Example 32

The optical article obtained in Example 28 was subjected to gradation-pattern dyeing according to the same method as in Example 30 to give an optical article dyed to have a gray gradation pattern. The resultant photochromic optical article was evaluated in the same manner as in Example 1. The results are shown in Table 12.

Example 33

The optical article obtained in Example 5 was dyed by a dipping method. As the dyeing solution, used was an aqueous solution containing a gray dye by BPI Corporation. In dyeing, first, the optical article was dipped in the dyeing solution heated up to 90°C while periodically moved up and down in such a manner that the lowermost position of the optical article could be gradually moved up. After thus dipped, the optical article was taken out from the dyeing solution, and washed with tap water and then with distilled water. Accordingly, there was obtained an optical article having a gray gradation pattern. The dipping time of the optical article in the dyeing solution was so controlled that the luminous transmittance before coloration of the optical article could be 52.0%. The resultant photochromic optical article was evaluated in the same manner as in Example 1. The results are shown in Table 12.

Example 34

The optical article obtained in Example 27 was dyed by a dipping method. As the dyeing solution, used was an aqueous solution containing a gray dye by BPI Corporation. In dyeing, first, the optical article was dipped in the dyeing solution heated up to 90°C while periodically moved up and down in such a manner that the lowermost position of the optical article could be gradually moved up. After thus dipped, the optical article was taken out from the dyeing solution, and washed with tap water and then with distilled water. Accordingly, there was obtained an optical article having a gray gradation pattern. The dipping time of the optical article in the dyeing solution was so controlled that the luminous transmittance before coloration of the optical article could be 31.0%. The resultant photochromic optical article was evaluated in the same manner as in Example 1. The results are shown in Table 12.

Table 12

| | Photochromic Compound (part by mass) | First Compound (part by mass) | Polarization Functional Layer | Polarization Degree (%) | Dyeing Method | Physical Properties before coloration: Initial Luminous Transmittance (%) | Physical Properties before coloration: Transmittance at 550 nm (%) | Physical Properties before coloration: Minimum Transmittance* (%) |
|---|---|---|---|---|---|---|---|---|
| Example 30 | PC1/PC2/PC3 (0.53/0.35/2.2) | Dye3 (0.074) | - | - | sublimation dyeing (gradation) | 60.5 | 45.5 | 23.4 |
| Example 31 | PC1/PC2/PC3 (0.32/0.21/1.3) | Dye3 (0.11) | PS1 | 94.4 | sublimation dyeing (gradation) | 31.0 | 32.8 | 15.2 |
| Example 32 | PC4 (3.7) | Dye3 (0.11) | PS1 | 94.4 | sublimation dyeing (gradation) | 30.5 | 32.2 | 14.5 |
| Example 33 | PC1/PC2/PC3 (0.53/0.35/2.2) | Dye3 (0.074) | - | - | dip dyeing (gradation) | 52.0 | 42.0 | 20.1 |
| Example 34 | PC1/PC2/PC3 (0.32/0.21/1.3) | Dye3 (0.11) | PS1 | 94.4 | dip dyeing (gradation) | 31.0 | 32.6 | 15.0 |

| | Photochromic Properties: Luminous Transmittance during coloration (%) | Photochromic Properties: Transmittance at 550 nm under photoirradiation (%) | Photochromic Properties: Minimum Transmittance* (%) under photoirradiation | Photochromic Properties: Fading Half-life (sec) | During coloration: Color unevenness | Visibility indoors (number of subjects) | Anti-glare Properties outdoors (number of subjects) | Contrast outdoors (number of subjects) | Contrast Evaluation R1/R2 |
|---|---|---|---|---|---|---|---|---|---|
| Example 30 | 13.1 | 11.4 | 7.0 | 32 | no | 6 | 10 | 8 | 1.1 |
| Example 31 | 8.3 | 8.2 | 5.0 | 32 | no | 5 | 10 | 7 | 1.3 |
| Example 32 | 8.1 | 7.5 | 3.2 | 32 | no | 4 | 10 | 7 | 1.3 |
| Example 33 | 8.7 | 10.3 | 5.9 | 31 | no | 6 | 10 | 8 | 1.1 |

(continued)

| | Photochromic Properties | | | | During coloration | Visibility indoors (number of subjects) | Anti-glare Properties outdoors (number of subjects) | Contrast outdoors (number of subjects) | Contrast Evaluation R1/R2 |
|---|---|---|---|---|---|---|---|---|---|
| | Luminous Transmittance during coloration (%) | Transmittance at 550 nm under photoirradiation (%) | Minimum Transmittance* (%) under photoirradiation | Fading Half-life (sec) | Color unevenness | | | | |
| Example 34 | 8.1 | 7.9 | 4.9 | 31 | no | 5 | 10 | 7 | 1.3 |

* Minimum Transmittance: at wavelength of 550 nm to 600 nm.

Example 35

A photochromic optical article was produced in the same method as in Example 5, except that as the photochromic compound in Example 5, 6.2 parts by mass of a photochromic compound (PC1/PC2/PC3 = 1.1 parts by mass/0.7 parts by mass/4.5 parts by mass) was used. The properties of the resultant photochromic optical article (binder-method product) were evaluated in the same manner as in Example 1. The results are shown in Tables 13 and 14. The optical article contains the same amount of the antioxidant (hindered phenol-type antioxidant), ethylenebis(oxyethylene)bis[3-(5-tert-butyl-4-hydroxy-m-tolyl)propionate] as in the first functional layer in Example 1.

Table 13

| | Photochromic Compound (part by mass) | First Compound (part by mass) | Physical Properties before coloration | | | Photochromic Properties | | | |
|---|---|---|---|---|---|---|---|---|---|
| | | | Initial Luminous Transmittance (%) | Transmittance at 550 nm (%) | Minimum Transmittance* (%) | Luminous Transmittance during coloration (%) | Transmittance at 550 nm under photoirradiation (%) | Minimum Transmittance* (%) under photoirradiation | Fading Half-life (sec) |
| Example 5 | PC1/PC2/PC3 (0.53/0.35/2.2) | Dye3 (0.074) | 72.5 | 72.1 | 43.4 | 17.1 | 13.7 | 8.3 | 42 |
| Example 35 | PC1/PC2/PC3 (1.1/0.71/4.5) | Dye3 (0.074) | 71.0 | 71.5 | 43.0 | 12.4 | 9.0 | 5.8 | 43 |

* Minimum Transmittance: at wavelength of 550 nm to 600 nm.

| | Before coloration | | During coloration | Visibility indoors (number of panelists) | Anti-glare Properties outdoors (number of panelists) | Contrast outdoors (number of panelists) | Contrast Evaluation R1/R2 |
|---|---|---|---|---|---|---|---|
| | Color unevenness | Initial Coloration | Color Unevenness | | | | |
| Example 5 | no | 8 | no | 9 | 7 | 9 | 1.2 |
| Example 35 | no | 6 | no | 10 | 8 | 9 | 1.3 |

Table 14

| | Layer Configuration of Optical Article | | | | | | | Photochromic Performance Persistence (%) | Contrast Performance R1/R2 | Contrast Durability |
|---|---|---|---|---|---|---|---|---|---|---|
| Example 5 | First Optical Sheet | Backup Adhesive Layer | First Functional Layer serving also as second functional layer using Dye 3 | Backup Adhesive Layer | Second Optical Sheet | Lens Substrate | - | 60 | 1.1 | 94 |
| Example 35 | First Optical Sheet | Backup Adhesive Layer | First Functional Layer serving also as second functional layer using Dye 3 | Backup Adhesive Layer | Second Optical Sheet | Lens Substrate | - | 70 | 1.2 | 96 |

Reference Signs List

1 Optical Sheet
1' Optical Sheet
2 Backup Adhesive Layer
2' Backup Adhesive Layer
3 First Functional Layer (A) (this may also serve as the second functional layer (C))
4 Polarization Functional Layer (D)
5 Second Functional Layer (C) (this may be formed of a backup adhesive layer)
6 Photochromic Laminate
7 Lens Substrate (B)
8 Photochromic Optical Article

## Claims

1. An optical article containing a photochromic compound, and a first compound having an absorption peak in a wavelength range of 550 to 600 nm,

   having a laminate structure in which (A) a first functional layer containing at least a photochromic compound and (B) a lens substrate independently exist,
   having a luminous transmittance of 30% or more in the state with no photochromic compound coloration,
   having a luminous transmittance of 25% or less in the state with photochromic compound coloration, and
   having a minimum transmittance of 0.1 to 20% in a wavelength range of 550 to 600 nm, in a state with photochromic compound coloration.

2. The optical article according to claim 1, wherein the first functional layer (A) contains the first compound.

3. The optical article according to claim 1 or 2, wherein:
   the first functional layer (A) contains at least one stabilizer selected from the group consisting of a UV absorbent, a hindered amine-type light stabilizer, and a singlet oxygen quencher.

4. The optical article according to any one of claims 1 to 3, wherein the first compound contains a copper atom-having tetraazaporphyrin compound.

5. The optical article according to any one of claims 1 to 4, wherein the first functional layer (A) contains an antioxidant.

6. The optical article according to any one of claims 1 to 5, wherein the photochromic compound contains:

   a compound which, when a toluene solution thereof is prepared as a measurement sample so as to have a controlled concentration of 1.0 mmol/l at 23°C,
   has an absorbance at 420 nm of less than 0.100, and
   has an absorbance at 430 nm of less than 0.015.

7. The optical article according to any one of claims 1 to 6, wherein the thickness of the first functional layer (A) is 10 to 1000 μm.

8. The optical article according to any one of claims 1 to 7, further having a polarization functional layer (D) having a polarization function.

9. The optical article according to claim 8, wherein the photochromic compound contains:

   a compound which, when a toluene solution thereof is prepared as a measurement sample so as to have a controlled concentration of 1.0 mmol/l at 23°C,
   has an absorbance at 420 nm of 0.100 or more, and
   has an absorbance at 430 nm of 0.015 or more.

**10.** The optical article according to claim 8 or 9, containing a dye.

**11.** The optical article according to claim 1, independently having a second functional layer (C) that contains the first compound.

**12.** The optical article according to claim 11, having any other layer between the first functional layer (A) and the second functional layer (C).

**13.** The optical article according to any one of claims 1 to 12, having a gradation region where the color changes gradually.

**14.** The optical article according to any one of claims 1 to 13, which:

when a blue film with L* of 69, a* of -42, and b* of -34 and
a yellow film with L* of 81, a* of 0, and b* of 85,
relating to the hue in the CIE1976 (L*, a*, b*) color space are photographed with a hyperspectral camera through the optical article in which the photochromic compound is colored,
and when the average reflectance at a wavelength of 420 to 519 nm in photographing the blue film is referred to as R1, and the average reflectance at a wavelength of 580 to 595 nm in photographing the yellow film is referred to as R2,
the ratio of R1 to R2 (R1/R2) is 0.9 or more and 2.0 or less.

**15.** A spectacle lens formed of the optical article of any one of claims 1 to 14.

**16.** Spectacles with the spectacle lens of claim 15.

Fig. 1

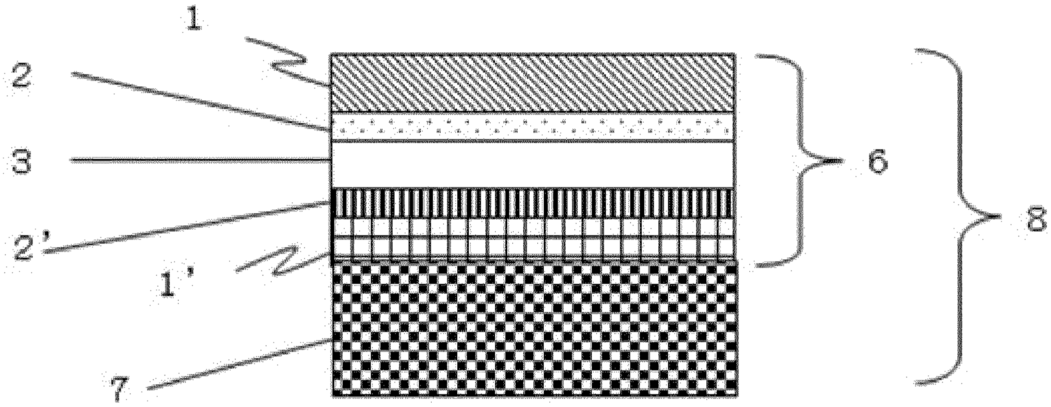


Fig. 2

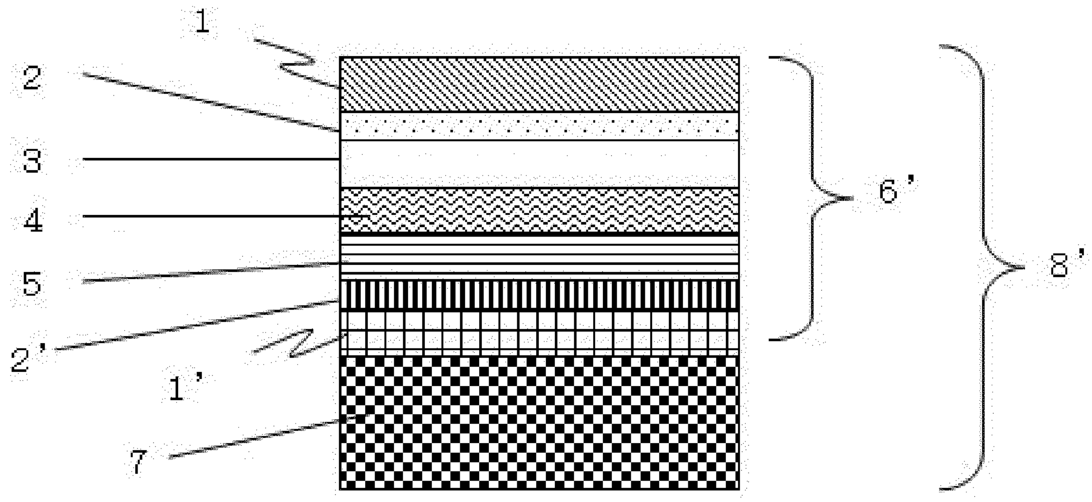

**INTERNATIONAL SEARCH REPORT**

International application No.
**PCT/JP2022/016016**

**A. CLASSIFICATION OF SUBJECT MATTER**

***G02B 5/23***(2006.01)i; ***C09K 9/02***(2006.01)i; ***G02B 5/22***(2006.01)i; ***G02B 5/30***(2006.01)i; ***G02C 7/10***(2006.01)i; ***G02C 7/12***(2006.01)i
FI: G02B5/23; G02B5/30; G02C7/10; G02C7/12; G02B5/22; C09K9/02 B

According to International Patent Classification (IPC) or to both national classification and IPC

**B. FIELDS SEARCHED**

Minimum documentation searched (classification system followed by classification symbols)

G02B5/23; C09K9/02; G02B5/22; G02B5/30; G02C7/10; G02C7/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/062385 A1 (MITSUI CHEMICALS INC.) 05 April 2018 (2018-04-05) paragraphs [0004], [0023]-[0025], [0189], [0198], [0202], [0213], [0223], fig. 1 | 1-16 |
| Y | JP 2018-97173 A (TOKUYAMA CORP.) 21 June 2018 (2018-06-21) paragraphs [0003]-[0005], [0014], [0078], [0081], [0120]-[0123], [0140], [0143], [0144], [0161], [0162] | 1-16 |
| Y | JP 2013-114162 A (HOYA CORP.) 10 June 2013 (2013-06-10) paragraphs [0005], [0025] | 13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/016016**

| Patent document cited in search report | Publication date (day/month/year) | Patent family member(s) | Publication date (day/month/year) |
|---|---|---|---|
| WO 2018/062385 A1 | 05 April 2018 | US 2019/0211258 A1<br>paragraphs [0005], [0032], [0033], [0483], [0494], [0501], [0531], [0539]<br>EP 3521907 A1<br>KR 10-2019-0035902 A<br>CN 109716216 A | |
| JP 2018-97173 A | 21 June 2018 | (Family: none) | |
| JP 2013-114162 A | 10 June 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7166357 B
- JP 4672768 B
- JP 5914674 B
- JP 2019164271 A
- JP 2018097173 A
- WO 2018062385 A1
- JP 2028154 A
- JP 62288830 A
- WO 9422850 A1
- WO 9614596 A1
- JP 5194616 A
- JP 5195446 A
- JP 2003105218 A
- JP 2008134618 A
- JP 2013061653 A
- JP 2015180942 A
- WO 2012020570 A1
- JP 5626081 B
- JP 5619472 B
- JP 5778109 B
- JP 2005099842 A
- JP 3072978 A
- JP 2004036032 A